# EUROPEAN PATENT SPECIFICATION

(11) **EP 4 143 990 B1**
(45) Date of publication and mention of the grant of the patent: **24.09.2025**
(21) Application number: 20933026.5
(22) Date of filing: 24.12.2020
(51) Int. Cl.: H04B 7/185, H04W 28/02, H04W 40/24

(54) **EDGE COMPUTING IN SATELLITE CONNECTIVITY ENVIRONMENTS**
EDGE-COMPUTING IN SATELLITENKONNEKTIVITÄTSUMGEBUNGEN
INFORMATIQUE À LA FRONTIÈRE DANS DES ENVIRONNEMENTS DE CONNECTIVITÉ PAR SATELLITE

(30) Priority: 01.05.2020 US 202063018844 P; 13.08.2020 US 202063065302 P; 11.09.2020 US 202063077320 P; 22.10.2020 US 202063104344 P; 11.12.2020 US 202063124520 P; 22.12.2020 US 202063129355 P
(43) Date of publication of application: 08.03.2023
(73) Proprietor: INTEL Corporation, Santa Clara, CA 95054 (US)
(72) Inventor: GUIM BERNAT, Francesc, 08036 Barcelona (ES); DOSHI, Kshitij Arun, Tempe, Arizona 85282 (US); SMITH, Ned, M., Beaverton, Oregon 97006 (US); WOUHAYBI, Rita, H., Portland, Oregon 97229 (US); CARRANZA, Marcos, E., Portland, Oregon 97229 (US); MARTINEZ-SPESSOT, Cesar, Hillsboro, Oregon 97123 (US); METSCH, Thijs, 50321 Bruehl (DE); SRIKANTESWARA, Srikathyayani, Portland, Oregon 97229 (US); VERRALL, Timothy, Pleasant Hill, California 94523 (US); ZHANG, Yi, Portland, Oregon 97229 (US); MA, Weiqiang, Chandler, Arizona 85248 (US); KWATRA, Atul, Gilbert, Arizona 85298 (US); PALERMO, Stephen, T., Chandler, Arizona 85226 (US); CHANDWANI, Neelam, Portland, Oregon 97229 (US)
(74) Representative: Maiwald GmbH
(86) International application number: PCT/US2020/067007
(87) International publication number: WO 2021/221736

(56) References cited:
- EP-B1- 2 871 895
- WO-A1-2019/118381
- CN-B- 102 404 041
- US-A- 5 425 101
- US-A1- 2013 272 272
- US-A1- 2015 003 253
- US-A1- 2016 183 139
- US-A1- 2018 176 656
- US-A1- 2019 068 742
- US-A1- 2020 007 227
- US-A1- 2020 059 294
- KODHELI OLTJON; LAGUNAS EVA; MATURO NICOLA; SHARMA SHREE KRISHNA; SHANKAR BHAVANI; MONTOYA JESUS FABIAN MENDOZA; DUNCAN JUAN CARLO: "Satellite Communications in the New Space Era: A Survey and Future Challenges", IEEE COMMUNICATIONS SURVEYS & TUTORIALS, IEEE, USA, vol. 23, no. 1, 1 October 2020 (2020-10-01), USA , pages 70 - 109, XP011839564, DOI: 10.1109/COMST.2020.3028247

## Description

### TECHNICAL FIELD

Embodiments described herein generally relate to data processing, network communication scenarios, and terrestrial and non-terrestrial network infrastructure involved with satellite-based networking, such as with the use of low earth orbit satellite deployments.

### BACKGROUND

EP 2 871 895 A1 describes measures for satellite link channel virtualization which comprise setting assignment of assignable physical resources to said at least one virtual channel, and transmitting configuration information indicative of said assignment. CN 102 404 041 B describes a virtual channel multiplexing scheduling algorithm based on a satellite network. US 5 425 101 A describes a decoder in a multiservice communication system which receives a plurality of services as data streams, multiplexed in sequence of frames. Each service defines a virtual channel.

### SUMMARY

The invention provides a method, a device, and a machine-readable storage medium as defined by the appended claims.

### BRIEF DESCRIPTION OF THE DRAWINGS

In the drawings, which are not necessarily drawn to scale, like numerals may describe similar components in different views. Like numerals having different letter suffixes may represent different instances of similar components. Some embodiments are illustrated by way of example, and not limitation, in the figures of the accompanying drawings in which:
FIG. 1 illustrates network connectivity in non-terrestrial (satellite) and terrestrial (e.g., mobile cellular network) settings, according to an example;
FIG. 2 illustrates terrestrial and non-terrestrial edge connectivity architectures, according to an example;
FIG. 3 illustrates multiple types of satellite communication networks, according to an example;
FIGS. 4A and 4B illustrates multiple types of satellite communication processing architectures, according to an example;
FIG. 5 illustrates terrestrial communication and architecture details in a geosynchronous satellite communication network, according to an example;
FIGS. 6A and 6B illustrate terrestrial communication and architecture details in a low earth orbit (LEO) satellite communication network, according to an example;
FIGS. 7A and 7B illustrate a network connectivity ecosystem implementing a LEO satellite communication network, according to an example;
FIG. 8 illustrates an overview of terrestrial-based, LEO satellite-enabled edge processing, according to an example;
FIG. 9 illustrates a scenario of geographic satellite connectivity from LEO satellite communication networks, according to an example;
FIGS. 10A, 10B, and 10C illustrate terrestrial-based, LEO satellite-enabled edge processing arrangements, according to an example;
FIGS. 11A, 11B, 11C, and 11D depict various arrangements of radio access network processing via a satellite communication network, according to an example;
FIG. 12 illustrates a flowchart of a method of obtaining satellite vehicle positions, according to an example;
FIG. 13 illustrates an edge computing network platform which is extended via satellite communications, according to an example;
FIG. 14A and 14B illustrates an appliance configuration of a connector module adapted for use with satellite communications, according to an example;
FIG. 15 illustrates a flowchart of a method for using a satellite connector for coordination with edge computing operations, according to an example;
FIG. 16 illustrates a further architecture of a connector module adapted for use with satellite communications, according to an example;
FIG. 17 illustrates a further architecture of a connector module adapted for use with satellite communications, according to an example;
FIG. 18 illustrates a flowchart of a method for using a satellite connector for coordination with edge computing operations, according to an example;
FIG. 19 illustrates a further architecture of a connector module adapted for use with storage operations, according to an example;
FIGS. 20A and 20B illustrate a network platform which is extended via satellite communications for content and geofencing operations, according to an example;
FIG. 21 illustrates an appliance configuration for satellite communications which is extended via satellite communications for content and geofencing operations, according to an example;
FIG. 22 illustrates a flowchart of a method for using a satellite connector for satellite communications using geofencing operations, according to an example;
FIG. 23 illustrates a system for coordination of satellite roaming activity, according to an example;
FIG. 24 illustrates a configuration of a user edge context data structure for coordinating satellite roaming activity, according to an example;
FIG. 25 illustrates a flowchart of a method for using a user edge context for coordinating satellite roaming activity, according to an example;
FIG. 26 illustrates use of satellite communications in an internet-of-things (IoT) environment, according to an example;
FIG. 27 illustrates a flowchart of a method of collecting and processing data with an IoT and satellite network deployment, according to an example;
FIG. 28 illustrates an example satellite communication scenario involving a plan for ephemeral connected devices, according to an example;
FIG. 29 illustrates a flowchart of a method of coordinating satellite communications with ephemeral connected devices, according to an example;
FIG. 30 illustrates a satellite communication scenario involving consideration of data cost, according to an example;
FIG. 31 illustrates a satellite and ground edge processing framework adapted for data cost functions, according to an example;
FIG. 32 illustrates a flowchart of a method of service orchestration based on data cost, according to an example;
FIG. 33 illustrates a configuration of an information centric networking (ICN) network, according to an example;
FIG. 34 illustrates a configuration of an ICN network node, implementing named data networking (NDN) techniques, according to an example;
FIG. 35 illustrates an example deployment of ICN and NDN techniques among satellite connection nodes, according to an example;
FIG. 36 illustrates a satellite connection scenario for use of an NDN data handover, according to an example;
FIG. 37 illustrates a satellite connection operation flow for coordinating NDN data operations, according to an example;
FIG. 38 illustrates a flowchart of an method performed in a satellite connectivity system for handover of compute and data services to maintain service continuity, according to an example;
FIG. 39 illustrates a discovery and routing strategy performed in a satellite connectivity system, according to an example;
FIG. 40 illustrates flowchart of an example method performed in a satellite connectivity system to maintain service continuity of data services, according to an example;
FIGS. 41A and 41B illustrates an overview of terrestrial and satellite scenarios for packet processing, according to an example;
FIGS. 42 and 43 illustrate packet processing architectures used for edge computing, according to an example;
FIGS. 44 and 45 illustrate template-based network packet processing, according to an example;
FIG. 46 illustrates use of a command template with network processing, according to an example;
FIG. 47 illustrates a flowchart of an example packet processing method using command templates, according to an example;
FIG. 48 illustrates an overview of an edge cloud configuration for edge computing, according to an example;
FIG. 49 illustrates an overview of layers of distributed compute deployed among an edge computing system, according to an example;
FIG. 50 illustrates operational layers among endpoints, an edge cloud, and cloud computing environments;
FIG. 51 illustrates an example approach for networking and services in an edge computing system;
FIG. 52A illustrates an overview of example components deployed at a compute node system, according to an example;
FIG. 52B illustrates a further overview of example components within a computing device, according to an example; and
FIG. 53 illustrates a software distribution platform to distribute software instructions and derivatives, according to an example.

### OVERVIEW

The following disclosure addresses various aspects of connectivity and edge computing, relevant in a non-terrestrial network (e.g., low earth orbit (LEO), medium earth orbit (MEO) or intermediate circular orbit (ICO), or very low earth orbit (VLEO) satellite constellation) network. In various sets of examples, this is provided through new approaches to terrestrial- and satellite-enabled edge architectures, edge connectors for satellite architectures, quality of service management for satellite-based edges, satellite-based geofencing schemes, content caching architectures, Internet-of-Things (IoT) sensor and device architectures connected to satellite-based edge deployments, orchestration operations in satellite-based edge deployments, among other related improvements and designs.

One of the technical problems addressed herein includes the consideration of edge "Multi-Access" connectivity, involving the many permutations of network connectivity provided among satellites, ground wireless networks, and UEs (including for UEs which have direct satellite network access). For example, scenarios may involve coordination among different types of available satellite-UE connections, whether in the form of non-geostationary satellite systems (NGSO), medium orbit or intermediate circular orbit satellite systems, geostationary satellite systems (GEO), terrestrial networks (e.g., 4G/5G networks), and direct UE Access, considering propagation delays, frequency interference, exclusion zones, satellite beam landing rights, and capability of ground (or in-orbit) routing protocols, among other issues. Likewise, such scenarios also involve the consideration of multi-access satellite connectivity when performing discovery and routing, including how to route data in multi-access satellite links based on service level objectives (SLOs), security, regulations, and the like.

Another technical problem addressed herein includes coordination between edge compute capabilities offered at non-terrestrial (satellite vehicle) and terrestrial (base station, core network) locations. From a simple perspective, this may include a determination of whether compute operations should be performed, for example, on the ground, on-board a satellite, or at connected user equipment devices, at a base station, at a satellite-connected cloud or core network, or at remote locations. Compute operations could range from establishing the entire network routing paths among terrestrial and non-terrestrial network nodes (involving almost every node in the network infrastructure) to performing individual edge or node updates (that could involve just one node or satellite).

To perform this determination, a system may evaluate what type of operation is to be performed and where to perform the compute operations or to obtain data, considering intermittent or interrupted satellite connectivity, movement and variable beam footprints of individual satellite vehicles and the satellite constellation, satellite interference or exclusion areas, limited transmission throughput, latency, cost, legal or geographic restrictions, service level agreement (SLA) requirements, security, and other factors. As used herein, reference to an "exclusion zone" or "exclusion area" may include restrictions for satellite broadcasts or usage, such as defined in standards promulgated by Alliance for Telecommunications Industry Solutions (ATIS) or other standards bodies or jurisdictions.

A related technical problem addressed herein includes orchestration and quality of service for satellite connections and edge compute operations offered via such satellite connections. In particular, based on the latency, throughput capabilities and requirements, type of data, and cost considerations for satellite connections, services can be orchestrated and guaranteed for reliability, while applying different considerations and priorities applicable for cloud service providers (providing best-effort services) versus telecommunication companies/communication service providers (providing guaranteed services). The evaluation of such factors may include considerations of risks, use cases for an as-available service, use cases for satellite networks as a connectivity "bent pipe", conditions or restrictions on how and when can data be accessed and processed, different types of backhaul available via satellite data communications, and further aspects of taxes, privacy, and security occurring for multi-jurisdictional satellite data communications.

Another technical problem addressed herein is directed to adaptation of edge compute and data services in satellite connectivity environments. One aspect of this includes the implementation of software defined network (SDN) and virtual radio access network (RAN) concepts including terrestrial and non-terrestrial network nodes connected to orbiting satellite constellations. Another aspect is how to coordinate data processing with IoT architectures inclusive of sensors that monitor environmental telemetry within terrestrial boundaries (e.g., ship containers, drones) with intermittent connectivity (e.g., last known status, connections via drones in remote locations, etc.). Other aspects relating to content data networking (CDN), geofencing and geographic restrictions, service orchestration, connectivity and data handover, communication paths and routing, and security and privacy considerations, are also addressed in various use cases.

In various sets of examples, satellite connectivity and coordination is provided through new approaches to terrestrial and satellite enabled edge architectures, including the use of "edge connectors" and connection logic within a computing system. Such edge connectors are used to assemble and organize communication streams via a satellite network, and establish virtual channels to edge compute or remote service locations despite the intermittent and unpredictable nature of LEO satellite network connections.

In further examples, satellite connectivity and coordination is provided through quality of service and orchestration management operations in satellite-based or satellite-assisted edge computing deployments. Such management operations may consider the varying types of latency needed for network backhaul via a satellite network and the varying conditions of congestion and resource usage. These management operations may allow an effective merger of ground-based and satellite-based edge computing operations and all of the resource properties associated with a relevant network or computing service.

In further examples, connectivity and workload coordination is provided for satellite-based edge computing nodes and terrestrial-based edge computing nodes that provide content to end users (such as from a content delivery network (CDN)). This connectivity and workload coordination may use content caching architectures adapted for satellite communications, to decrease latency and increase efficiency of content retrieval and delivery. Such connectivity and workload coordination may also use satellite-based geofencing schemes in order to ensure compliance with content provider or geo-political regulations and requirements (often, defined on the basis of geographic areas).

In further examples, aspects of coordinating satellite connectivity and edge computing operations are provided through a handover system for compute and data services, providing the transition of service data and services within satellite vehicles. This handover system enables service continuity and coordination within a variety of satellite communication settings.

Additionally, in further examples, various aspects of discovery and routing are implemented among satellite and terrestrial links. With the use of name-based addressing in a named data network (NDN) environment, a satellite connectivity system may be configured to perform workload functions, retrieve data, and handoff from node to node. This satellite connectivity system may be configured to perform discovery as well as select the best node/path for performing the service (routing and forwarding).

### Overview of Satellite Connectivity

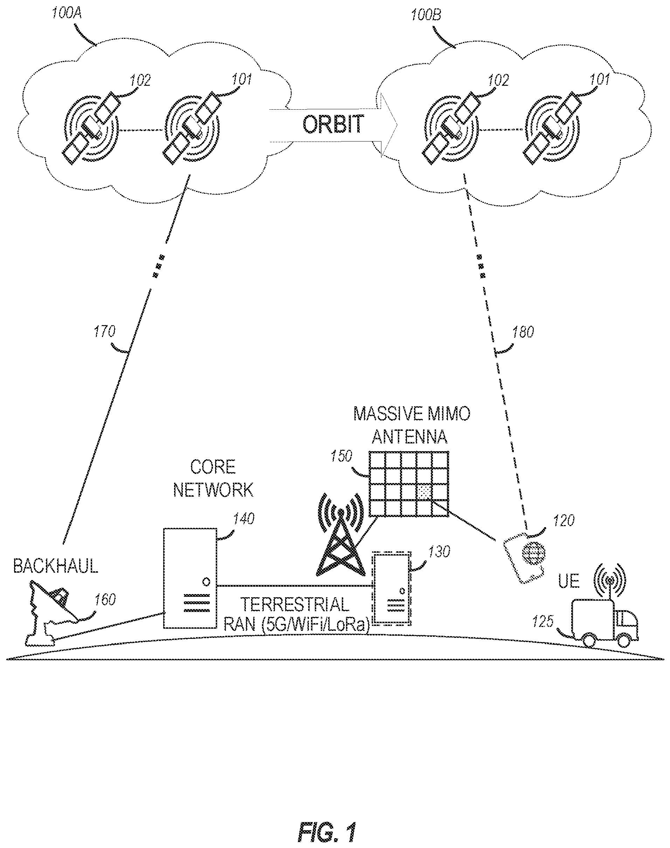

FIG. 1 illustrates network connectivity in non-terrestrial (satellite) and terrestrial (e.g., mobile cellular network) settings, according to an example. As shown, a satellite constellation 100 (the constellation depicted in FIG. 1 at orbital positions 100A and 100B) may include multiple satellite vehicles (SVs) 101, 102, which are connected to each other and to one or more terrestrial networks. The individual satellites in the constellation 100 (each, an SV) conduct an orbit around the earth, at an orbit speed that increases as the SV is closer to earth. LEO constellations are generally considered to include SVs that orbit at an altitude between 160 and 1000 km; at this altitude, each SV orbits the earth about every 90 to 120 minutes.

The constellation 100 includes individual SVs 101, 102 (and numerous other SVs not shown), and uses multiple SVs to provide communications coverage to a geographic area on earth. The constellation 100 may also coordinate with other satellite constellations (not shown), and with terrestrial-based networks, to selectively provide connectivity and services for individual devices (user equipment) or terrestrial network systems (network equipment).

In this example, the satellite constellation 100 is connected via a satellite link 170 to a backhaul network 160, which is in turn connected to a 5G core network 140. The 5G core network 140 is used to support 5G communication operations with the satellite network and at a terrestrial 5G radio access network (RAN) 130. For instance, the 5G core network 140 may be located in a remote location, and use the satellite constellation 100 as the exclusive mechanism to reach wide area networks and the Internet. In other scenarios, the 5G core network 140 may use the satellite constellation 100 as a redundant link to access the wide area networks and the Internet; in still other scenarios, the 5G core network 140 may use the satellite constellation 100 as an alternate path to access the wide area networks and the Internet (e.g., to communicate with networks on other continents).

FIG. 1 additionally depicts the use of the terrestrial 5G RAN 130, to provide radio connectivity to a user equipment (UE) such as user device 120 or vehicle 125 on-ground via a massive MIMO antenna 150. It will be understood that a variety of 5G and other network communication components and units are not depicted in FIG. 1 for purposes of simplicity. In some examples, each UE 120 or 125 also may have its own satellite connectivity hardware (e.g., receiver circuitry and antenna), to directly connect with the satellite constellation 100 via satellite link 180. Although a 5G network setting is depicted and discussed at length in the following sections, it will be apparent that other variations of 3GPP, O-RAN, and other network specifications may also be applicable.

Other permutations (not shown) may involve a direct connection of the 5G RAN 130 to the satellite constellation 100 (e.g., with the 5G core network 140 accessible over a satellite link); coordination with other wired (e.g., fiber), laser or optical, and wireless links and backhaul; multi-access radios among the UE, the RAN, and other UEs; and other permutations of terrestrial and non-terrestrial connectivity. Satellite network connections may be coordinated with 5G network equipment and user equipment based on satellite orbit coverage, available network services and equipment, cost and security, and geographic or geopolitical considerations, and the like. With these basic entities in mind, and with the changing compositions of mobile users and in-orbit satellites, the following techniques describe ways in which terrestrial and satellite networks can be extended for various edge computing scenarios.

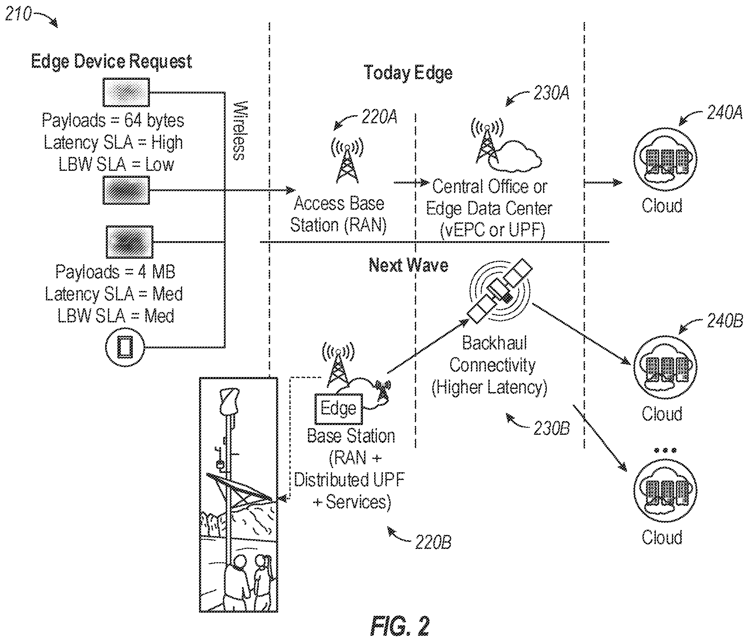

FIG. 2 illustrates terrestrial and non-terrestrial edge connectivity architectures, extended with the present techniques. Edge cloud computing has already been established as one of the next evolutions in the context of distributed computing and democratization of compute. Current edge deployments typically involve a set of devices 210 or users connected to access data points 220A (base stations, small cells, wireless or wired connectivity) that provide access to a set of services (hosted locally on the access points or other points of aggregations) via different type of network functions 230A (e.g., virtual Evolved Packet Cores (vEPCs), User Plane Function (UPF), virtual Broadband Network Gateway (vBNG), Control Plane and User Plane Separation (CUPS), Multiprotocol Label Switching (MPLS), Ethernet etc.).

However, one of the limitations that current edge compute architectures experience is that these architectures rely on the network infrastructure owned by communication service providers or neutral carriers. Therefore, if a particular provider wants to provide a new service into a particular location, it has to agree with operators in order to provide the required connectivity to the location where the service is hosted (service provider owned or provided by the communications service provider). On the other hand, in many cases, such as rural edge, or emerging economies, infrastructure is not yet established. In order to overcome this limitation, several companies (tier 1 and beyond) are looking at satellite connectivity in order to remove these limitations.

Multiple constellation of satellites that act as different organizations have a significant need to work together, share resources, and offer features such as geographic exclusion zones, quality of service (QoS), and low-latency content and service delivery. In this context, reliability, QoS, resource sharing, and restrictions such as exclusion zones provide significant inter-related concerns which are addressed by the following edge computing architectures and processing approaches.

In the architecture of FIG. 2, devices 210 are connected to a new type of edge location at a base station 220B, that implements access capabilities (such as Radio Antenna Network), network functions (e.g., vEPC with CUPS/UPF, etc.), and a first level of edge services (such as a content delivery network (CDN)). Such services conventionally required connectivity to the cloud 240A or the core of the network. Here, in a satellite connectivity setting, such content and compute operations may be coordinated at a base station 220B offering RAN and distributed functions and services. The base station 220B in turn may obtain content or offload processing to a cloud 240B or other service via backhaul connectivity 230B, via satellite communication (for example, in a scenario where a CDN located at the base station 220B needs to obtain uncached content). RAN functions can be split further into wireless and wired processing such as RAN-Distributed Unit (DU) L1/L2 processing and RAN-Centralized Unit (CU) L3 and higher processing.

One of the main challenges of any type of edge compute architecture is how to overcome the higher latencies that appear when services require connectivity to the backhaul of the network. This problem becomes more challenging when there are multiple type of backhaul connections (e.g., to different data centers in the cloud 240B) with different properties or levels of congestion. These and other types of complex scenarios are addressed among the following operations.

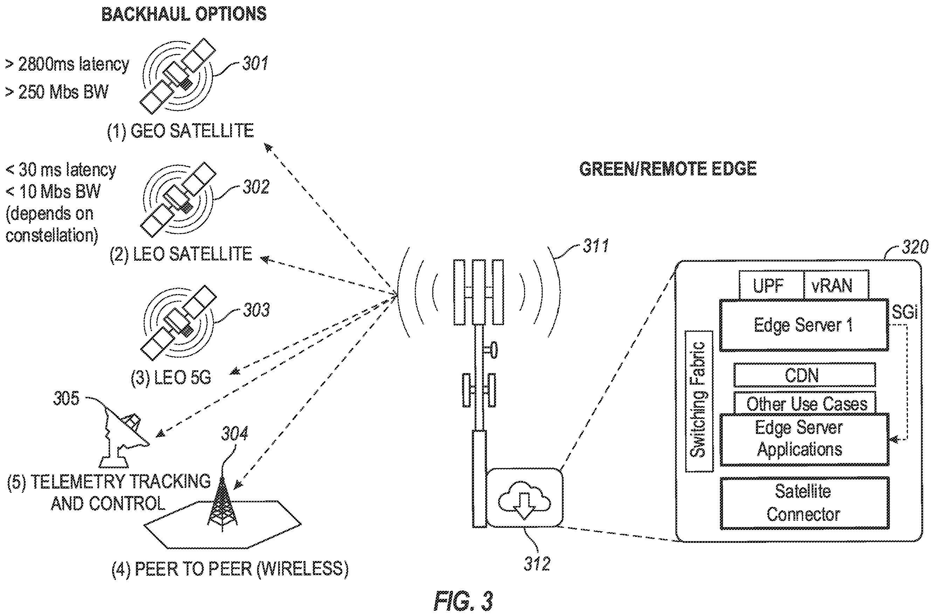

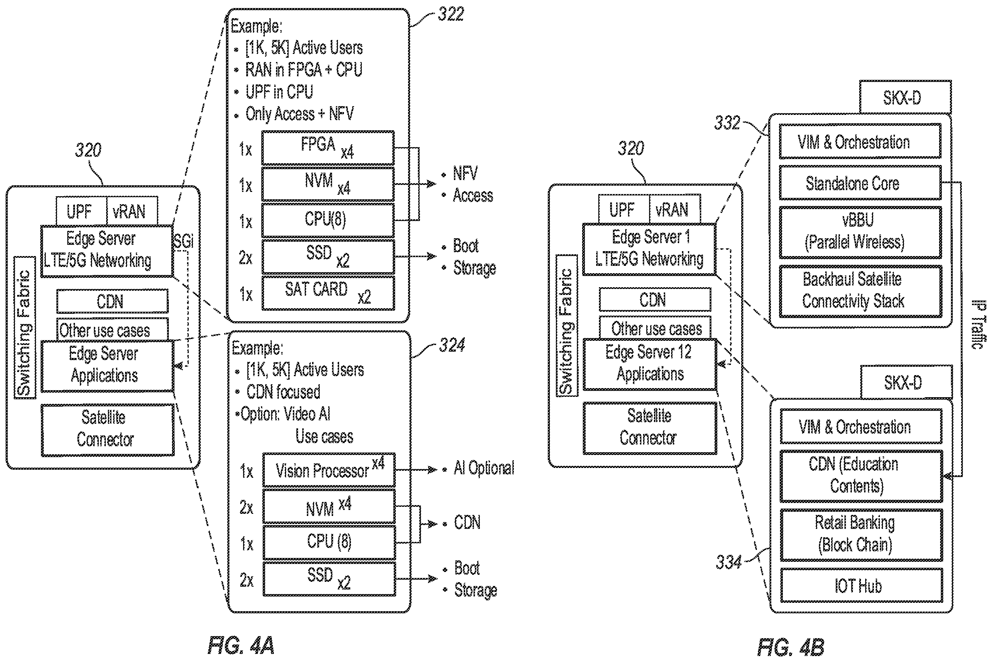

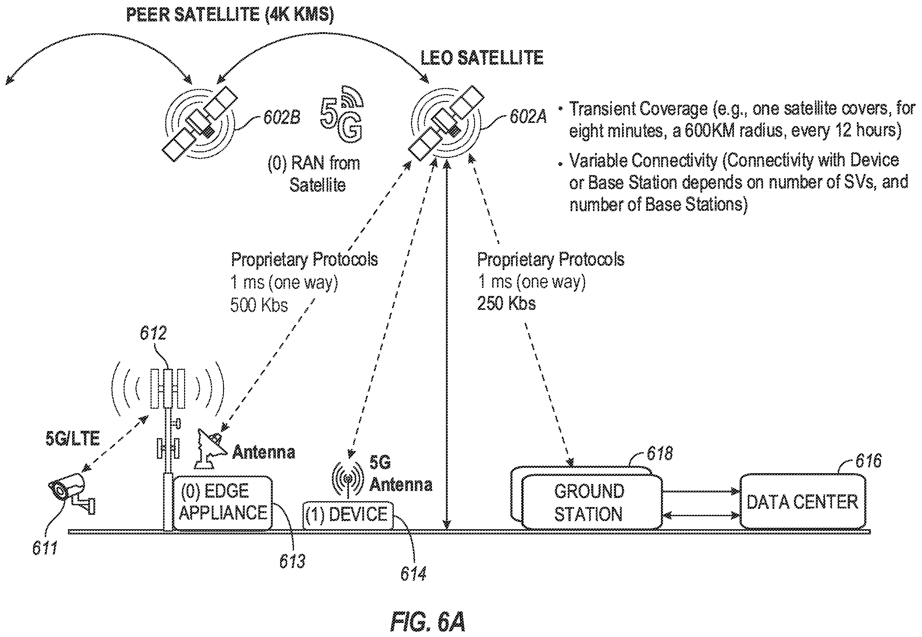

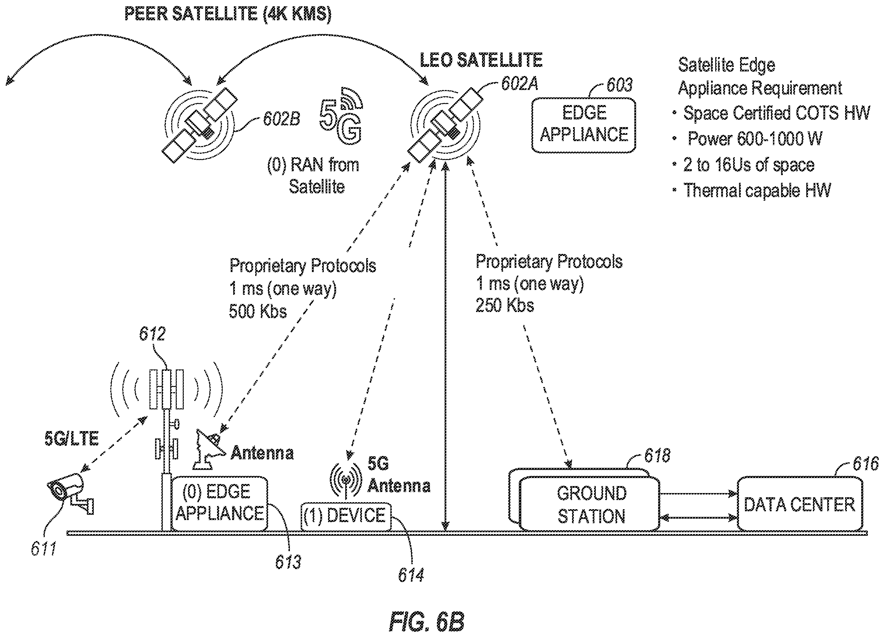

FIG. 3 illustrates multiple types of satellite communication networks. Here, multiple types of backhaul options are illustrated, including a geosynchronous (GEO) satellite network 301 (discussed below with reference to FIG. 4), a low earth orbit (LEO) satellite network 302 (discussed below with reference to FIG. 6A), and a low earth orbit 5G (LEO 5G) satellite network 303 (discussed below with reference to FIG. 6B). In each of these cases, a remote edge RAN access point 311, connected to a 5G core network, uses one or more of the satellite networks 301, 302, 303 to provide backhaul connectivity to a larger communications network (e.g., the Internet). The use of satellite backhaul may be in addition to other types of wired or wireless backhauls, including terrestrial backhaul to other 5G RAN wireless networks (e.g., peer-to-peer to wireless network 304), or control information communicated or obtained via telemetry tracking and control (TTAC) network 305. For example, the TTAC network 305 may be used for operation and maintenance traffic, using a separate link for system control backhaul (e.g., on a separate satellite communications band).

At the access point 311, various edge computing services 312 may be provided based on an edge computing architecture 320, such as that included within a server or compute node. This edge computing architecture 320 may include: UPF/vRAN functions; one or more Edge Servers configured to provide CDN, Services, Applications, and other use cases; and a Satellite Connector (hosted in the edge computing architecture 320). This architecture 320 may be connected by a high speed switching fabric. Additional details on the use of a Satellite Connector and coordination of edge compute and connectivity operations for satellite settings is discussed below.

FIGS. 4A and 4B illustrates further examples of the edge computing architecture 320. For example, an example edge server 322 capable of LTE/5G networking may involve various combinations of FPGAs, Non-volatile memory (NVM) storage, processors, GPUs and specialized processing units, storage, and satellite communications circuitry. An example edge server 324 capable of operating applications may include artificial intelligence (AI) compute circuitry, NVM storage, processors, and storage. Likewise, the services provided on such servers is depicted in FIG. 4B with a first service stack 332 (e.g., operating on edge server 322) and a second service stack 334 (e.g., operating on edge server 324). Various use cases (e.g., banking, IoT, CDN) are also illustrated, but the uses of the architectures are not so limited.

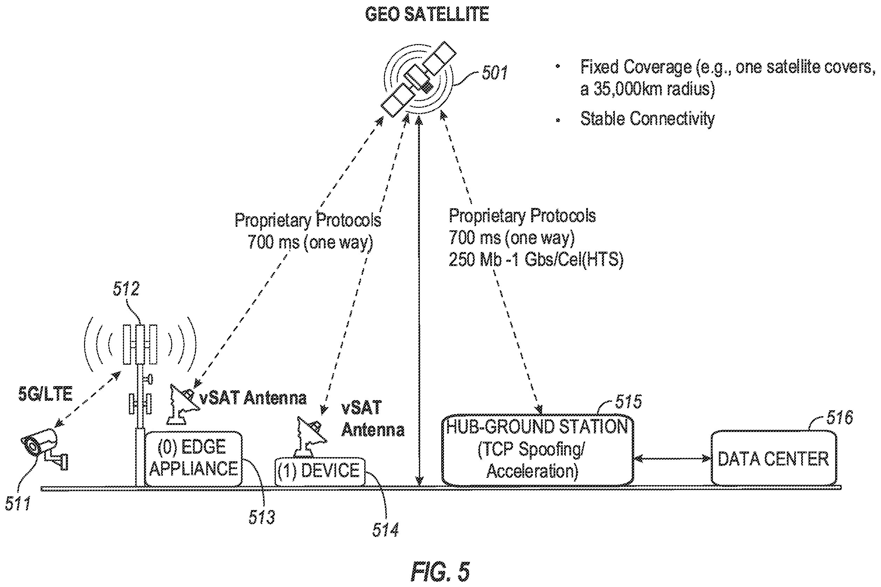

FIG. 5 illustrates terrestrial communication and architecture details in a geosynchronous satellite communication network. Here, an example IoT device 511 uses a 5G/LTE connection to a terrestrial RAN 512, which hosts an edge appliance 513 (e.g., for initial edge compute processing). The RAN 512 and edge appliance 513 are connected to a geosynchronous satellite 501, using a satellite link via a very-small-aperture terminal (vSAT) antenna. The geosynchronous satellite 501 may also provide direct connectivity to other satellite connected devices, such as a device 514. The use of existing 5G and geosynchronous satellite technology makes this solution readily deployable today.

In an example, 5G connectivity is provided in the geosynchronous satellite communication scenario using a distributed UPF (e.g., connected via the satellite) or a standalone core (e.g., located at a satellite-connected hub/ground station 515) or directly at the edge appliance 513. In any case, edge compute processing may be performed and distributed among the edge appliance 513, the ground station 515, or a connected data center 516.

FIGS. 6A and 6B illustrate terrestrial communication and architecture details in a low earth orbit satellite communication network, provided by SVs 602A, 602B in constellation 602. These drawings depict similar devices and edge systems as FIG. 5, with an IoT device 611, an edge appliance 613, and a device 614. However, the provision of a 5G RAN from SVs 602A, 602B, and the significantly reduced latency from low earth orbit vehicles, enables much more robust use cases, including the direct connection of devices (device 614) using 5G satellite antennas at the device 614, and communication between the edge appliance 613 and the satellite constellation 602 using proprietary protocols.

As an example, in some LEO settings, one 5G LEO satellite can cover a 500 KM radius for 8 minutes, every 12 hours. Connectivity latency to LEO satellites may be as small as one millisecond. Further, connectivity between the satellite constellation and the device 614 or the base station 612 depends on the number and capability of satellite ground stations. In this example, the satellite 601 communicates with a ground station 618 which may host edge computing processing capabilities. The ground station 618 in turn may be connected to a data center 616 for additional processing. With the low latency offered by 5G communications, data processing, compute, and storage may be located at any number of locations (at edge, in satellite, on ground, at core network, at low-latency data center).

FIG. 6B includes the addition of an edge appliance 603 located at the SV 602A. Here, some of the edge compute operations may be directly performed using hardware located at the SV, reducing the latency and transmission time that would have been otherwise needed to communicate with the ground station 618 or data center 616. Likewise, in these scenarios, edge compute may be implemented or coordinated among specialized processing circuitry (e.g., FPGAs) or general purpose processing circuitry (e.g., x86 CPUs) located at the satellite 601, the ground station 618, the devices 614 connected to the edge appliance 613, the edge appliance 613 itself, and combinations thereof.

Although not shown in FIGS. 6A to 6B, other types of orbit-based connectivity and edge computing may be involved with these architectures. These include connectivity and compute provided via balloons, drones, dirigibles, and similar types of non-terrestrial elements. Such systems encounter similar temporal limitations and connectivity challenges (like those encountered in a satellite orbit).

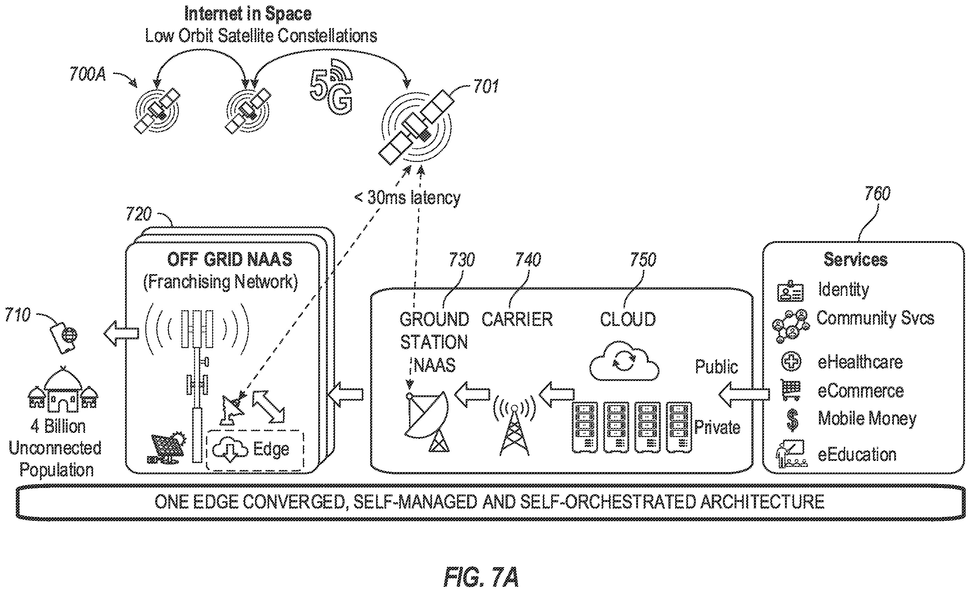

FIG. 7A illustrates a network connectivity ecosystem implementing a satellite communication network. Here, a satellite 701, part of satellite constellation 700A, provides coverage to an "off-grid" wireless network 720 (such as a geographically isolated network without wired backhaul). This wireless network 720 in turn provides coverage to individual user equipment 710. Via the satellite connection, a variety of other connections can be made to broader networks and services. These connections include connection to a carrier 740 or to a cloud service 750 via a satellite ground station 730. At the cloud service 750, a variety of public or private services 760 may be hosted. Additionally, with the deployment of edge computing architectures, these services can be moved much closer to the user equipment 710, based on coordination of operations at the network 720, the satellite constellation 700, the ground station 730, or the carrier 740.

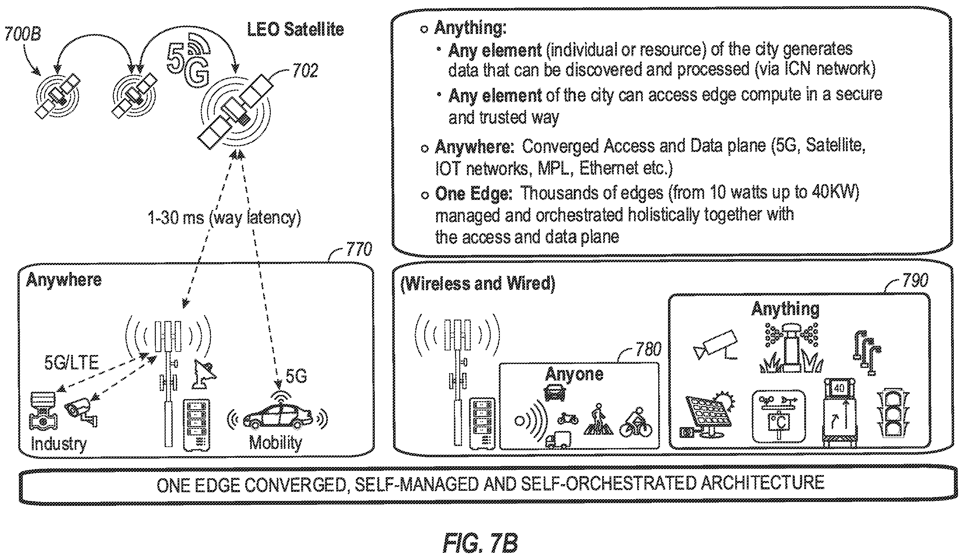

FIG. 7B further illustrates a network connectivity ecosystem, where satellite 702, part of satellite constellation 700B, provides high-speed connectivity (e.g., close to 1ms one-way latency) using 5G network communications. Such high-speed connectivity enables satellite connectivity at multiple locations 770, for multiple users 780, and multiple types of devices 790. Such configurations are particularly useful for the connection of industry IoT devices, mobility devices (such as robotaxis, autonomous vehicles), and the overall concept of offering connectivity for "anyone" and "anything".

### Satellite Network Coverage and Coverage Identification

One of the general challenges in satellite architectures is how and where to deploy compute and all the required changes in the overall architecture. The present approaches address many aspects on where the compute can be placed and how to combine and merge satellite-based technologies with edge computing in a unique way. Here, the goal is to embrace the potential of "anywhere" compute (whether from the device, to edge, to satellite to the ground station).

The placement and coordination of edge computing with satellites is made much more complex due to the fact that satellites are going to be orbiting in constellations. This leads to two significant challenges: first, depending on the altitude and on the density of a constellation, the time that an edge location is covered is going to vary. Similarly, latency and bandwidth may change over time. Second, satellite-containing compute nodes themselves are going to be in orbit and moving around. The use of an in-motion edge computing location, which is only accessible from a geographic location at different times, needs to be considered.

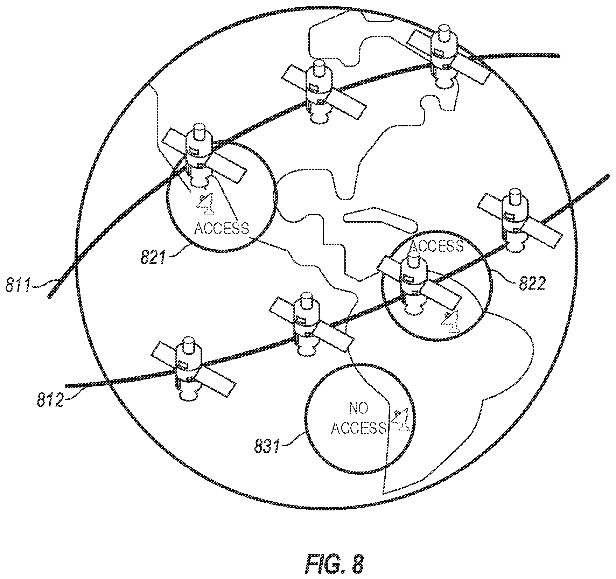

FIG. 8 illustrates an example, simplified scenario of geographic satellite connectivity from multiple LEO satellite communication networks, which depicts the movement of the relevant LEO SVs relative to geographic areas. Here, the orbits 811, 812 of respective satellite constellations operate to provide network coverage in limited geographic areas 821, 822. In contrast, there is no access provided in area 831. It will be understood that the geographic positions of relevant satellite coverage areas may play an important part in determining service characteristics, exclusion zones, and coordination of satellite-ground processing.

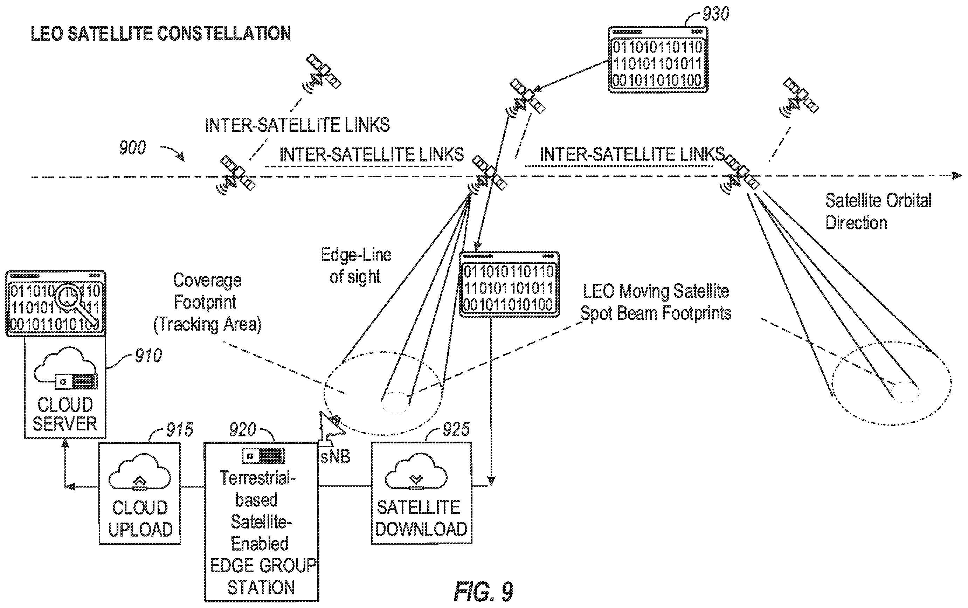

FIG. 9 illustrates an overview of terrestrial-based, satellite-enabled edge processing. As shown, a terrestrial-based, satellite enabled EDGE ground station (satellite nodeB, sNB) 920 obtains coverage from a satellite constellation 900, and downloads a data set 930. The constellation 900 may coordinate operations to handoff the download using inter-satellite links (such as in a scenario where the data set 930 is streamed, or cannot be fully downloaded before the satellite footprint moves).

The satellite download 925 is provided to the sNB 920 for processing, such as with a cloud upload 915 to a server 910 (e.g., a CDN located at or near the sNB 920). Accordingly, once downloaded to the sNB 920 (and uploaded to the server 910), the user devices located within the terrestrial coverage area (e.g., 5G coverage area) of the sNB 920 now may access the data from the server 910.

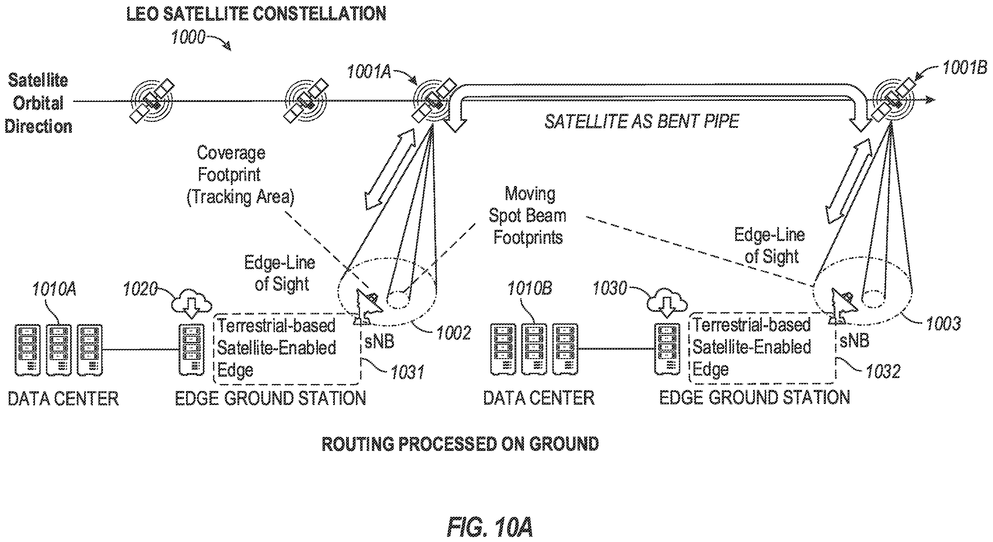

FIG. 10A illustrates a terrestrial-based, satellite-enabled edge processing arrangement, where routing is performed "on-ground" and the satellite is used as a "bent pipe" between edge processing locations. Here, the term "bent pipe" refers to the use of a satellite or satellite constellation as a connection relay, to simply communicate data from one terrestrial location to another terrestrial location. As shown in this figure, a satellite 1000 in a constellation has an orbital path, moving from position 1001A to 1001B, providing separate coverage areas 1002 and 1003 for connectivity at respective times.

Here, when a satellite-enabled edge computing node 1031 (sNB) is in the coverage area 1002, it obtains connectivity via the satellite 1000 (at position 1001A), to communicate with a wider area network. Additionally, this edge computing node sNB 1031 may be located at an edge ground station 1020 which is also in further communication with a data center 1010A, for performing computing operations at a terrestrial location.

Likewise, when a satellite-enabled edge computing node 1032 (sNB) is in the coverage area 1003, it obtains connectivity via the satellite 1000 (at position 1001B), to communicate with a wider area network. Again, computing operations (e.g., services, applications, etc.) are processed at a terrestrial location such as edge ground station 1030 and data center 1010B.

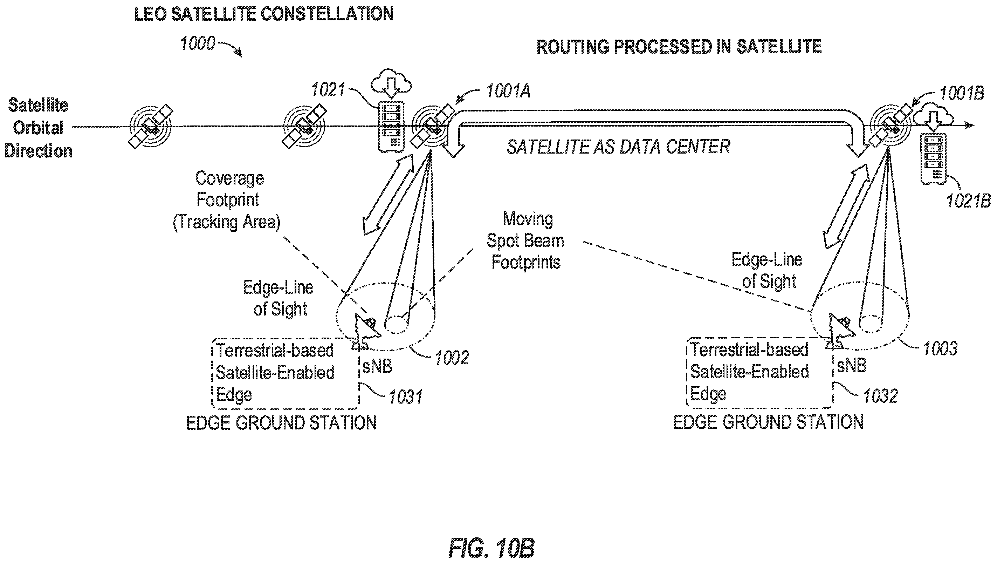

FIG. 10B illustrates another terrestrial-based, satellite-enabled edge processing arrangement. Similar to the arrangement depicted in FIG. 10A, this shows the satellite 1000 in a constellation along an orbital path, moving from position 1001A to 1001B, providing separate coverage areas 1002 and 1003 at respective times. However, in this example, the satellite is used as a data center, to perform edge computing operations (e.g., serve data, compute data, relay data, etc.).

Specifically, at the satellite vehicle, edge computing hardware 1021 is located to process computing or data requests received from the ground station sNBs 1031, 1032 in the coverage areas 1002, 1003. This may have the benefit of removing the communication latency involved with another location at the wide area network. However, due to processing and storage constraints, the amount of computation power may be limited at the satellite 1000 and thus some requests or operations may be moved to the ground stations 1031, 1032.

As will be understood, edge computing and edge network connectivity may include various aspects of RAN and software defined networking processing. Specifically, in many of these scenarios, wireless termination may be moved between ground and satellite, depending on available processing resources. Further, in these scenarios, URLCC (ultra-reliable low latency connections) processing may be performed on ground or in payload using packet processing approaches, including with the packet processing templates further discussed herein, and with and vRAN-DU (distributed unit) processing and acceleration.

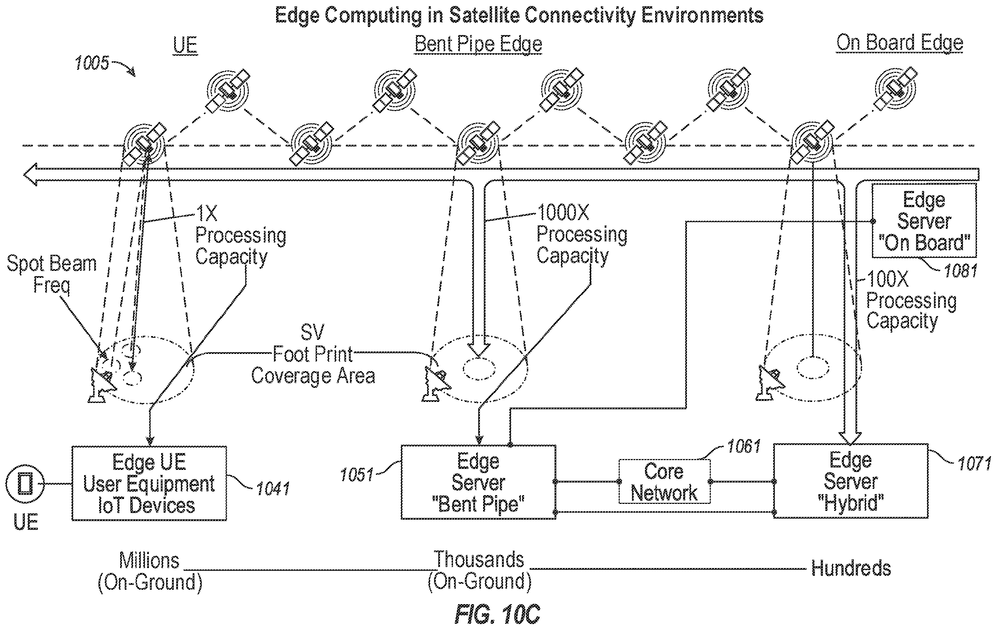

FIG. 10C illustrates further comparisons of terrestrial-based and non-terrestrial-based edge processing arrangements. Here, the satellite network 1005 provided by a LEO constellation is used: a) at left, to provide connectivity and edge processing to as many as millions of user devices 1041 (e.g., UEs, IOT Sensors), which do not have a wired direct connection to the core network 1061; b) at center, to provide connectivity and edge processing via a "bent pipe" edge server 1051, which has a wired direct connection to the core network 1061, supporting as many as thousands of edge servers on-ground; c) at right, to provide use of an on-vehicle edge server 1081, which also may coordinate with a hybrid edge server 1071, to support as many as hundreds of servers for in-orbit processing and hundreds of servers for ground stations. It will be understood that the servers 1051, 1071, and 1081 may be accessed for use by the various UEs 1041, based on connectivity and service orchestration considerations, such as discussed further below.

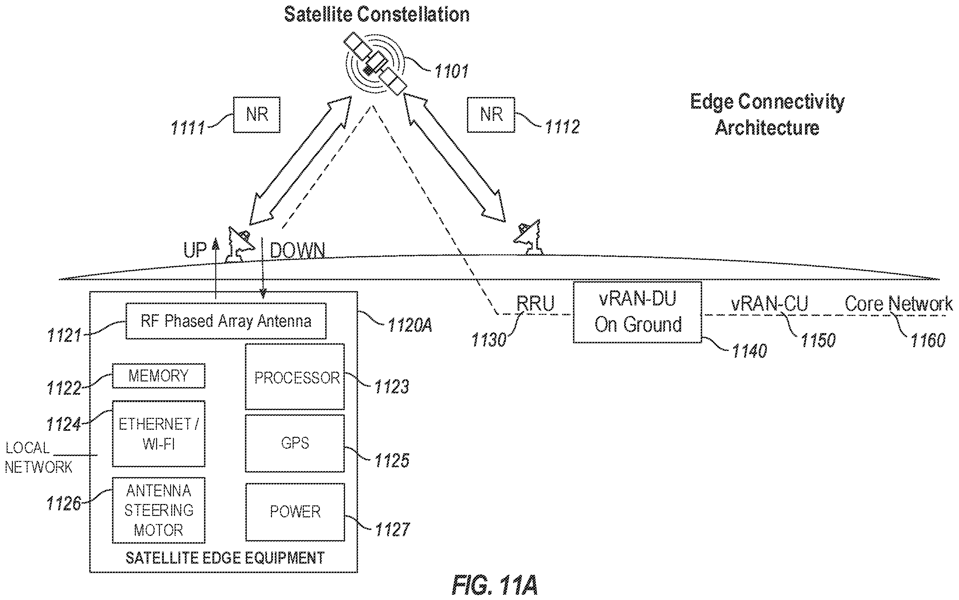

Additional scenarios for network processing are depicted among FIGS. 11A-11D. FIG. 11A first depicts an edge connectivity architecture, involving RAN aspects on the ground, using a satellite connection (via satellite 1101) as a "bent pipe" with a vRAN-DU 1140 as an edge on ground. In this scenario, satellite edge equipment 1120A communicates with up and downlinks via a 5G new radio (NR) interface 1111 with the satellite 1101; the satellite also communicates with up and downlinks via a NR interface 1112 to a remote radio unit (RRU) 1130 which is in turn connected to the vRAN-DU 1140. Further in the network are the vRAN-CU (central unit) 1150 and the core network 1160.

The satellite edge equipment 1120A depicts a configuration of an example platform configured to provide connectivity and edge processing for satellite connectivity. This equipment 1120A specifically includes an RF phased array antenna 1121, memory 1122, processor 1123, network interface (e.g., supporting Ethernet/Wi-Fi) 1124, GPS 1125, antenna steering motor 1126, and power components 1127. Other configurations and computer architectures of equipment 1120A for edge processing are further discussed herein.

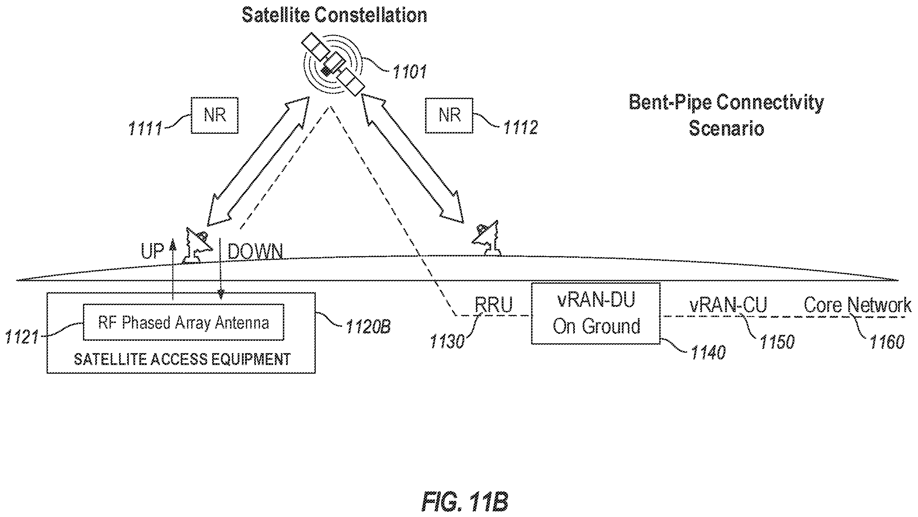

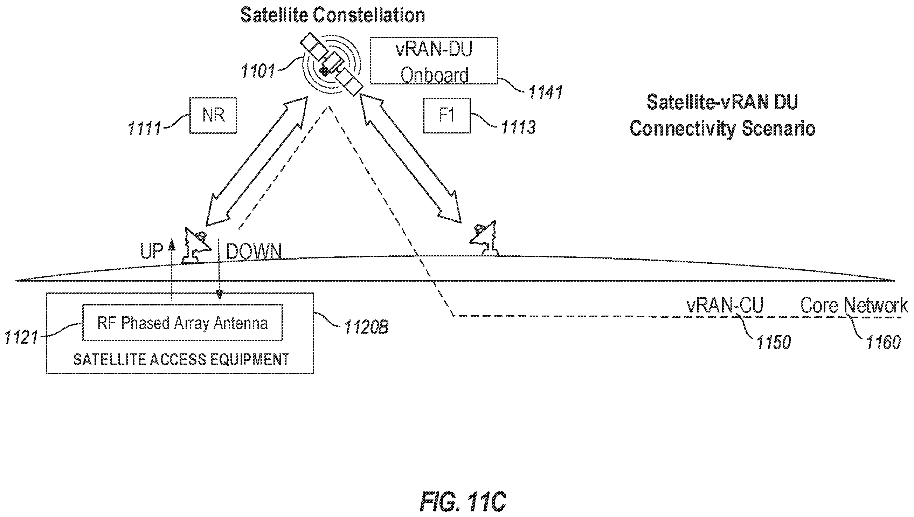

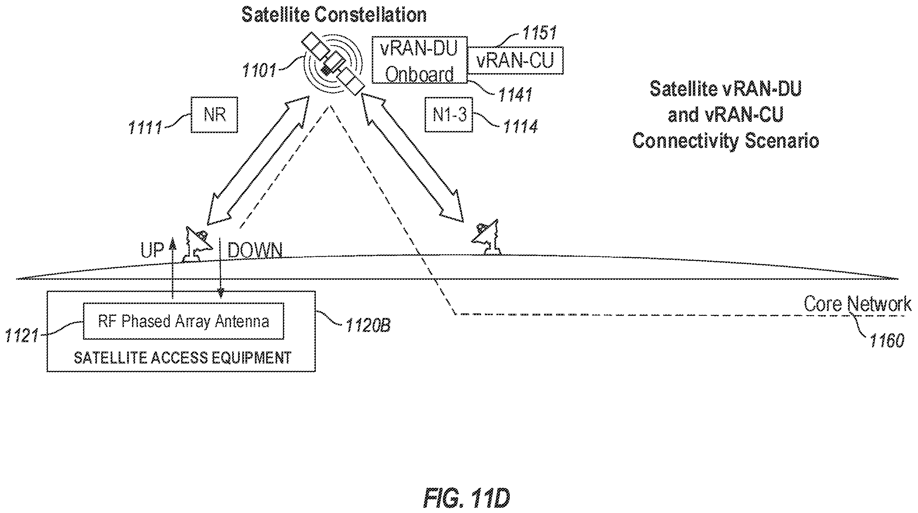

FIGS. 11B-11D show a simplified version of satellite access equipment 1120B, used for network access. In the setting of FIG. 11B, a similar bent-pipe connectivity scenario is provided, with the vRAN-DU 1140 located on ground. In the setting of FIG. 11C, the vRAN-DU 1141 is located on-board the SV, with a F1 interface 1113 used to connect to a vRAN-CU 1150 and Core Network 1160 on ground. Finally, in the setting of FIG. 11D, the vRAN-DU 1141 and vRAN-CU 1151 are located on-board the SV, with a N1-3 interface 1114 used to connect to the core network on-ground.

In further examples, the satellite and ground connectivity networks identified above may be adapted for Satellite and 5G Ground Station Optimization using various artificial intelligence (AI) processing techniques. In an example, infrastructure optimization related to terrestrial 5G pole placement for optimum performance (uplink, downlink, latency) and satellite constellation coexistence may be analyzed to support improved network coverage.

Some satellite constellations may have limited ground stations and thus satellite connectivity latency may be impacted if not located line-of-sight with devices on the ground. As a result, service providers are expected to optimize their network for 5G pole placement to avoid interferences caused by weather. Satellite images can be used as an inference input to an AI engine, allowing a service provider to determine optimum routing and 5G pole placement, leveraging factors such as geographic location, demand, latency, uplink, downlink requirements, forward looking weather outlook, among other considerations.

### Satellite Coverage Coordination

The following techniques may be used to obtain a satellite coverage footprint for LEO satellite network connectivity. A coverage footprint may be used for purposes of determining when satellite connectivity is available to a particular location (e.g., at a UE or a satellite-backhaul base station), as well as coordination of edge computing operations among terrestrial and non-terrestrial locations.

Two main challenges are encountered when considering satellite coverage from LEOs. First, depending on the altitude and on the density of a constellation, the time that a particular edge location is covered with network access (and compute access) is going to vary. Latency and bandwidth of a satellite connection also may change over time. Second, satellites which host compute resources are going to be constantly moving around and coordinating compute with other satellites and ground systems. Hence, the location and coverage capabilities of a satellite edge computing node is an important consideration that needs to be constantly considered.

The following provides a command mechanism to identify satellite coverage and positions of individual SVs, for purposes of coordinating with SVs for executing edge computing workloads or obtaining content. With this coverage and position information, individual edge endpoint devices can plan or adjust operations to maximize use of LEO connectivity.

In an example, a command may be defined with a connectivity service to Get Satellite Vehicle future (fly-over) positions relative to a ground location. This may be provided by a "Get SV Footprint" command offered by the network or service provider. In the following, Ground (GND) references may correspond to Ground Station Edge, Telemetry Tracking, UE or IoT Sensor locations. The following parameters may be supplied for this example "Get SV" Footprint command:

**TABLE 1**

| **Parameter** | **Type** | **Comments** |
|---|---|---|
| SV.id | INT | Satellite Vehicle unique ID |
| Id.GND.lat | FLOAT | Ground location latitude for SV fly-over |
| Id.GND.long | FLOAT | Ground location longitude for SV fly-over |
| GND.alt | FLOAT | Ground location altitude % for intensity threshold calculations |
| Id.GND.time | INT | Amount of time to obtain SV flyover(s) |
| Id.elevation.start | INT | Horizon Elevation degrees.start |
| Id.elevation.max | INT | Horizon Elevation degrees.max |
| Id.elevation.end | INT | Horizon Elevation degrees.end |
| Id.direction.start | INT | Approach Direction degrees (N/S/E/W, etc.) |

For instance, the "direction" properties may be used to obtain fly-over telemetry.

Also for example, a response to this "Get SV" Footprint command may be defined to provide a response to the requestor with the following information:

**TABLE 2**

| **Parameter** | **Type** | **Comments** |
|---|---|---|
| SV.id | INT | Satellite Vehicle unique ID |
| SV.name | STRING | SV name |
| SV.footprint.lat | FLOAT | Center latitude point of expected beam footprint |
| SV.footprint.long | FLOAT | Center longitude of expected beam footprint |
| SV.footprint.radius | FLOAT | Radius of expected beam footprint |
| SV.time | INT | Expected time beam footprint radiation |
| SV.min.intensity | FLOAT | Altitude of beam footprint for intensity calculations |
| SV.frequency.total | FLOAT | Frequencies band total |
| SV.frequency.available | FLOAT | Frequencies band available |
| SV.frequency.premium | FLOAT | Frequency for premium SLA |
| SV.frequency.besteffort | FLOAT | Frequency for best effort SLA |
| Id.intersatlink.right | INT | Inter Satellite Link availability.right |
| Id.intersatlink.left | INT | Inter Satellite Link availability.left |
| Id.intersatlink.fore | INT | Inter Satellite Link availability.fore |
| Id.intersatlink.aft | INT | Inter Satellite Link availability.aft |

It will be understood that the availability properties may extend to information about available frequencies and inter satellite links for routing decisions, including for decisions that involve the edge computing locations accessible on-satellite, via a bent-pipe connection, or both.

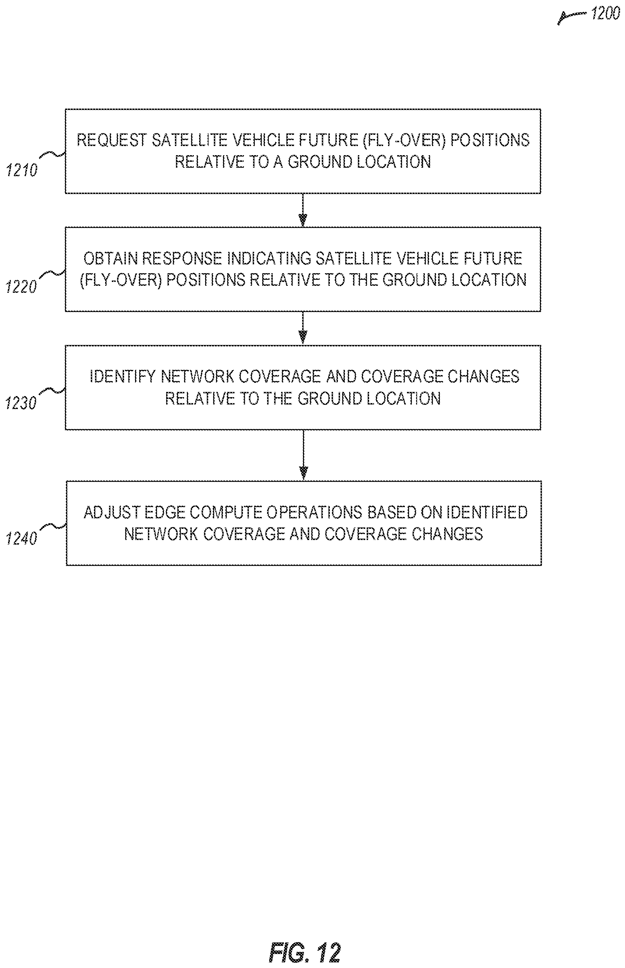

FIG. 12 illustrates a flowchart 1200 of a method of obtaining satellite vehicle positions, in connection with edge computing operations, according to an example. At operation 1210, a request is made to obtain the future fly over positions of a satellite vehicle, relative to a ground location. In an example, further to Table 1 above, this request includes an identification of latitude, longitude, and altitude, used for satellite reception. Aspects of the request and the command also may involve authentication (e.g., to ensure that the communication protocol is secure, and data provided can be trusted and not spoofed.)

At operation 1220, a response is obtained which indicates the future fly-over positions of the satellite vehicle, relative to the ground location. For instance, the "Get SV" Footprint command and responses noted above may be used.

Based on this footprint information, operation 1230 may be performed to identify the network coverage, and coverage changes, relative to the ground location. Edge computing operations may be adjusted or optimized, at operation 1240, based on the identified network coverage and coverage changes.

### Connector Computing Architecture for Satellite Network Connections

As discussed above with reference to FIG. 2, devices may be connected to a satellite-connected edge location (e.g., a base station) that implements dual types of access, such as a Radio Access Network (e.g., 3GPP 4G/5G, O-RAN alliance standard, IEEE 802.11, or LoRa/LoRaWAN, and which provides Network functions such as vEPC with CUPS/UPF, etc.) and a first level of edge services (such as a CDN). In the following examples, once these services require connectivity to the cloud or the core of the network, the backhaul connectivity occurs via satellite communication. For instance, in the case where the CDN cache at the local edge CDN has a miss, or where a workload requires resource or hardware not available at the base station, a new connection will obtain or provide this information via the satellite network backhaul.

One of the main challenges of such terrestrial-satellite architectures is how to overcome the higher latencies that appear when services require connectivity to the backhaul of the network. This problem becomes more challenging when there are multiple type of backhaul connections (e.g., to different data centers) with different properties or levels of congestion, and associated resource sharing (e.g., bandwidth) limitations provided by such connections. Likewise, this problem becomes more challenging given the small amount of time that a particular SV will be in communication range to perform compute operations or complete a data transfer with a source location.

The following approach provides a "satellite-edge connector" mechanism for implementation within an edge computing node, appliance, device, or other computing platform. With this mechanism, a telemetry and connection status is obtained from the satellite or satellite constellation that has connectivity to a particular edge compute location, cloud, or data center, and this status information is utilized to implement smarter network traffic shaping from the originating platform. In an example, a satellite-edge connector may be implemented by extending a network platform module (e.g., a discrete or integrated platform/package) that is responsible to handle communications for the edge services. This may be provided at the base station, access point, gateway, or aggregation point which provides a network platform as an intermediary between the end point device (e.g., a UE) and the satellite network. For instance, a network platform module at the intermediary may be also adapted to dynamically handle QoS and bandwidth associated to the various data streams-mapped into the different services-depending on the backhaul connectivity state available from the satellite to the various end points.

Additionally, in various edge computing settings, each tenant or group of tenants may apply (or require) different security, QoS, and data dynamic privacy policies, including policies that are dependent on geographic locations of the tenant or the communication and computing hardware. In such settings, an edge computing platform may automatically configure itself with such policies based on involved geographic locations, particularly when coordinating communications through transient LEO satellite networks. Further, each tenant or group of tenants may apply rules that determine how and when specific QoS, security, and data policies will be used for specific compute tasks or communicated data.

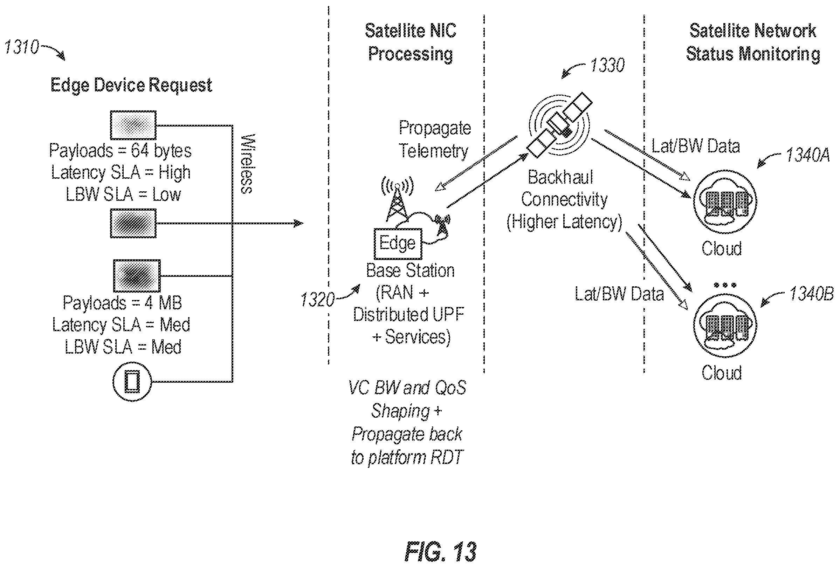

FIG. 13 illustrates a network platform (similar that that depicted in FIG. 2) which is extended via satellite communications for virtual channels. In this setting, each end point (e.g., from a requesting edge device) is mapped into a satellite end point virtual channel (EPVC). One or more service streams that target a particular end point (e.g., to Cloud A 1340A or Cloud B 1340B) are mapped into a satellite end point VC for the satellite 1330. Each of the service streams is mapped into a particular stream virtual channel (SVC) within that satellite end point VC - and multiple streams can be mapped into a same SVC. In an example, a stream is also mapped to a tenant and service using a process address space ID (PASID) or global process address ID (PASID), as referenced below.

In this setting, using telemetry from the satellite 1330 (or satellite constellation) and a quality of service attached to each SVC, the network logic can dynamically move bandwidth between different EPVCs. The network logic can also provide active feedback into the software stack and apply platform QoS, such as to throttle back services mapped into an EPVC where constrained bandwidth or other conditions (e.g., power, memory, etc.) exist at the edge base station 1320, the satellite 1330, or one of the clouds 1340A, 1340B. Such network logic may be implemented at the base station 1320 using the following architectural configuration.

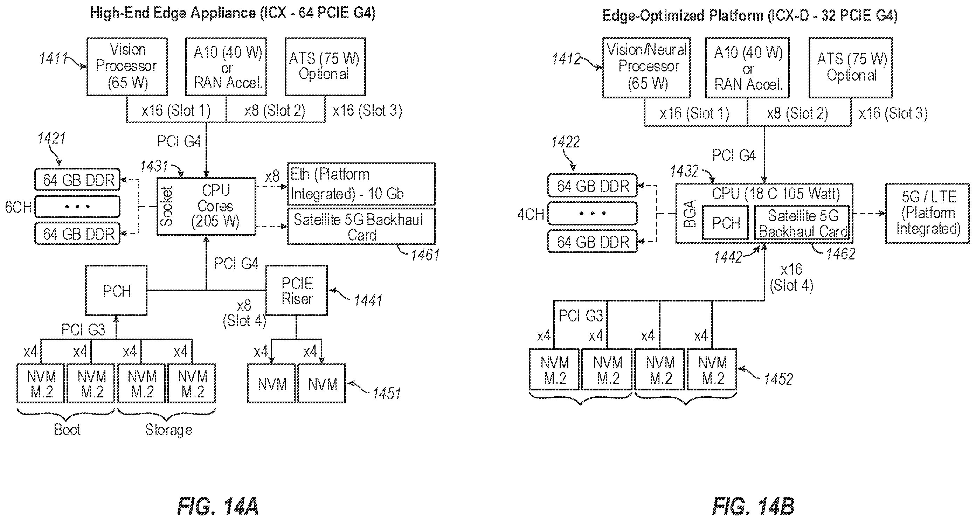

FIGS. 14A and 14B illustrate a computing system architectural configuration, including a connector module adapted for use with satellite communications. Within FIG. 14A, an architectural arrangement is provided for an appliance with a socket-based processor (FIG. 14A) or with a ball grid array package-based processor as shown in FIG. 14B). In addition to the processors 1431, 1432, the architecture illustrates memory resources 1421, 1422, acceleration resources 1411, 1412, platform controllers 1441, 1442, and memory/storage resources 1451, 1452. Other computing architectures may also be adapted for use with the following satellite connectivity modules. Although not depicted, this architecture may be implemented in a variety of physical form factors (in the form of servers, boxes, sleds, racks, appliances, etc.)

In both architecture arrangements, FIGS. 14A and 14B identify an element (specifically, Satellite 5G backhaul card 1461, 1462) that provides connectivity from the platform to the satellite as a connector. This element, referred to as a "connector module," can be integrated into the platform or used discretely as a device (e.g., a PCIE, NVLink, or CXL device).

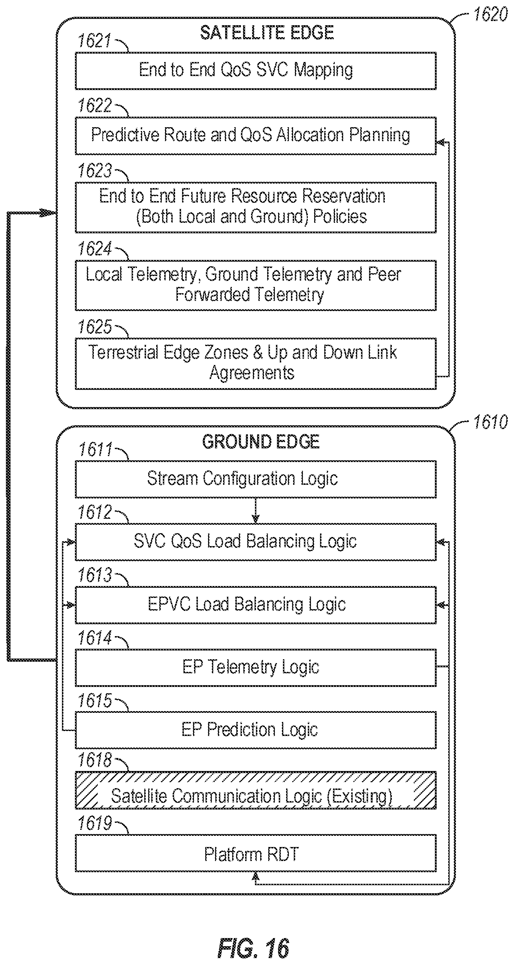

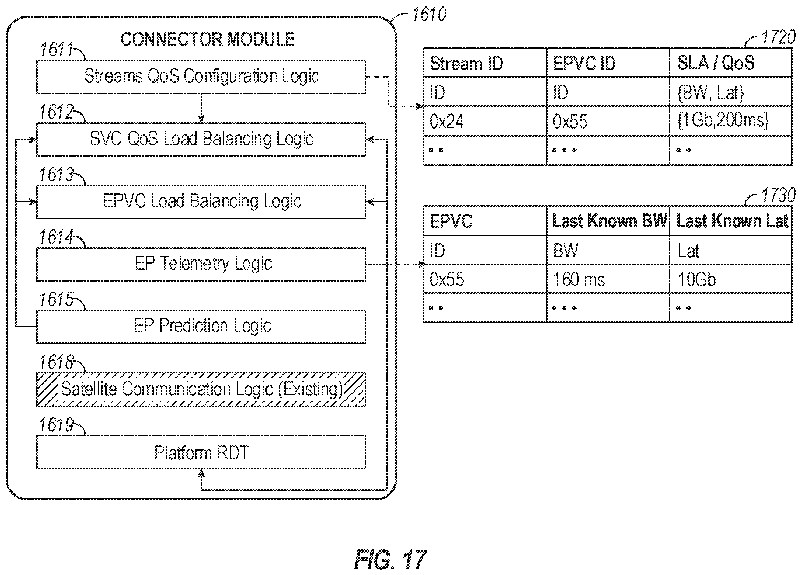

In an example, the connector module 1461, 1462 is exposed to the software stack and provides a similar interface as a Network Interface Card, and may include semantics to put and get data from an end point (e.g., the next tier of the service hosted in a data center after the satellite, such as corresponding to clouds 1340A, 1340B). The connector module 1461, 1462 includes logical elements in order to understand how local streams are mapped into one or multiple end point connectors after the satellite, and monitor how the connections between the satellites and end point connectors are performing over time and how their connectivity affects how much bandwidth streams can effectively achieve. This may be achieved by utilizing telemetry information that a satellite will be providing to the logic. Additional information on the connector module is provided in FIGS. 16 and 17.

Additionally, the connector module 1461, 1462 may apply quality of service (QoS) policies to streams that share connections to the same end points with different levels of QoS agreements (e.g., with connections shared among different tenants). The connector module 1461, 1462 may also apply bandwidth load balancing to the satellite communication between different streams mapped into different end points when backhaul changes apply. Further, the connector module 1461, 1462 may scale down resources to those services which are network bound when the telemetry from the satellite indicates that the services will not be capable to achieve the desired performance.

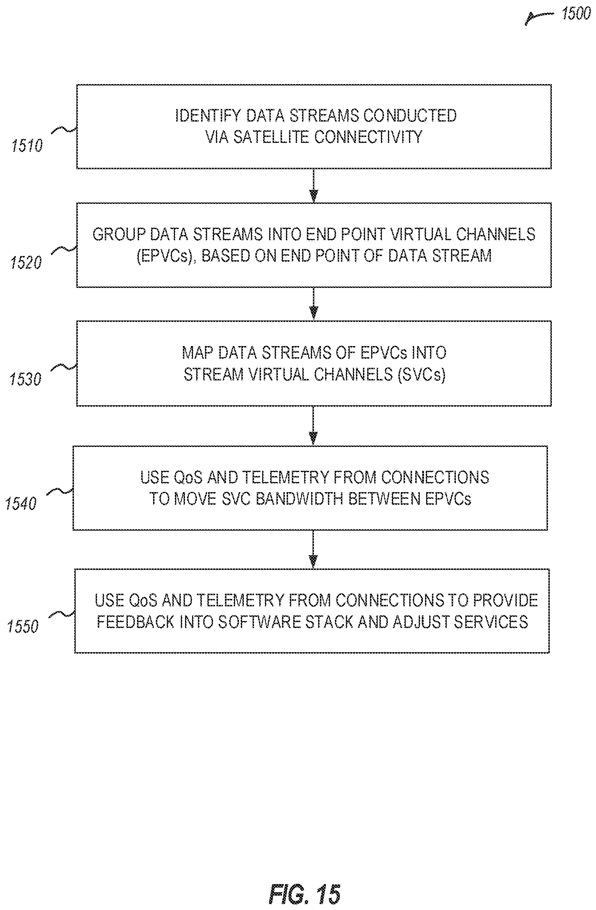

FIG. 15 illustrates a flowchart 1500 of a method for using a satellite connector for coordination with edge computing operations. As noted above, such operations may be performed at a base station (such as 1320) but other types of network gateways, access points, aggregation points, or connectivity systems may also be used.

At a terrestrial station (e.g., at the edge base station 1320), current or prospective streams are identified at operation 1510 and grouped into virtual channels (VCs) at operation 1520, such as by using a hierarchical VC definition. Each end point is mapped into a satellite end point virtual channel (EPVC) based on the end point of the data stream. One or more service streams that target a particular end point are mapped into a satellite end point VC (e.g., Cloud A 1340). Each of the service streams is mapped into a particular stream virtual channel (SVC) within that satellite EPVC, at operation 1530. Thus, one EPVC can contain multiple SVCs; and each SVC is mapped into multiple services while also being mapped to a tenant that has an associated EPVC.

Using telemetry from the satellite and quality of service attached to each SVC, at operation 1540, the network logic dynamically will move bandwidth between different EPVCs. Additionally, at operation 1550, the network logic will provide active feedback into the software stack and will apply platform QoS in order to throttle back or adapt services mapped into a EPVC, where constrained bandwidth is present (e.g., by adapting power, memory, or other resources).

FIG. 16 illustrates an internal architecture of a connector module 1610, which can be implemented at a terrestrial location (e.g., a "ground" edge computing system) adapted for use with satellite communications. As noted above, this architecture supports a specific way to group data streams into EPVC virtual channels (e.g., using a hierarchical virtual channel definition), and efficiently communicate via satellite networks.

The internal architecture of 1610 is applicable to an end-to-end system with LEO satellites in place, connected to a ground-located edge appliance. Assuming that the ground-located edge appliance does not have full connectivity and high bandwidth connections all the time (e.g., due to a remote location), the following provides a beneficial approach to coordinate the satellite backhaul data transfers and processing actions that need to happen.

In an example, the use of the connector module 1610 enables data transfers to be coordinated a) between the satellites forming a cluster/coalition/constellation (e.g., to minimize data transfer needed, including to only send summary information or to prevent data transfer duplicates when appropriate), and b) between a cluster of satellites and the ground stations (e.g., to determine when and which satellites communicates what data, and to enable handoff to a next ground station). Planning and coordination is key for such transfers-not only for data management, resource allocation, and management, but also from a processing order standpoint.

For instance, in a logistics use case, consider a system that is coordinated from a ground control system and a satellite connectivity network to determine a joint plan for movement and tracking of some physical resource, such tracking movement of cargo ships on an ocean. Here, coordination involves identifying a) the relevant area for satellite connectivity (e.g., based on the geographic positioning of the cargo ships), b) what kind of processing is needed via the satellite system (e.g., image processing to detect the number of cargo ships), and c) how much bandwidth, resources, or processing is required to send a data result back via the satellite connectivity (e.g., to return just the number of cargo ships identified in the image data, and not all images).

As will be understood, a variety of conventional network deployments consider quality of service and service level agreements. However, existing approaches are not capable to fully respond to satellite system architectures and the connectivity considerations involved with such architectures. Furthermore, the concept of backhaul connectivity through a satellite network is not considered as part of existing architectures. As a result, the currently disclosed approaches provide end to end QoS adaptive policies for Satellite Edge and do provide resource allocation based on mobility and multi satellite telemetry.

With reference to the connector module architecture of FIG. 16, each end point of communication is mapped, using stream configuration logic 1611 of a ground edge connector module 1610, into a satellite end point virtual channel (EPVC). One or more service streams that target a particular end point are mapped into a satellite end point virtual channel (VC) (e.g., Cloud A) which conducts the processing (e.g., image detection processing). Further, in an example, each of the service streams is mapped into a particular stream virtual channel (SVC) from within that satellite end point VC.

The stream configuration logic 1611 also provides interfaces to the system software stack in order to map the various stream's identifier (which can come in a form of a Process Address Space Identifier (PASID), an application/service represented by a PASID+Tenant identifier, or any similar type of process or service identification) to the corresponding EPVC and SVC. In an example, the logic 1611 also allows a system to provide or obtain: an ID of the services; an identification of the EPVC and SVC associated to the PASID (noting that various streams may share same SVC); and identification of latency and bandwidth requirements associated to the stream. Further discussion of these properties and streams are provided below with reference to FIG. 17.

Using telemetry from the satellite and quality of service attached to each SVC, the network logic (e.g., logic 1612-1615, in coordination with satellite communication logic 1616) dynamically moves bandwidth between different EPVCs, provides active feedback into the software stack via a platform RDT, and applies platform QoS in order to throttle back services mapped into a EPVC, such as where constrained bandwidth exists (e.g., power, memory etc.). Such logic may operate in addition to existing forms of satellite communication logic 1618 and a platform resource director technology 1619.

At an edge connector of satellite edge 1620, satellite-side capabilities may be coordinated to compliment the operations at the ground edge 1610. Similarly, the logic implemented at the satellite edge 1620 allows a satellite system to create an SVC with a particular bandwidth and latency requirements.

At the satellite edge 1620, various components can be tied into the EPVC and SVC to implement the E2E policies indicated by the ground edge 1610. Such satellite capabilities may include, end to end QoS SVC mapping 1621, predictive route and QoS allocation planning 1622, end to end future resource reservation policies 1623 (supporting both local (satellite) and ground policies), telemetry processing 1624 (supporting local (satellite) telemetry, ground telemetry, and peer forwarded telemetry), and terrestrial edge zones and up and down link agreement processing 1625.

FIG. 17 provides additional examples of processing logic used within an edge connector 1610 architecture at a ground edge, including examples of information maintained for streams and channels. In an example, the stream configuration logic 1611 provides interfaces to the system software stack (not shown) in order to map various stream IDs (which can come in a form of PASID or any similar type of identification, including where a PASID is mapped to a tenant) to the corresponding EPVC and SVC. For instance, the stream configuration logic 1611 may collect and maintain a data set 1720 that provides: (1) an identifier of the services; (2) EPVC and SVC identifiers associated to the PASID (noting that various streams may share the same SVC, and thus multiple PASIDs are mapped to the same SVC); and (3) latency and bandwidth information (e.g., requirements) associated to the stream. With this information, the stream configuration logic 1611 allows creation of an SVC with a particular bandwidth and latency requirements.

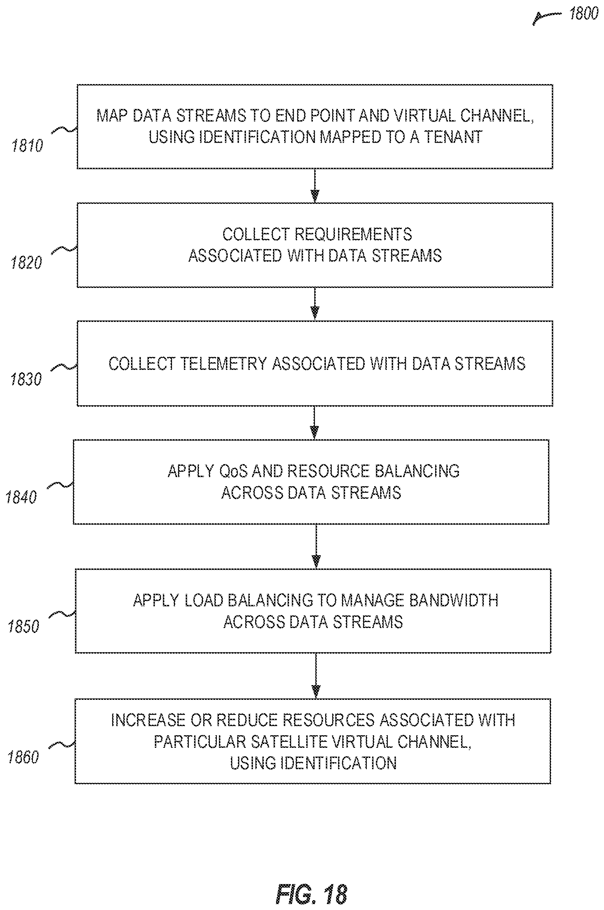

FIG. 18 illustrates a flowchart 1800 of a method for using a satellite connector for coordination with edge computing operations. Additional operations (not shown) may utilize other aspects of load balancing, QoS management, resource management, and stream aggregation, consistent with the techniques discussed herein.

At operation 1810, data streams are mapped to an end point and a virtual channel, using an identification mapped to a tenant. In an example, this is performed by logic 1614 and 1615. The endpoint (EP) telemetry logic 1614 and endpoint (EP) projection logic 1615 are responsible to track and predict (e.g., using LSTM neural networks) how the connectivity from the satellite to the end points changes over the period of time. With this mapping, information is collected for requirements associated with the data streams at operation 1810 and telemetry associated with the data streams 1820. For instance, this logic may collect a data set 1730 that tracks the EPVC, last known bandwidth, and last known latency. Such logic exposes a new interface to the satellite which allows consideration of current latency and bandwidth available to each of the end points.

In an example, the telemetry provided by the two aforementioned components will be provided to the SVC and EPVC load balancing QoS logics as follows:
(1) At operation 1840, the SVC QoS load balancing logic 1612 is used to apply QoS and resource balancing across all the streams mapped into a particular SVC depending on their QoS requirements. In response to a change of the SVC allocated logic, this logic will be responsible to distribute the existing bandwidth to the different streams depending on their requirements (e.g., distribute bandwidth depending on the priority).
(2) At operation 1850, the EPVC QoS Load balancing logic 1613 is used to manage bandwidth connectivity between the platform and the satellite depending on the current or predicted available bandwidth to each of the end points. Each EPVC will have associated a given priority. Bandwidth to the satellite will be divided among EPVC proportionally to the priority. If a particular end point has less available bandwidth than the once associated to its corresponding EPVC, the bandwidth will be divided among the other EPVC using the same priority criteria. On a change (increase or reduce) of a bandwidth to a particular end point, the EPVC associated bandwidth will be changed proportionally depending on the priority of that particular end point. The increased or reduced bandwidth will be provided to the other EPVC as stated above. The logic also may proactively provide some more bandwidth to an EPVC, using prediction logic identifies that in a coming future there will be less bandwidth available for a particular EP. Hence each EPVC may have a global quota (based on the priority) which may be consumed ahead based on prediction.
   As will be understood, an EPVC that is established from end-to-end may be re-routed to perform load balancing. For instance, suppose that an EPVC involves Edge1→Sat1→Sat2→Sat3→Ground is mapped into EPVCx; but, based on the QoS required, Sat 2 does not provide enough bandwidth. In response, the system may remap EPVCx to Sat1→SatX→Sat3→Ground.
(3) At operation 1860, the SVC QoS load balancing logic 1612 may provide telemetry to the platform resource director logic 1619 (e.g., implemented with a resource director technology) in order to increase or reduce the resources associated to a particular SVC depending on the allocated bandwidth. The logic may identify bandwidth to fulfill required resources to a particular identifier (e.g., PASID) using rules (e.g., mapping a PASID ID; List of Bandwidth {BW1,... BWn} with the corresponding needed resources (Memory, CPU, Power, etc.)).

### Satellite Network Cache and Storage Processing

With use of satellite communications, a number of important challenges are also present: (1) How to overcome higher latencies and low bandwidth that appear when edge computing services require connectivity to the backhaul of the network (2) How to implement geofencing data policies for data being sent (and received) among edge devices, satellites, and end points; and (3) How to implement end to end quality of service policies at the constellation of satellites which are moving, while considering exclusion zones, geofencing, and varying types of telemetry (from satellite peers in the constellation, from local processing systems, and from ground actors).

These issues becomes even more challenging when there are multiple type of backhaul connections (e.g., to different data centers) with different properties, levels of congestion, edge base stations connecting to the satellite moving, policy or service provider restrictions on content and services, among other considerations. Additionally, as new ways are developed to store data in moving edge systems, the use of exclusion zones and other intrinsic properties of satellites will require new approaches in the form of rules, policies, interfaces that allow moving edge systems to implement autonomous, low latency and dynamic data transformation and eviction depending on those approaches and meta-data.

One approach which is expected to be used to resolve permission issues in the context of satellite communications, involves the application of geofencing, such as to make certain services or data only available (or, to prohibit or block such services or data, or the use of such services or data) based on geographic location. In the context of geofencing, three levels of geofencing may be needed between any of the three entities: end user/content provider, satellite, and content/service provider. Further, geofencing may apply not only with respect to the ground (e.g., what country a satellite is flying over) but as a volumetric field within the area of data transmission. For instance, a particular cube or volume of space may be allocated, reserved, or managed by a particular country or entity.

When considering content delivery via satellite communications, geofencing and restrictions becomes quite challenging due to the amount of data and expected volume of content delivery communications, different levels or service level agreement to deliver such data, the number of content providers, and overall concerns of privacy, security, and data movement across such a dynamic environment. The following offers an approach for caching and content distribution to address these challenges.

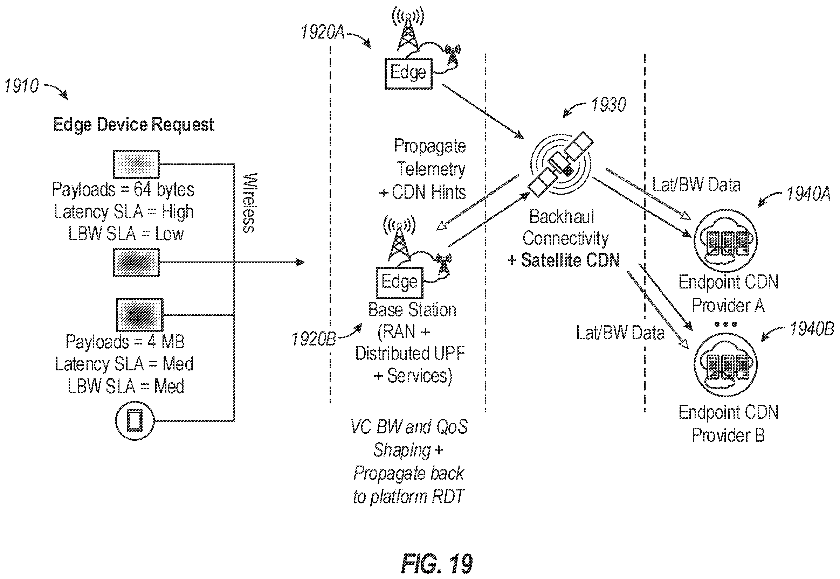

FIG. 19 illustrates a network platform (similar that that depicted in FIG. 13 and FIG. 2) which is extended as a content catching architecture. Here, this architecture is configured with a three-tier terrestrial and satellite content delivery cache tiers including quality of service and geo-fencing rules. In the context of this three-tier caching architecture (base stations 1920, satellite and end content providers 1930 and 1940, responding to edge device requests 1910), the improvements are implemented at the following ingredients:
(a) Adaptive Satellite content caching from multiple end locations and provided to multiple set of base stations distributed across multiple end locations. This includes QoS policies based on geographical areas, subscribers and data providers managed at the satellite. Furthermore, new type of caching policies at the satellites are provided based on: geo-fencing, satellite peer hints, and terrestrial data access hits.
(b) Adaptive terrestrial data caching based on satellite data caching hints coming from the satellite. In this case, the satellite provides information to each base station on content to be potentially pre-fetched, such as based on how base stations in the same geo-area are accessing content.
(c) Adaptive terrestrial content flow based on end point bandwidth availability. Here, the goal is to be able to perform adaptive throttling at the base station demanding content depending on the real bandwidth availability between the satellite and end content provider (e.g., for content missing on the satellite cache).
(d) Data geo-fencing applied with two levels of fencing: (1) depending on the geolocation of target terrestrial data consumer and producers; and (2) depending on the x-y-z location of the satellite (assuming that not all the locations can be allowed). Data at the satellite may be tagged with geofencing locations used as part of the hit and miss policies. Data may also be mapped to dynamic security and data privacy policies determined for tenants, groups of tenants, service providers, and other participating entities.

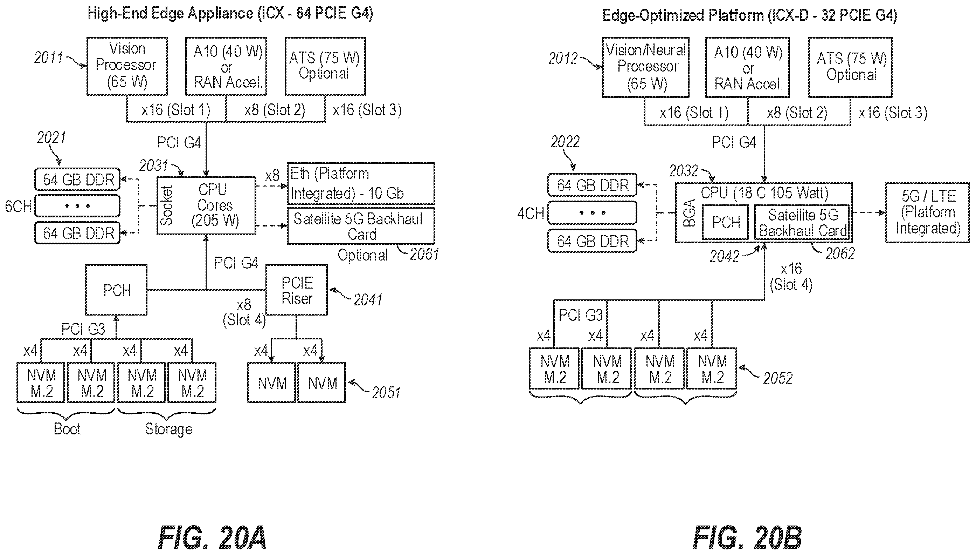

FIGS. 20A and 20B illustrate a network platform which is extended via satellite communications for geofencing and data caching operations. This platform is based on an extension of the features described for FIG. 14. However, it will be understood that this architecture may be extended for other aspects of data caching, relating to specific data flows, caching policies, catching hints, etc.

As shown in FIGS. 20A and 20B, an architectural arrangement is provided for an appliance with a socket-based processor (FIG. 20A) or with a ball grid array package-based processor (FIG. 20B). In addition to the processors 2031, 2032, the architecture illustrates memory resources 2021, 2022, acceleration resources 2011, 2012, platform controllers 2041, and memory/storage resources 2051, 2052.

In addition to the use of a connector module (e.g., Satellite 5G backhaul card 2061, 2062), the architectures may integrate the use of accelerated caching terrestrial logic component 2051. In an example, this component implements two-tier caching logic that is responsible to determine how the content has to be cached among the two tiers (terrestrial and satellite tiers). For instance, terrestrial caching logic (e.g., implemented in component 2051) proactively will increase or decrease the amount of content delivery to be pre-fetched based on:
(1) Telemetry from the each of the EPVC bandwidth. Hence, at higher availability of EPVC for a particular content provider, may cause an increase to the amount of pre-fetching. Logic may also utilize prediction data in order to prefetch more content envisioning a situation with higher saturation.
(2) Hints provided by the satellite logic which is capable to analyze requests coming from multiple terrestrial logic. Hints may provide list of hot content tagged with: Geolocation or area where the content is being absorbed; End points or content delivery services attached to the content; or Last time the content was accessed.

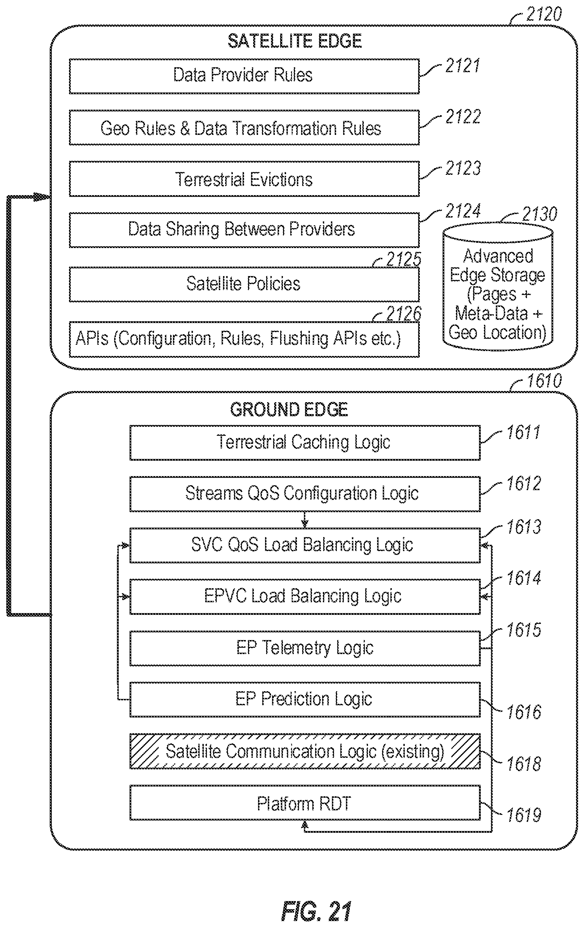

In an example, the satellite logic (e.g., implemented in components 2061, 2062) will (a) Proactively cache content from multiple EP content sources, and implement different types of caching policies depending on SLA, data geofencing, expiration of the data etc.; and (b) Proactively send telemetry hints to the terrestrial caching logic 1611, provided as part of a ground edge 1610 depicted in FIG. 21.

FIG. 21 more specifically illustrates an appliance configuration for satellite communications which is extended via satellite communications for content and geofencing operations, according to an example. Following the configuration examples of FIG. 16, satellite logic at a satellite edge computing system 2120 may implement geo-aware caching policies for a storage system 2130, based on the following functional components:
Data Provider Rules 2121: Each content provider being cached at the satellite edge 2120 will have a certain level of SLA which is translated to the amount of data being cached for that provider at the satellite. For instance, if the satellite has 100% of caching capacity, 6% may be assigned to a streaming video provider.
Data Provider Geolocation Rules 2122: Provider rules can be expanded in order to specify different percentage for a given provider if there are different type of end point providers in different geographic locations. Other aspects of data transformation for a provider or geolocation can also be defined.
Terrestrial-based evictions 2123: Each of the base stations providing content to the edge devices will provide the hot content and cold content back to the satellite. Content for A and B becoming cold will be hosted at the satellite for N units more of time and evicted afterwards or replaced by new content (e.g., prefetched content).
Data Sharing between Providers 2124. Different CDN providers may allow sharing content or some content. Each content includes meta-data that identifies what other content providers are sharing that data.
Satellite Geolocation Policies 2125. Depending on the geolocation of the target, terrestrial data may miss or hit. Each data has a tag that identifies what geolocations can access to that data (list of areas or ALL). If edge base station does not match those requirements, a miss occurs.
Satellite APIs and Data 2126. There are flushing mechanisms provided that allow certain data to be flushed based on geo-location and based on type of content tagging for low latency flushing. Data needs to be tagged with meta-keys (e.g. content provider, tenant, etc.), and a satellite can provide interfaces (APIs) to control availability of this data (e.g., to flush data with certain meta-keys when crossing X geographic area). Data is also geo-tagged as it is generated, which can be implemented as part of the flushing APIs. Additionally, data transformation rules can be applied based on the use of interfaces, such as, if data with meta-data or a geo-tag matches, then automatically apply X (e.g., anonymize the data). This can guarantee no violations for certain areas.

Additionally, data peer satellite hints may be implemented as part of the Policies 2125. Content may be proactively evicted or demoted from hot to warm if there is feedback from satellite peers covering peer geolocations that that content is not hot anymore. Content demoted to warm after X units of time and may be evicted after Y units of time. Content may become hot based on similar feedback from peer satellites.

It will be understood that a CDN cache may incorporate a more complex hit / miss logic that implements different combinations of the previous elements. Additionally, these variations may be considered for other aspects of content delivery, geocaching, and latency-sensitive applications.

The preceding defines a new type of semantics on data storage and delivery on the satellite edges. However, it will be understood that other content storage, caching, and eviction approaches may also be provided for coordination between satellite edges and computing systems.

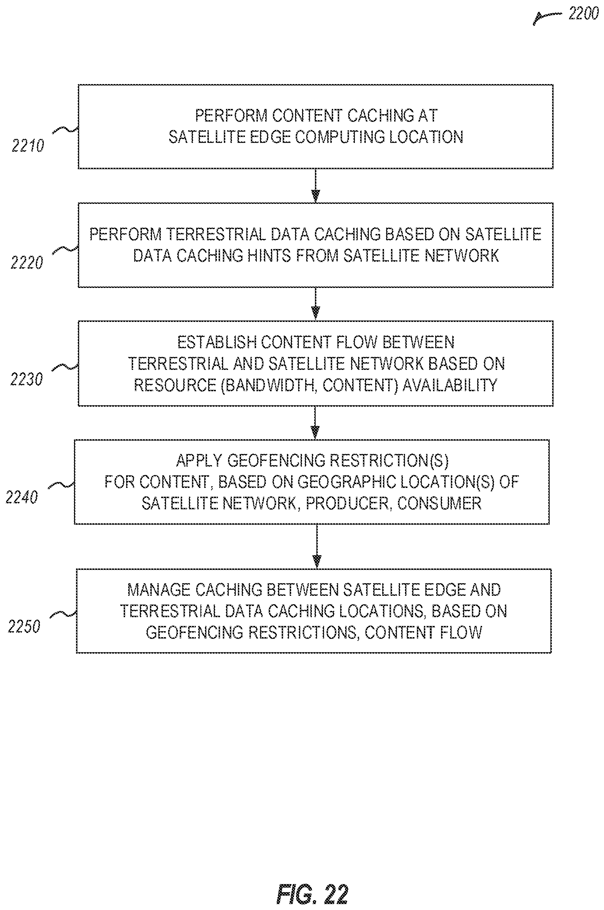

FIG. 22 illustrates a flowchart of a method 2200 for retrieval of content using satellite communications based on geofencing operations.

At operation 2210, content caching is performed at a satellite edge computing location, involving some aspect of a satellite vehicle, constellation, or non-terrestrial coordinated storage. The interfaces discussed above may be used to define the properties of such caching, restrictions on data caching, geographic details, etc.

At operation 2220, terrestrial data caching is performed, based on satellite data caching hints received from the satellite network. As discussed above, such hints may relate to the relevance or demand of the content, usage or policies at the satellite network, geographic restrictions, and the like.

At operation 2230, a content flow is established between terrestrial and satellite network (and cache storage locations in such network), based on resource availability. Such resource considerations may relate to bandwidth, storage, or content availability, as indicated by hints or predictions.

At operation 2240, one or more geofencing restrictions are identified and applied for particular content. For example, based on geographic locations of a satellite network, data producer, data consumer, and regulations and policies involved with such locations, content may be added, unlocked, restricted, evicted, or controlled according to geographic area.

At operation 2250, the caching location of content may be coordinated between a satellite edge data store and a terrestrial edge data store. Such coordination may be based on geofencing restrictions and rules, content flow, policies, and other considerations discussed above.

### Satellite Connectivity Roaming Architectures

As will be understood, many of the previous scenarios involve the use of multiple LEO satellites, which may result in inter-operator roaming as different satellite constellations move in orbit and into coverage of a user's geographic location. In a similar way that a mobile user today moves from network to network with user equipment and may roam onto other service provider networks, it is expected that satellite constellations will move into and out of position and thus offer the opportunity for users to roam among different service provider networks. In the context of edge computing, such satellite constellation roaming adds an additional level of complexity, as not only network connectivity but also workloads and content need to be coordinated.

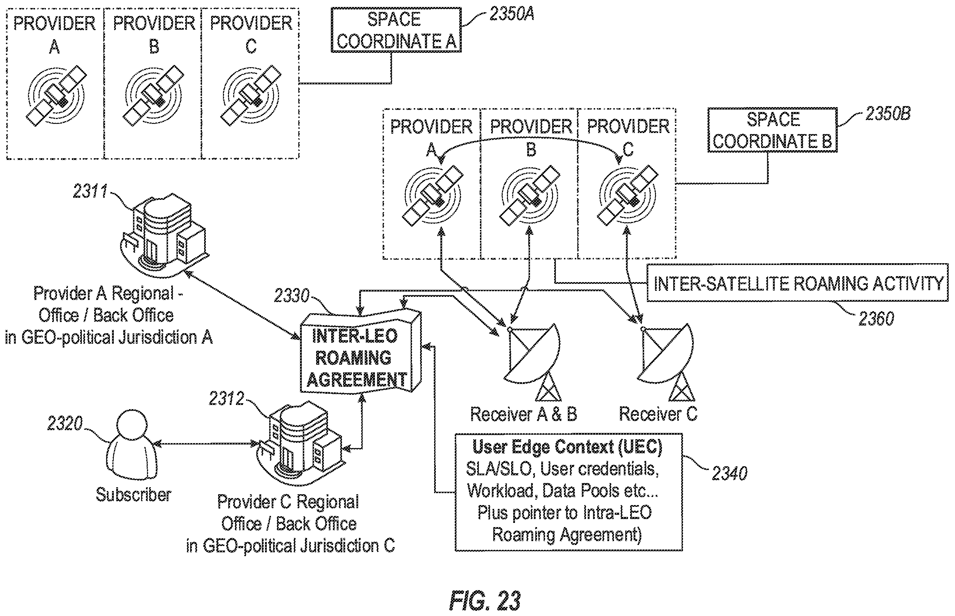

FIG. 23 illustrates a system coordination of satellite roaming activity among satellite providers, for roaming among different geo-political jurisdictions and types of service areas. Specifically, this system illustrates how a subscriber user 2320, who has an agreement for connectivity and services with a primary provider C 2312, uses an inter-LEO roaming agreement 2330 to also access the networks from provider A, B, and C. With this configuration, inter-operator roaming may be coordinated in space where LEO satellites in the same space orbit coordinates use the roaming agreement 2330 to load balance or to achieve other useful resiliency / availability objectives.

Roaming agreements may follow the pattern currently used where carriers in adjacent regions agree (through legal contract) to route traffic to the peer carrier when a peer network is discovered. The SLA for the user 2320 reflects the contractual arrangements made in advance. This may include alternative rates for similar services provided by the peer carrier. In addition to traditional roaming agreement approaches, LEO satellite roaming may include various forms of load balancing, redundancy and resiliency strategies. Different carriers' satellites may have differing hosting capabilities or optimizations, one for compute, one for storage, one for function acceleration (FaaS), etc. The roaming agreement may detail these differences and rates charged when used in a roaming configuration. The overall value to the user is latency between inter-LEO satellites in close proximity in space means a greater portion of the workload could be completed in space - avoiding a round-trip to a terrestrial Edge hosting node.

In an example, a roaming agreement is established to authorize cross-jurisdictional sharing of Edge resources. This is provided with the use of a User Edge Context (UEC) data structure 2340. The UEC 2340 relates several pieces of context information that helps establish the effective satellite access via roaming agreements that in space may be physically co-located and over any number of countries' air space. Such locations of the satellites may be determined based on space orbit coordinates, such as coordinates A 2350A and coordinates B 2350B.

Space coordinates are determined by three factors: (1) orbital trajectory, (2) elevation from sea-level, (3) velocity. Generally, these three are interrelated. The elevation determines the velocity required to maintain the elevation. Trajectory and velocity determine where the possible points of collision may occur. It is expected that carriers working to establish roaming agreements will select space coordinates that have the same factors then adjust them slightly to create a buffer between them.

In further examples, autonomous inter-satellite navigation technology can be used by each satellite to detect when a roaming peer is near or within the buffer where refinements to the programmed space coordinates are applied dynamically and autonomously. Thus, with use of this framework, inter-satellite roaming activity 2350A may also be tracked and evaluated.

In a further example, a UEC may be configured to capture premium use cases that follow specific SLA considerations, such as for use with Ultra-Reliable Low-Latency Communication (URLLC) SLAs. For instance, a SLA portion of UEC may be adapted to comprehend a priority factor, to define a priority order of available networks. If a UE (device) has line-of-sight connectivity and is allowed to access multiple terrestrial and non-terrestrial networks, a set of predetermined factors can help the UE prioritize which network to select. For instance, a terrestrial telco network where the UE is located may have first priority, then perhaps followed by licensed satellite network options. Some satellite subscribers may pay for premium service, whereas others may just have standard data rate plans connected to their UE. The UE SIM card would have this priority information and work with the UEC on SLA Priority. A similar example may include a premium user who wants the best possible latency and pays for this access in their UE SIM which is connected to their UEC SLA.

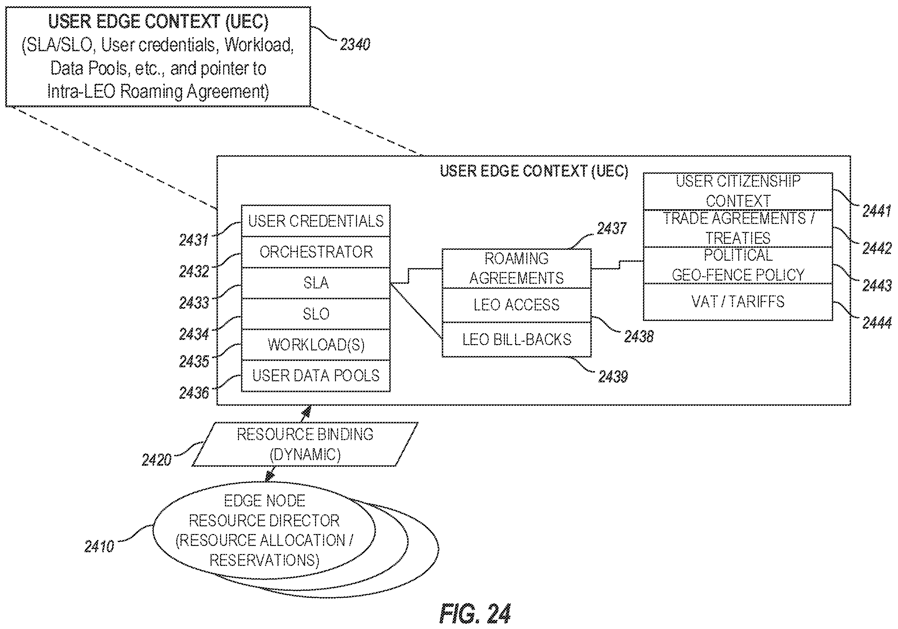

FIG. 24 illustrates additional information of a UEC data structure for coordinating satellite roaming activity, providing additional details for the UEC 2340 discussed above. It will be understood that the following data fields or properties are provided for purposes of illustration, and that additional or substitute data fields may also be used.

The UEC 2340 is depicted as storing information relevant to a user context for edge computing, including user credentials 2431, orchestrator information 2432, SLA information 2433, service level objective (SLO) information 2434, workload information 2435, and user data pool information 2436. In an example, the SLA is tied to roaming agreement information 2437, LEO access information 2438, and LEO billing information 2439.

In a further example, the roaming agreement information 2437 may also include or be associated with a user citizenship context 2441, trade agreement or treaty information 2442, political geo-fence policy information 2443, and taxation information (such as relating to value added tax (VAT) or tariffs) 2444. With an implementation of the UEC 2340, a geo-fence is logically applied such that existing treaties and geo-political policies can be applied.

The UEC is a data structure 2340 that exists independent of a currently executing workload. Nevertheless, there is a binding phase 2420 that relies on the UEC 2340 to allocate or assign resources in preparation for a particular workload execution.

For instance, consider a scenario where an associated SLA 2433 contains context about tax liability for a given provider network. The roaming agreement provides additional context where an international treaty or agreement may include VAT taxes. The UEC 2340 includes references to applicable geo-fence and VAT contexts so that a roaming agreement between LEO satellites from different provider networks can cooperate to supply a better (highly available) user experience.

In further examples, a UEC can add value within a single provider network. In a single provider network the UEC 2340 may provide additional context for applying geo-fence policies that are tied to country of origin, citizenship, trade-agreements, tax rates, etc. A single provider network might provide workload statistics related to the various aspects of workload execution to identify optimizations where compute, data, power, latency, etc. are possible. The provider may modify space coordinates of other LEO satellites in its network to rendezvous with a peer satellite as a way to better load balance, improve availability and resiliency or to increase capacity.

In further examples, the SLA 2433 data of the UEC 2340 may be used to comprehend a priority factor. For instance, in a scenario where a UE (device) has line-of-sight and is allowed to access multiple terrestrial and non-terrestrial networks, predetermined factors help the UE prioritize which network to select. A terrestrial telco network where the UE is located may have first priority, then perhaps licensed satellite network options. Some satellite subscribers may pay for premium service whereas others may just have standard data rate plans connected to their UE. The UE SIM card may provide this priority and work with the UEC 2340 on SLA Priority. In such an example, the user context is stored in the SIM rather than being stored in a central database, and the Edge Node / Orchestrator can access the SIM directly rather than opening a channel to a backend repository to process a workload.

As noted above, another example may be that a premium user wants the best possible latency, similar to or better than terrestrial fiber, via the satellite network. The user may pay for and indicate this access in their UE SIM card which is connected to their UEC SLA. The speeds expected in space may be faster than some terrestrial networks, even fiber optical networks, so use of the UEC 2440 may provide a fastest lowest latency connection for point-to-point (e.g., when data connections are established to locations on opposite sides of the earth). For these and other scenarios, the SLA 2433 may be adapted to include a preferred order of available networks.

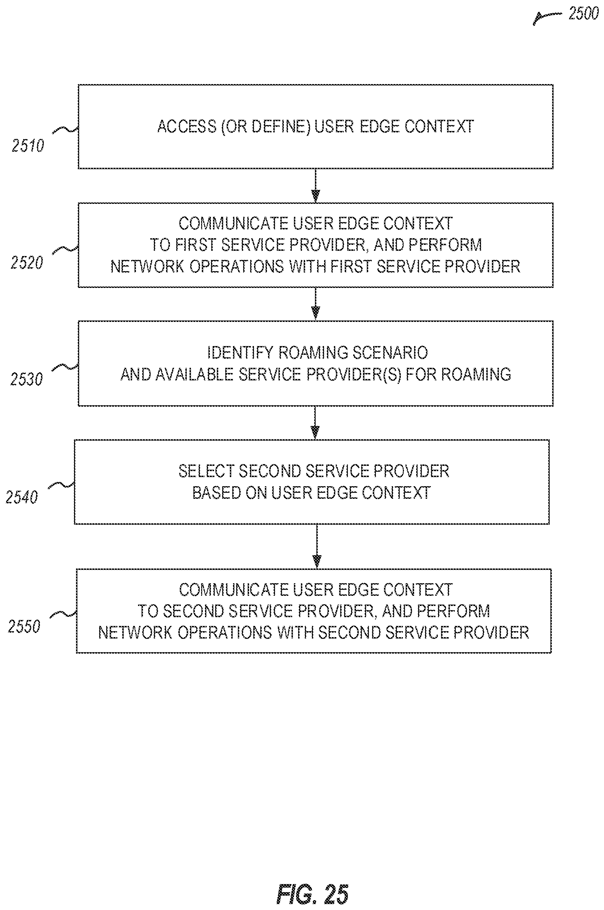

FIG. 25 illustrates a flowchart 2500 of a method of using a user edge context for coordinating satellite roaming activity. The operations of this method may be performed by operations at end user devices, satellite constellations, service providers, and network orchestrators, consistent with the examples provided above.

At operation 2510, a user edge context is accessed (or newly defined) for use in a satellite communication network setting. This user edge context may include the data features and properties discussed with reference to FIGS. 23 and 24. At operation 2520, this user edge context is communicated to a first service provider of a satellite network (e.g., a satellite constellation), enabling the end user device to perform network operations consistent with the accessed or defined context.

At operation 2530, a roaming scenario is encountered and identified, and information on available service providers for roaming is further identified. In an example, the roaming scenario involves a first satellite constellation moving out of range of a geographic area including the end user device, and a second satellite constellation moving into range of the end user device. Other scenarios (involving service interruptions, access to specific or premium services, preferences or SLA considerations) may also cause roaming.

At operation 2540, a second service provider (e.g., another satellite constellation) is selected to continue satellite network operations in a roaming setting, based on the information in the user edge context. At operation 2550, the user edge context is communicated to the second service provider, and network operations are commenced or continued according to the information in the user edge context.

### Internet of Things Drone - Satellite Communication Architectures

In certain use cases, an end user may be interested in using devices for monitoring remote areas for changes in the environment, or connecting to such devices for deploying a status update or even software patching. The use of satellite connectivity enables a robust improvement to the usage of IoT devices and endpoints that are deployed in such remote settings.

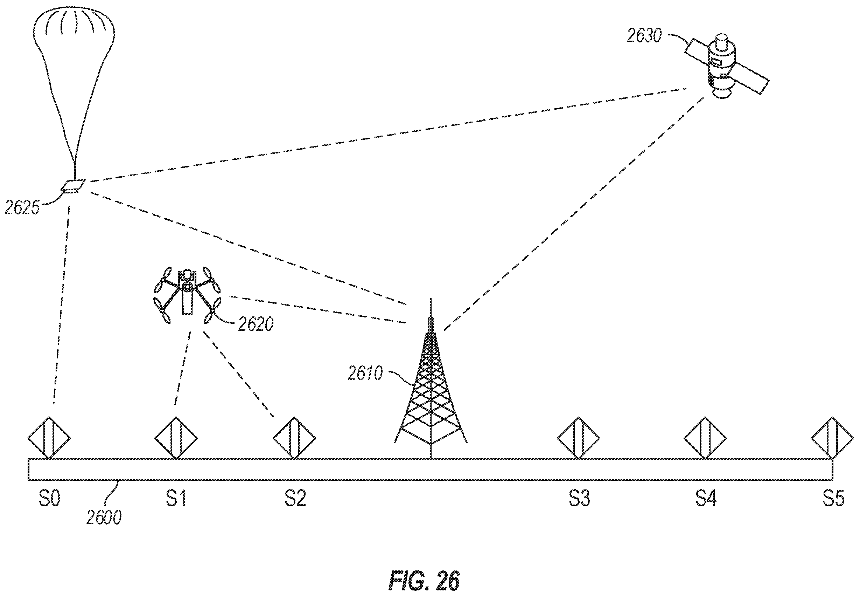

FIG. 26 illustrates an example use of satellite communications in an internet-of-things (IoT) environment. This figure illustrates an oil pipeline 2600 that is running for a long distance in a remote environment. The pipeline 2600 is outfitted with several sensors (sensors S0-S5) to monitor its health. These can be physical sensors attached to the pipeline, a camera watching the environment, or a combination of sensor technologies. These sensors are often deployed at a high rate on the pipeline. In addition, every few miles, the operator might decide to deploy a more sophisticated monitoring station. The sensors on the pipeline do not have dedicated network connectivity but are constantly sampling data. The sensors (or the monitoring stations) can cache the data locally and even perform analysis that can predict when maintenance is required.

FIG. 26 further shows the placement of sensors S0 through S5. In this setting, there is a 5G/4G radio access network 2610 where information and analytics are performed on sensor data with edge computing. Here, data collected by the sensors is fed into analytics that can detect and predict failure. For instance, an algorithm to detect pipeline failure can look at sensor data indicating the flow of oil in the pipeline. However, the rate of flow in addition to other factors such as weather conditions are important for the prediction of failure. Extreme weather conditions monitored in the past and predicted into the future can play an essential role in determining when the next maintenance needs to happen.

In an example, a drone 2620, balloon 2625, or another unmanned aerial vehicle (UAV) can be equipped with data obtained directly via from the satellite 2630 (or satellite radio access network 2630 via the radio access network 2610), such as a map highlighting the locations of the sensors. The drone 2620 or balloon 2625 can travel to collect the data from the sensors, and then communicate it back to the radio access network 2610 for processing. Further, the satellite radio access network 2630 may relay the information to other locations, not shown.

In the example pipeline monitoring scenario, the data can include any or all of the following:
(a) Previous data collected at that sensor or other sensors that are relevant;
(b) Weather forecast data or any data that is essential for the analytics;
(c) Algorithm updates if needed (e.g., to enable an update of an algorithm that can generate a local prediction);
(d) Software updates including security patches;
(e) Data from other sensors that the drone is collecting on its way that might be relevant to the edge node.

Each of the sensors can also be coupled to a local edge node (e.g., located at the radio access network 2610, not depicted) that has the following responsibilities:
(a) Collect and cache data locally from the sensor or a collection of sensors;
(b) Perform analytics on the data collected from the sensor to determine the health of the pipeline and future maintenance;
(c) Communicate an analytics outcome to other sensors in its vicinity/range of connectivity;
(d) Patch its own software from a model update to security patches.

Operators can rely on satellite communication to the radio access network 2610 to deliver software, collect data, and monitor insights generated at the edge. In addition, a further processing system (e.g., in the cloud, connected via a backhaul to the satellite 2630) can also predict when the sensors will no longer be in range and accordingly dispatch a drone with detailed mapping optimizing its route to deliver data (e.g. weather forecast), software updates (e.g. model update, security patch, ...). Such information may be coordinated with the information centric networking (ICN) or named data networking (NDN) approaches discussed further below.

The route used by the drone 2620 or balloon 2625 may also be optimized to collect data from sensors that are out of range whose data is essential to generate an insight. For example, S2 is out of range to S0, however the data collected at S2 is a requirement for S0 to predict its maintenance schedule. The drone 2620 will then choose a route that will get it in range with S2, collecting data from that node and its sensors. The drone would then proceed to S1 providing the data collected from S2 and any additional delivery intended for S0. Each of the edge nodes (e.g., the edge nodes at the sensors S0-S4) obtains a dedicated storage reservation on the drone that is protected with keys for authentication and a policy to determine which of the other edge nodes are allowed access to read and/or write.

For this use case, the analytics executed on the mobile node (e.g., a UAV such as drone 2620 or balloon 2625) may be focused on route selection and mapping of data collection and transmission. However, this mobile node might not have enough compute power to execute its own predictive analytics. In this scenario, the UAV would carry the algorithm to be executed, collect the data from the edge node/sensor, execute the algorithm, generate an insight and transmit it back to the cloud (e.g., via satellite 2630) where actions can be recommended and performed.

Or, in another example, the UAV may collect data for processing at an edge computing node located at the radio access network 2610. For instance, a UAV may use EPVC channels depending on the criticality of the data, and use ICN or NDN techniques in case they the UAV does not know who can process the data. Other combinations of mobile, satellite, and edge computing resources may be distributed and coordinated based on the techniques discussed herein.

In further examples, rather than relying on condition maintenance techniques, the following predictive maintenance approach may be coordinated through the collection of device and sensor data through satellite connections. Thus, despite the remote nature of sensor deployments, the satellite connections (direct or via a drone or an access network) can be used to provide data to a predictive data analytics service, which can then proactively schedule service operations.

A combination of coordinating the satellite communications along with continual data collection supports new levels of criticality for real-world things to be monitored on the ground. The collection of data may be coordinated by a data aggregation device, a gateway, a base station, or access point. Likewise, the type of satellite network may involve one or multiple satellite constellations (and potentially one or multiple cloud service providers, services, or platforms accessed via such constellations).

Also in further examples, criticality may be identified in via the IoT monitoring data architecture. For example, suppose some monitoring data value is identified that is critical, and which requires some action or further processing to occur. This criticality can be correlated with the position or availability of a satellite network or constellation, and what types of network access are available. Likewise, if some critical action needs to be taken (such as communicating important data values), then these actions may be prioritized for the next period of time that a relevant satellite crosses into coverage.

In further examples, a UAV and other associated vehicle or mobile systems may also be coordinated in connection with predictive monitoring techniques. A computer system that is running predictive analytics and predictive maintenance may be coordinated or operated at the drone, as a drone may bring connectivity as well as compute capabilities. Likewise, the drones may be directly satellite connected themselves.

The connectivity among sensors, drones, base stations, and satellites may be coordinated with multiple levels of processing and different forms of processing algorithms. For example, suppose one sensor that identified that something is wrong, but does has not enough compute power or the correct algorithms to do the next layer level of processing. This sensor may use the resources it has (such as a camera) to capture data, and communicate this data to a central resource when a satellite is available for connectivity. Any of these connectivity permutations may be tied back to a quality of service offered and managed within a satellite communication network. As a similar example, in response to a sensor malfunctioning, satellite communications may be used to deploy a new algorithm. (Thus, even if the new algorithm is not as highly accurate and as the previous one, the new algorithm may be tolerant of the absence of the malfunctioning sensor).

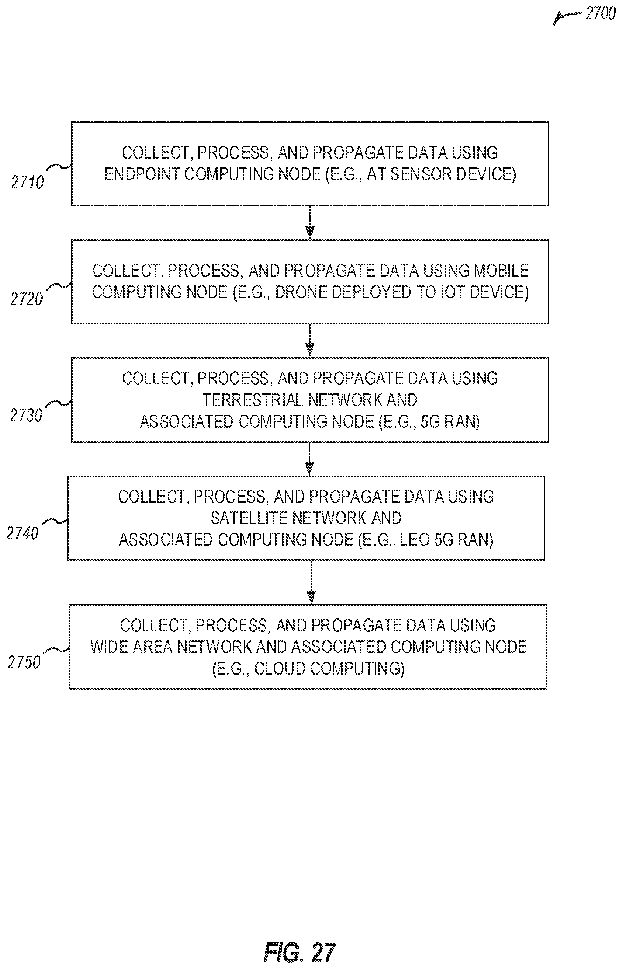

FIG. 27 illustrates a flowchart 2700 of a method of collecting and processing data with an IoT and satellite network deployment. Here, a sequence of operations may be performed based on the type of computing operation, available network configurations, and considerations for connectivity and latency.

At operation 2710, operations are performed to collect, process, and propagate data using edge computing hardware at an endpoint computing node (e.g., located at an IoT device). At operation 2720, operations are performed to collect, process, and propagate data using edge computing hardware at a mobile computing node, such as with a drone deployed to an IoT device. At operation 2730, operations are performed to collect, process, and propagate data using a terrestrial network and an associated edge computing node, such as at a 5G RAN, connected via a satellite backhaul.

At operation 2740, operations are performed to collect, process, and propagate data using a satellite network and an associated edge computing node, whether at the satellite or terrestrial edge computing node connected to the satellite link. At operation 2750, operations are performed to collect, process, and propagate data using a wide area network and associated computing node (e.g., to a cloud computing system).

It will be understood that other hardware configurations and architectures may be used for accomplishing the operations discussed above. For instance, some IoT devices (such as meter reading) work on best effort attempts; whereas other IoT devices/sensors need reliable, low latency notifications (e.g., a shipping container humidity sensor being monitored in real time to indicate theft). Thus, depending on the hardware and use case application, other operations and processing may also occur.

Any of these operations may be coordinated with the use of EPVC channels and ICN/NDN networking techniques discussed herein. In still further aspects, approaches for IoT device computing may be coordinated via satellite network connectivity.

### Coordination and Planning Data Transfers across Satellite Ephemeral Connections

One of the challenges in new generations of moving satellite constellations is that the amount of compute and data transfer capacity offered by such constellations will depend on geo-location that they will cover. An end-to-end system involving many LEO satellites, in orbit, therefore results in a lack of full connectivity and high bandwidth connections all the time. As a result, two primary types of data transfers and processing need to be coordinated: a) between the satellites forming a cluster/coalition/constellation (e.g., to minimize data transfer needed - such as when summary information can be sent, and to ensure that data is not duplicated); and b) between a cluster of satellites and the ground stations (to identify when and which satellites communicates what data) - while considering the possibly of handoff to another satellite or ground station.

In these scenarios, two different decisions can be considered for service continuity: (1) a decision of whether to perform some compute locally (with longer duration and use of scarce resources) or to wait to transfer the data to the ground and "offload" computation during the time that a satellite is flying over a zone; and (2) a decision of when is the best moment to transfer data from the satellite to the ground. Both decisions will depend on at least the following aspects: a duration of covering a particular zone with connectivity; an expected up and downlink on that zone; potential data or geo-constraints; and potential bandwidth dynamicity depending on the connectivity provider.

The following provides adaptive and smart mechanisms to address the previous points and provide a smart architecture to anticipate actions to be performed. Furthermore, even though the resources on the individual satellites might be resource constrained (e.g., a limited number of GPUs available, power budget, etc.), such resources can be accounted for when producing an efficient and holistic plan. There are no current satellite connectivity approaches which fully consider the dynamic aspects of data transfer in geolocations tied into a robust quality of service. Moreover, the trade-off of offload versus local compute in moving satellites has not been fully explored.

To address these aspects, the following provides planning and coordination-not only for data and connection management, resource allocation, and resource management, but also from a processing order standpoint. For example, consider a ground control and satellite processing system producing a joint plan to determine a) where to look for some data action (e.g., positioning cargo ships) b) what kind of processing (e.g., detect a number of cargo ships), and c) how much bandwidth/storage resources/processing are required to send data back (e.g., even if analyzing images to determine just the number of cargo ships).

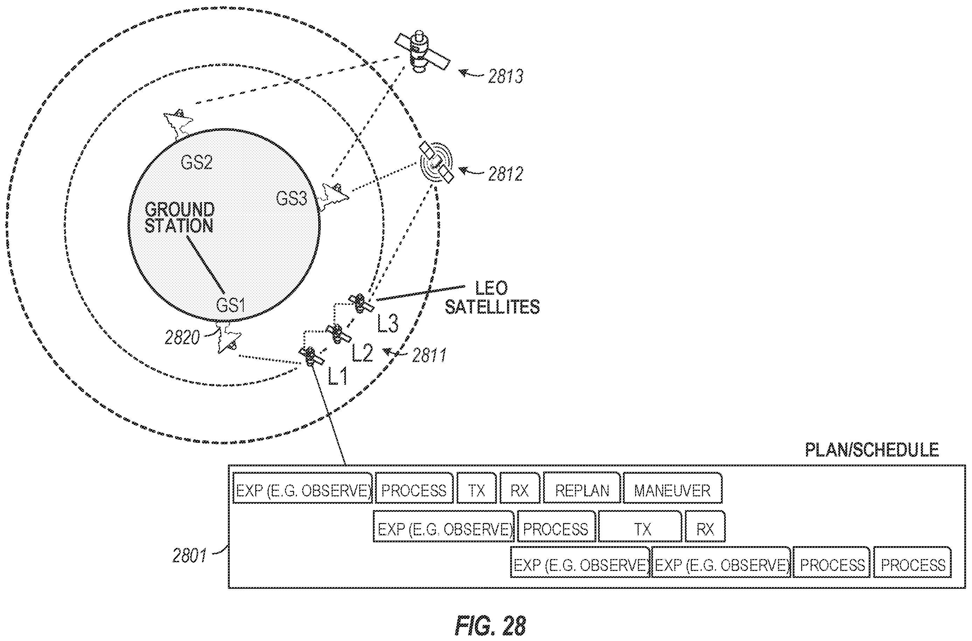

FIG. 28 illustrates an example satellite communication scenario implementing a plan for ephemeral connected devices. Here, a plan 2801 defines a schedule for communication and processing actions among different satellites 2811, 2812, 2813. In this example scenario, the goal is to observe a set of container ships in port to determine capacity, every orbit that the satellites 2811, 2812, 2813 fly over (albeit at a slightly different angle); process the images; and send back summary information (such as the number of ships, whether some object was identified, etc.) Each entity in the end-to-end systems keeps track of the plan/schedule 2801 and its role in processing and data communications.

In an example, the plan/schedule 2801 can include: What experiment or scenario to perform (e.g., where to look at based on current trajectory; what sensors (image, radar, ...) to use; etc.); what data to process/store; what to transfer to what other entity; and the like. Boundary conditions of the plan can be shared among the entities on a need-to-know basis. For example, satellites that belong to same entity can share all planning detail; an anonymized description can be shared with satellites or compute nodes from other service providers.

Use of a plan and schedule supports negotiation/sharing of constraints to get most efficient overarching plan (including from a resource usage, monetary cost, return on investment (ROI) or total cost of ownership (TCO) perspective). Thus, the plan/schedule can be self-optimized or provided by an entity such as the ground station/operator. Further, elements in the plan can have mixed criticality; some elements may be unmovable/unnegotiable; others may be deployed on best efforts (e.g., "do action whenever possible"). It will be understood that negotiation among the various system satellites, ground stations, customers, and other entities to develop the plan and schedule usage of the plan provides a unique and robust approach which far exceeds conventional techniques for planning. In particular, by considering multiple stakeholders, a global optimal plan can be developed, even as minimal required information is shared and privacy is protected among systems.

Example constraints in the plan/schedule 2801 that are relevant to satellite connectivity and operation may include:
a) Location information, such as to determine or restrict what experiments and tasks are possible (or, whether the task needs to wait for next orbit).
b) Order of the tasks
c) Hardware limits (e.g., GPU limits, indicating an inability to process two processing jobs at same time)
d) Restriction on number of tenants or different customers at same time (e.g., for data privacy)
e) Deadlines to perform data transfers
f) Connectivity conditions (such as when up/downlink not available; coordination among different types of LEO/GEO/ground networks)
g) Coordination of satellite or processing technologies that work together (e.g., overlay radar (obtained from a GEO satellite) with thermal imaging (obtained from a LEO satellite))
h) Resource restrictions (e.g., Power/Storage/Thermal/Compute restrictions).
i) Geo-fencing or geographic restrictions.

In further examples, the plan may be used to pre-reserve compute or communication resources in the satellites depending on what usage is expected. Such a reservation may depend also on the cost that will be charged depending on the current reservation.

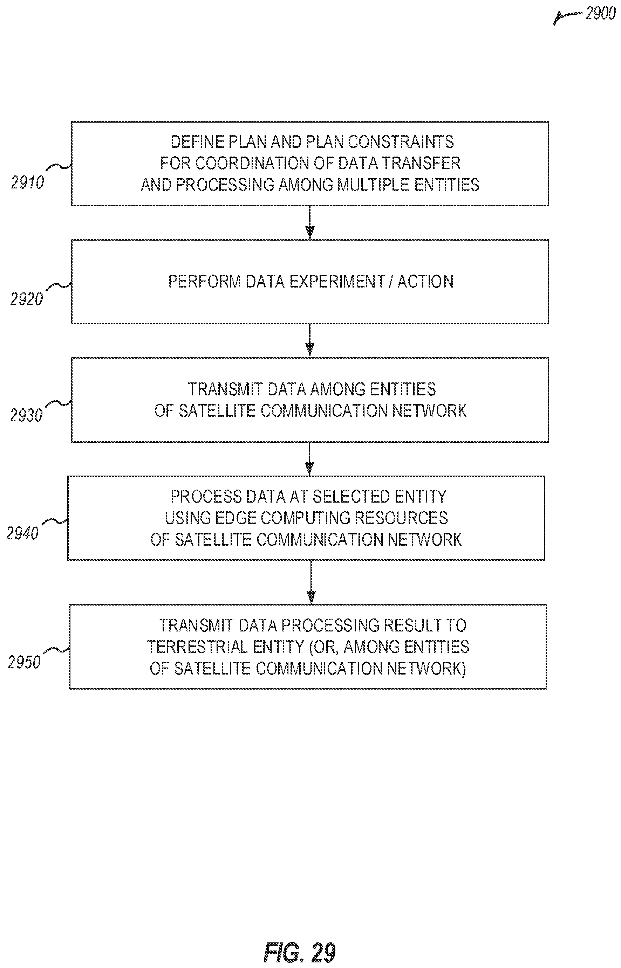

FIG. 29 illustrates a flowchart 2900 of a method of defining and planning satellite network computing operations, in an orbiting, transitory satellite communications network deployment. Here, a sequence of operations may be performed based on the type of computing operation, available network configurations, and considerations for connectivity and latency.

At operation 2910, a plan and its plan constraints are defined (or, obtained) for the coordination of data transfer and processing among multiple entities. At operation 2920, a data experiment, action, or other scenario involving the coordinated data transfer and processing is invoked. For example, this may be a request to initiate some workload processing action.

At operation 2930, data is transmitted among entities of satellite communication network, based on the plan and the plan constraints. Likewise, at operation 2940, data is processed at one or more selected entity using edge computing resources of the satellite communication network, based on the plan and plan constraints.

The flowchart 2900 concludes at operation 2950 by transmitting the data processing result to a terrestrial entity, or among entities of the satellite communication network. Various aspects of handover, processing and data transfer coordination, and communications among satellites, constellations, and ground entities are not depicted but also may also be involved in the operations of flowchart 2900.

In further aspects, approaches for scheduling and planning satellite network computing operations may be coordinated and executed. Also, in further aspects, other aspects of resource expenditure not relating to monetary considerations may also be considered (such as constraints and usage of battery life, memory, storage, processing resources, among other resources).

### Satellite and Edge Service Orchestration based on Data Cost

New Digital Services Taxes (DST), proposed and implemented by the Organization for Economic Co-operation and Development (OECD) and European Commission, have been defined to tax services which use data generated from user activities on digital platforms from a certain country, that then are used on other countries. For example, such a tax applies to data collected from users of a service in Italy (e.g., user engagement data) that helps provide better recommendations to similar profiled users in another country (e.g., for video or music recommendations). This leads to a clear problem in the context of satellite connectivity networks: each country has their own tax rate, so from an economic perspective it is important to be able to select the best fit for services provided by a satellite infrastructure, which has more geographic coverage than traditional static infrastructures.

Likewise, edge computing has to increasingly deal with both data producer and data consumer mobility, while also considering caching, securing, filtering, transforming data on the fly, and dynamic refactoring of mobile producer resources and services. This is particularly the case for content and services hosted/cached at satellites both LEO/NEO and GEO orbits. Accordingly, with the following techniques, data cost may be used as an additional variable while orchestrating services via satellite connections.

For example, based on resource usage tied to monetary cost, and considering that the satellites are travelling all the time across multiple geographic locations, a service scheme may be defined to use services which incur less taxes or service fees for each specific location. Services using specific user datasets will be labeled with their location and cost in order to determine the best or most effective option, in case there are several services offering the same service. Thus, data consumers, users, and service providers may evaluate trade-offs between cost, quality of service, etc., while complying with data taxation or other cost requirements.

In an example, new components are added to LEO Satellites and Ground Stations (e.g., base stations) to implement a new type of geo-aware orchestration policies. This includes configuration of the system to allow the inclusion of location and data cost as new tags as part of a service's metadata, in order to identify economically advantageous services running in LEO satellites considering their geographic positions. For instance, a system orchestrator running on ground stations may use this configuration to select an optimal service considering financial cost as a key element, but also taking into account the factors required for orchestration of satellites (e.g., telemetry, SLAs, transfer time, visible time, processing time). In the event that a less expensive service (e.g., with less tax) is expected to become available in a next coming satellite (in range shortly; e.g., in 5 minutes), and this next cheaper service will fulfill an SLA, the orchestrator will wait to use the next satellite.

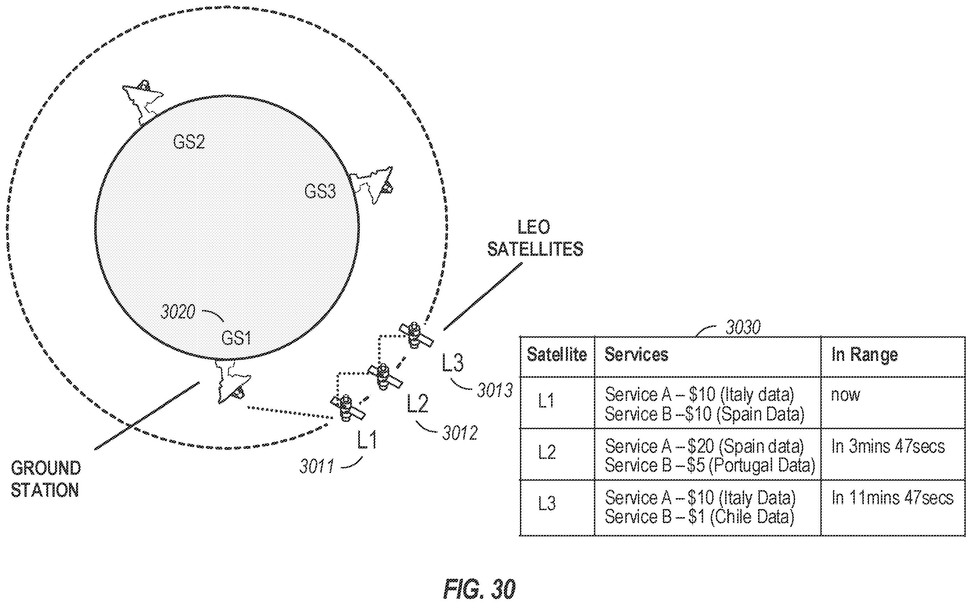

A simple example of a cost-selected service is a CDN service, offering data from specific geographic origins which is associated with a known data cost and tax rate. Other types of data workload processing services, cloud services, and interactive data exchanges may occur between a data consumer and data provider. This is depicted with the example satellite communication scenario of FIG. 30, involving a ground station GS1 3020, choosing to accessing one of satellites L1 3011, L2 3012, L3 3013, for network connectivity, data content, or data processing purposes.

In an example scenario, suppose that GS1 3020 located in France requires the use of Service A and B, having to achieve use of the service in 5 minutes (to satisfy an SLA). An orchestrator (at the ground station, or a controlling entity of the ground station) evaluates satellites in range during the max available time (5 minutes), as illustrated in evaluation table 3030. In this situation, Satellite L1 3011 and L2 3012 are the only satellites in range in the next five minutes, and also capable of satisfying the service requirement.

Evaluation is then performed of the following services and options, considering cost:
Option 1: L1 Service A + L1 Service B: $20; time: ~ 2 secs.
Option 2: L1 Service A + L2 Service B: $15; time: ~3mins 49 secs.
Option 3: L2 Service A + L1 Service B: $30; time: ~3mins 49 secs.
Option 4: L2 Service A + L2 Service B: $25; time: ~3mins 49 secs.

From this evaluation, connectivity via option 2 (L1 Service A and L2 Service B) is selected, providing a lowest cost across use of multiple satellites and services. (Note: taxes are often charged from the total revenue, but in the table above it is represented as an amount per transaction for purposes of simplification).

A catalog service running on the Satellite Edge will include a new API to receive updates about services' metadata. Inter-satellite links may be used for such updates, as satellites will advertise updates (deltas) so ground stations can have this information before the satellite is in range. Additionally, and in case it is permitted by the SLA, it may be possible to transfer or handoff processing actions to specific locations of ground stations, such as stations having more compute power and lower costs. The access to such ground stations and the results from such ground stations can be transported by any available LEO Satellite passing over it.

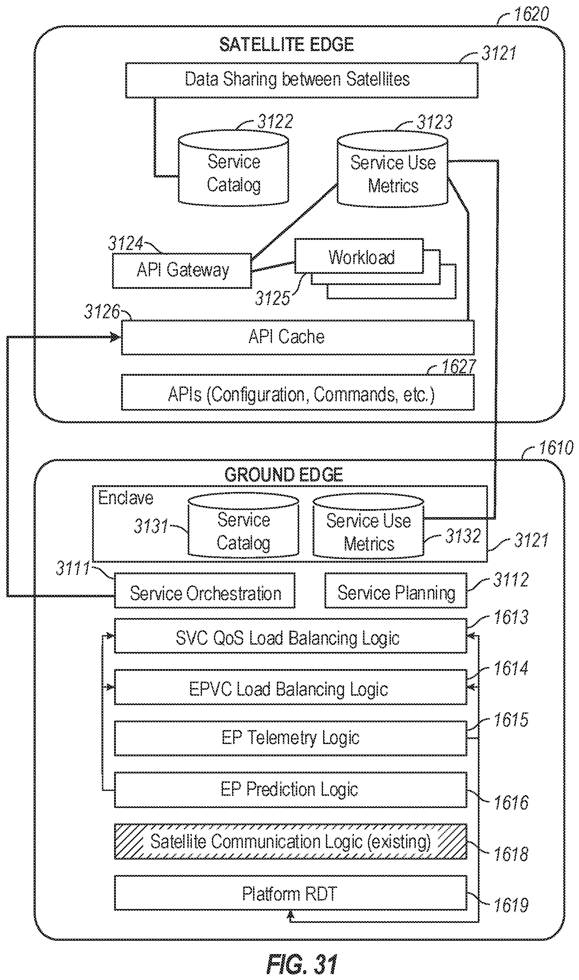

FIG. 31 depicts the framework of FIG. 16 which is extended for use with the presently disclosed cost evaluation. In an example, the ground Edge components 1610 are extended include a Service Orchestrator 3111, a Service Planning component 3112, and a Secure Enclave 3121 elements. At the service orchestrator 3111, each Ground Station 1610 continuously receives information from Satellites (e.g., service information maintained in a Service Catalog 3131, and service use information maintained in Service Use Metrics data store 3132) that is required to orchestrate services and take decisions to identify the optimum resource cost (e.g., monetary cost) for accessing services. The service orchestrator 3111 may temporarily activate, deactivate, or adjust usage of services depending on locations and available capacity. The Service Planning component 3112 provides a helper module generating API Gateway configurations required to provide a mapping of services per location (e.g., based on orchestrator analysis).

The Secure Enclave 3121 is configured for protecting sensitive or private financial information. In an example, the Secure Enclave 3121 may not be managed by a software stack, but is only managed or accessible by authorized personnel.

In an example, Satellite Edge components 1620 include an API gateway 3124, managing the execution of workloads 3125, and also providing an abstraction to services based on the location. This gateway receives location as an argument and returns the result of the service having a reduced resource cost (e.g., monetary cost). This is performed based on the configuration provided by the Service Planning component 3112, which is invoked from edge devices. This module may be covered by the local API Cache 3126. The satellite edge components 1620 also include a Data Sharing 3121 between satellites, used to keep the service catalog 3122 up to date on each satellite (such as through transmission of data delta changes), and to populate service use metrics 3123.

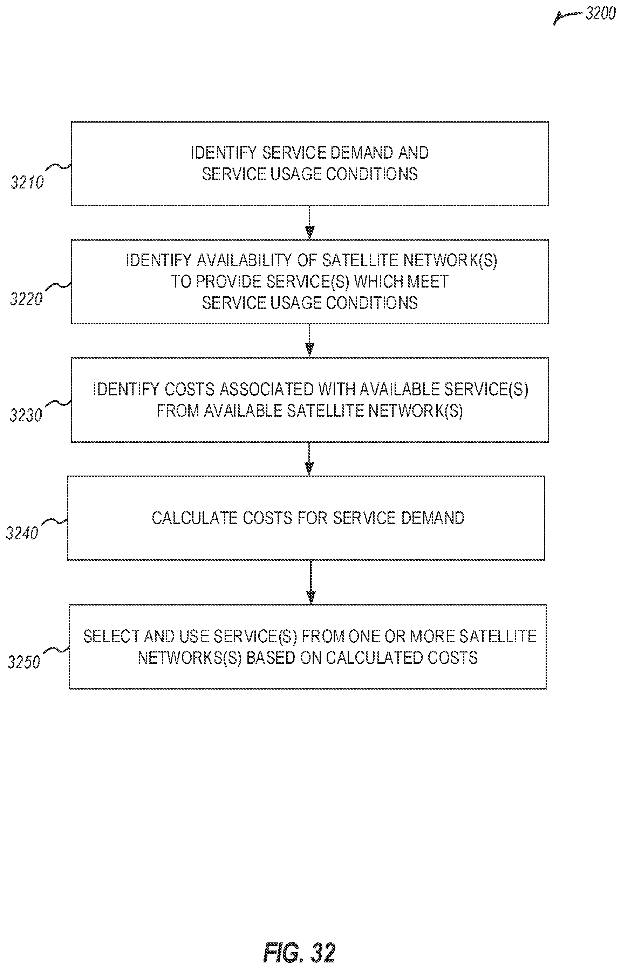

FIG. 32 illustrates a flowchart 3200 of a method of performing compute operations in a satellite network deployment based on cost. Here, a sequence of operations may be coordinated with orbiting satellites based on the type of edge computing operation, total end-to-end service costs, service use restrictions or constraints, and considerations for service level objectives.

At operation 3210, various aspects of service demand and service usage conditions are identified, in connection with potential demand and usage of a satellite communication network (e.g., by a terrestrial user equipment device). From such service demand and service usage conditions, operation 3220 involves identifying the availability of one or more satellite network(s) to provide service(s) that meet the service usage conditions.

At operation 3230, the costs associated with available service(s) from available satellite network(s) are identified. As noted above, this may include a breakout of such costs based on geographic jurisdiction, time, service provider, service actions to be performed, etc. At operation 3240, this information is used to calculate costs for fulfilling the service demand.

At operation 3250 one or more service(s) are selected for use from one or more satellite networks(s) based on calculated costs, and consideration of the various constraints and conditions. Additional steps, not depicted for purposes of simplicity, may include service orchestration, consideration of service use metrics, invocation of a service catalog and APIs, and the like.

In further aspects, approaches for IoT device computing may be coordinated via satellite network connectivity.

### Overview of Information Centric Networking (ICN) and Named Data Networking (NDN)

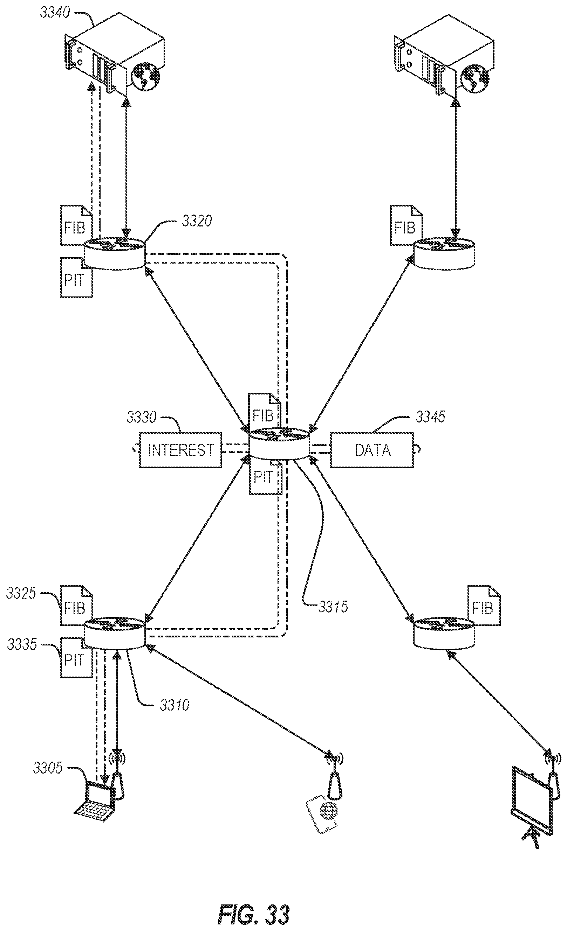

FIG. 33 illustrates an example ICN configuration, according to an examples. Networks implemented with ICN operate differently than traditional host-based (e.g., address-based) communication networks. ICN is an umbrella term for a networking paradigm in which information and/or functions themselves are named and requested from the network instead of hosts (e.g., machines that provide information). In a host-based networking paradigm, such as used in the Internet protocol (IP), a device locates a host and requests content from the host. The network understands how to route (e.g., direct) packets based on the address specified in the packet. In contrast, ICN does not include a request for a particular machine and does not use addresses. Instead, to get content, a device 3305 (e.g., subscriber) requests named content from the network itself. The content request may be called an *interest* and transmitted via an *interest packet* 3330. As the interest packet traverses network devices (e.g., network elements, routers, switches, hubs, etc.)-such as network elements 3310, 3315, and 3320-a record of the interest is kept, for example, in a pending interest table (PIT) at each network element. Thus, network element 3310 maintains an entry in its PIT 3335 for the interest packet 3330, network element 3315 maintains the entry in its PIT, and network element 3320 maintains the entry in its PIT.

When a device, such as publisher 3340, that has content matching the name in the interest packet 3330 is encountered, that device 3340 may send a data packet 3345 in response to the interest packet 3330. Typically, the data packet 3345 is tracked back through the network to the source (e.g., device 3305) by following the traces of the interest packet 3330 left in the network element PITs. Thus, the PIT 3335 at each network element establishes a trail back to the subscriber 3305 for the data packet 3345 to follow.

Matching the named data in an ICN implementation may follow several strategies. Generally, the data is named hierarchically, such as with a universal resource identifier (URI). For example, a video may be named www.somedomain.com or videos or v8675309. Here, the hierarchy may be seen as the publisher, "www.somedomain.com," a sub-category, "videos," and the canonical identification "v8675309." As an interest 3330 traverses the ICN, ICN network elements will generally attempt to match the name to a greatest degree. Thus, if an ICN element has a cached item or route for both "www.somedomain.com or videos" and "www.somedomain.com or videos or v8675309," the ICN element will match the later for an interest packet 3330 specifying "www.somedomain.com or videos or v8675309." In an example, an expression may be used in matching by the ICN device. For example, the interest packet may specify "www.somedomain.com or videos or v8675*" where '*' is a wildcard. Thus, any cached item or route that includes the data other than the wildcard will be matched.

Item matching involves matching the interest 3330 to data cached in the ICN element. Thus, for example, if the data 3345 named in the interest 3330 is cached in network element 3315, then the network element 3315 will return the data 3345 to the subscriber device 3305 via the network element 3310. However, if the data 3345 is not cached at network element 3315, the network element 3315 routes the interest 3330 on (e.g., to network element 3320). To facilitate routing, the network elements may use a forwarding information base 3325 (FIB) to match named data to an interface (e.g., physical port) for the route. Thus, the FIB 3325 operates much like a routing table on a traditional network device.

In an example, additional meta-data may be attached to the interest packet 3330, the cached data, or the route (e.g., in the FIB 3325), to provide an additional level of matching. For example, the data name may be specified as "www.somedomain.com or videos or v8675309," but also include a version number-or timestamp, time range, endorsement, etc. In this example, the interest packet 3330 may specify the desired name, the version number, or the version range. The matching may then locate routes or cached data matching the name and perform the additional comparison of meta-data or the like to arrive at an ultimate decision as to whether data or a route matches the interest packet 3330 for respectively responding to the interest packet 3330 with the data packet 3345 or forwarding the interest packet 3330.

In further examples, meta-data in an ICN may indicate features of terms of service or quality of service, such as is employed by the service considerations with the satellite communication networks discussed herein. For instance, such metadata may indicate: the geolocation that content was generated; whether the content is mapped into an exclusion zone; and whether the content is valid at a current or a particular geographic location. With this metadata, a variety of properties may be mapped into geographic exclusion and quality of service of a satellite communication network, such as using the techniques discussed herein. Also, depending on the QoS required in the PIT, the ICN network may select a particular satellite communication provider (or select another provider entirely).

ICN has advantages over host-based networking because the data segments are individually named. This enables aggressive caching throughout the network as a network element may provide a data packet 3330 in response to an interest 3330 as easily as an original author 3340. Accordingly, it is less likely that the same segment of the network will transmit duplicates of the same data requested by different devices.

Fine grained encryption is another feature of many ICN networks. A typical data packet 3345 includes a name for the data that matches the name in the interest packet 3330. Further, the data packet 3345 includes the requested data and may include additional information to filter similarly named data (e.g., by creation time, expiration time, version, etc.). To address malicious entities providing false information under the same name, the data packet 3345 may also encrypt its contents with a publisher key or provide a cryptographic hash of the data and the name. Thus, knowing the key (e.g., from a certificate of an expected publisher 3340) enables the recipient to ascertain whether the data is from that publisher 3340. This technique also facilitates the aggressive caching of the data packets 3345 throughout the network because each data packet 3345 is self-contained and secure. In contrast, many host-based networks rely on encrypting a connection between two hosts to secure communications. This may increase latencies while connections are being established and prevents data caching by hiding the data from the network elements.

In further examples, different ICN domains may be separated, such that different domains are mapped into different types of tenants, service providers, or other entities. The separation of such domains may enable a form of software-defined networking (e.g., SD-WAN) using ICN, including in the satellite communication environments discussed herein. Additionally, ICN topologies, including what nodes are exposed from specific service providers, tenants, etc., may change based on geo-location, which is particularly relevant for satellite communication environments.

Example ICN networks include content centric networking (CCN), as specified in the Internet Engineering Task Force (IETF) draft specifications for CCNx 0.x and CCN 1.x, and named data networking (NDN), as specified in the NDN technical report DND-0001.

NDN is a flavor of ICN that brings new opportunities for delivering better user experiences in scenarios that are challenging for the current IP-based architecture. Like ICN, instead of relying upon host-based connectivity, NDN uses interest packets to request a specific piece of data directly (including, function performed on particular data. A node that has that data sends it back as a response to the interest packet.

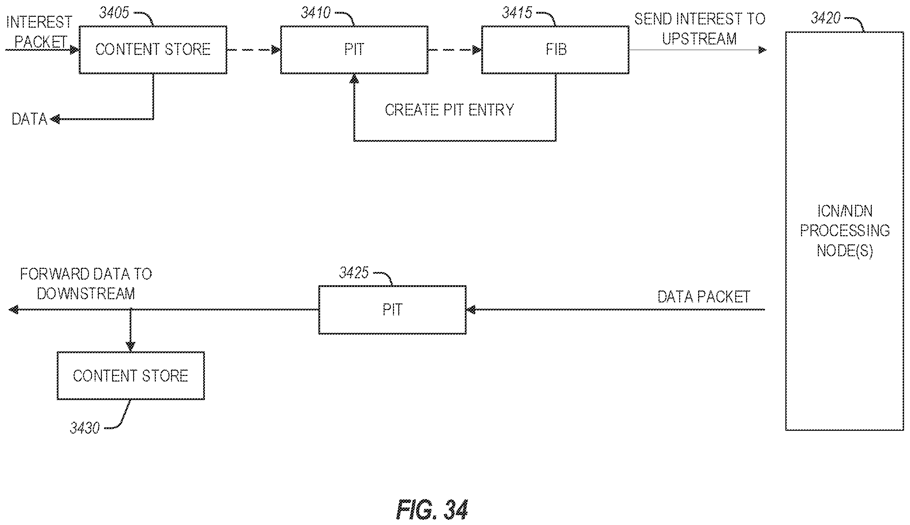

FIG. 34 illustrates an illustrates a configuration of an ICN network node, implementing NDN techniques. NDN is an ICN implementation providing a design and reference implementation that offers name-based routing and that enables pull based content retrieval and propagation mechanisms. Each node or device in the network that consumes data (e.g., content, compute, or a function result) or some function to be performed sends out an interest packet to its neighboring nodes connected through physical interfaces (e.g., faces), which may be wired or wireless. The neighboring node(s) that receive the data request (e.g., interest packet) will go through the sequence shown in FIG. 34 (top), where a node searches its local content store 3405 (e.g., cache) first for a match to the name in the interest packet. If successful, content will be returned back to the requesting node. If the neighboring node does not have the requested content in the content store 3405, it adds an entry, that includes the name from the interest packet and the face upon which the interest packet was received, to the Pending interest Table (PIT) 3410 waits for the content to arrive. In an example, if an entry for the face and the name already exist in the PIT 3410, the new entry may overwrite the present entry or the present entry is used and no new entry is made.

After the PIT entry is created, a look up occurs in the Forwarding information Base (FIB) table 3415 to fetch the information about the next hop (e.g., neighbor node face) to forward that interest packet. In case no FIB entry is found, this request may be sent out on all available faces, except the one upon which the interest packet was received, or the request may be dropped and no route NACK (negative acknowledgement) message will be sent back to the requester. On the other hand, if the neighboring node does have an entry in the FIB table 3415 for the requested information, it forwards the interest packet further out into the network (e.g., to other NDN processing nodes 3420) and makes an entry in its Pending Interest Table (PIT).

When the data packet arrives in response to the interest, the node forwards the information back to the subscriber by following the interest path (via the entry in the PIT 3425, while also caching the data at the content store 3430) as shown in the bottom of FIG. 34. Generally, the PIT entry is removed from the PIT 3425 after the data packet is forwarded.

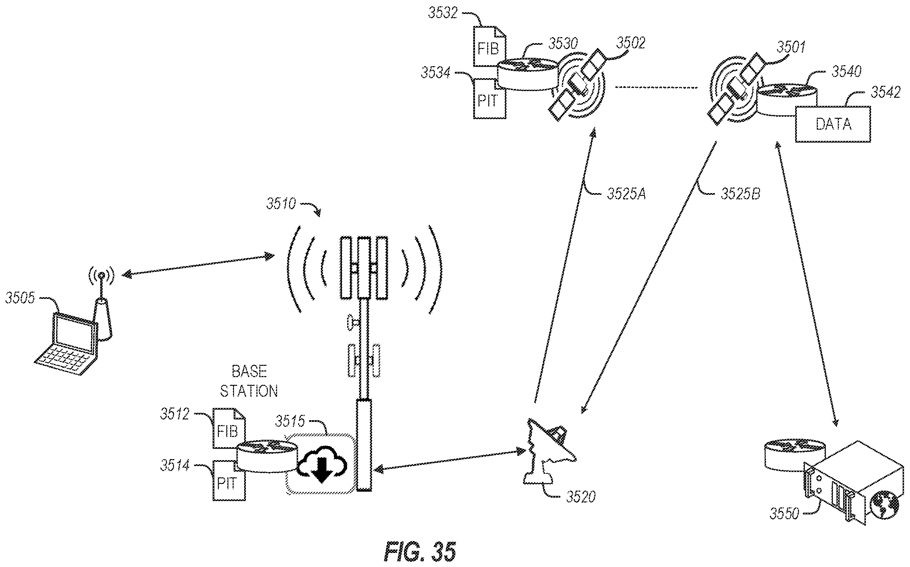

FIG. 35 illustrates an example deployment of ICN (e.g., NDN or NFN) techniques among satellite connection nodes. Here, an endpoint node 3505 uses a radio access network 3510 to request data or functions from an ICN. A ICN data request is first processed at a base station edge node 3515, which checks the content store on the base station edge node 3515 to determine whether the requested data is locally available. When the data is not locally available, the data request is logged in the PIT 3514 and propagated through the network to the satellite communication network in accordance with the FIB 3512, such as via an uplink 3525A to check a data source 3530 at the satellite 3502 (e.g., a content store in the satellite 3502). In the depicted scenario of FIG. 35, data 3540 is available further in the satellite network, at a node 3540 (or, even at a further data node in the network, such as at ground location 3550). The NDN operates to use a downlink 3525B from satellite 3501 to provide the data 3542 back to base station edge node 3515, and then back to the endpoint node 3505. The NDN may use domains, metadata, and other features communicated via the NDN to identify and apply properties of the satellite communication network.

### Satellite Handover for Compute Workload Processing

As discussed above, with the use of many nodes on the ground connected to many satellites and satellite constellations orbiting the earth, a variety of connectivity use cases are enabled. It is expected that some LEO satellites will provide compute and data services to ground nodes in addition to pure connectivity, with the added challenge that LEO satellites will be intermittently visible to the ground nodes. In such a scenario, if a satellite is the middle of providing a service when it loses visibility to the ground node, it could result in disruption of the service and loss of intermediate results computed by the first satellite. This disruption may be mitigated or overcome with the following handover techniques, to coordinate data transfers and operations.

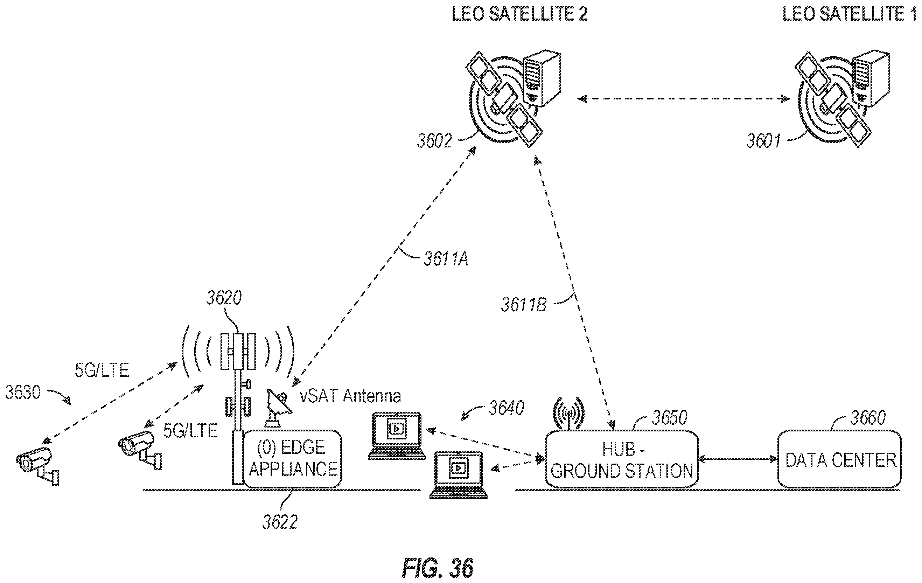

FIG. 36 illustrates a satellite connection scenario, enhanced with use of an ICN data handover. In this scenario, a number of devices 3630 (e.g., IoT devices) are connected via a wireless network to a base station 3620, which has an edge appliance 3622 for compute or data processing. The devices 3630 request the performance of some edge computing function, on a data workload, which cannot be processed locally at the appliance 3622 (e.g., due to limited resources at the appliance 3622, unavailability of a processing model, etc.). In response, the base station 3620 coordinates communication with a satellite 3602 of the LEO satellite communication network, using connection 3611A to request processing of the workload at a farther layer of the network (e.g., at satellite 3602, at ground station 3650, at data center 3660). In this scenario, however, due to the transitory nature of orbiting LEO satellites, the satellite 3602 will be unable to fulfill the data request before moving out of range.

As an additional description of such a scenario, consider a use case where the satellite 3602 is in the middle of sending data to a ground node 3622 or is in the middle of performing a compute service, but loses coverage of the ground node 3622 that it is communicating with. At some point a new satellite 3601 will be in view of the ground node 3622. However, the new satellite 3601 may not have the data that the ground node 3622 is requesting. Further, if it is a compute service, all the state and partial computations that the old satellite has does not exist with the new system.

Estimating when the satellite will be in coverage or out of coverage, and coordinating requests for such coverage among different satellites requires significant overhead. Therefore, the following proposes a scheme where the new satellite coming into view can pick up where the old satellite left off with minimum overhead.

The following uses a name-based scheme, like other ICN activities, where the user (e.g., client) requests the compute based on the name of the function (e.g., software function) and the data it needs to operate on. This may be referred to in some implementations as named function networking (NFN) or named data networking (NDN). Since the request is name-based, the name is not tied to any specific node or location. In this case, when the first satellite moves, and a second satellite comes in range, the compute request is just forwarded to the second satellite. However, rather than re-compute all the data, when a LEO satellite receives its first compute request from a new location, it asks for a data migration (e.g., "core dump", or container migration) of all relevant compute information from the old satellite.

The following provides a simple and scalable solution for performing compute services on the satellite. The handover technique does not need the overhead of predicting loss of coverage. Rather the system is triggered upon receipt of the first compute interest packet. The following also provides a development of a new type of interest packet that requests all materials related to compute services. This is not done by default since if the new satellite does not receive any compute requests, it does not request previous compute information. Additional security and other constraints can also be linked to which satellites get previous compute information and can perform compute.

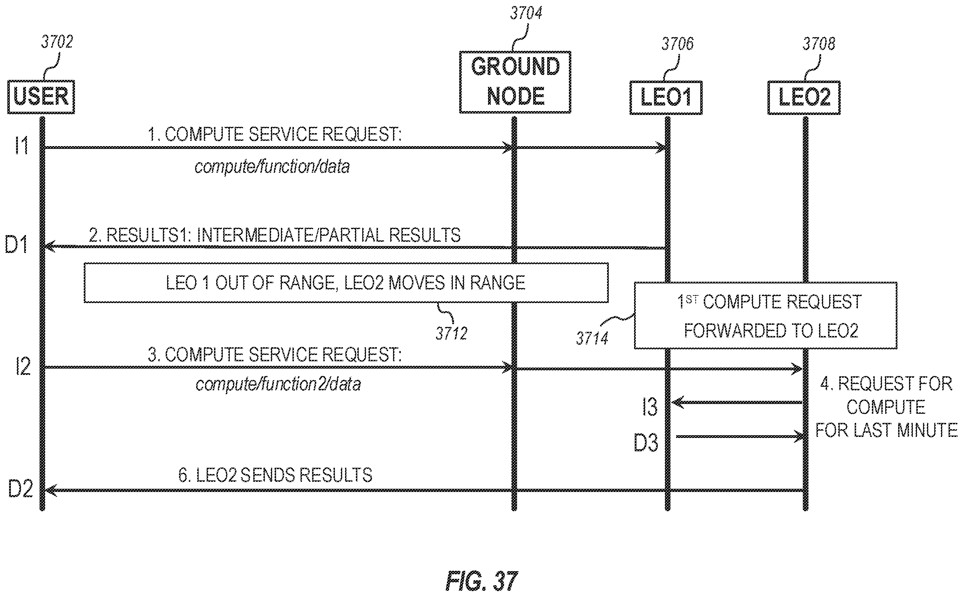

FIG. 37 illustrates an example connection flow for handoff in a satellite data processing scenario, among a user computing device 3702, a ground node 3704, and LEOs 3706, 3708. Although not depicted, this connection flow may be extended for the retrieval or processing of data at other locations further in the network (such as at a ground location accessible via the satellite communication network).

In the flow of FIG. 37, the user provides an initial compute service request (e.g., interest packet), for a compute action, function, or data, named in the service request at operation (1). The ground node 3704 forwards this to the LEO1 3706 for processing. At operation (2), the LEO1 3706 returns intermediate or partial results (e.g., a data packet with a name that can be matched to the name from the interest packet).

At time 3712, the LEO1 3706 moves out of range, followed by the LEO2 3708 moving into range. Based on this transition, the first compute request is forwarded to LEO2 3708 at time 3714.

The user provides a second compute service request, for the compute action, function, or data, at operation (3). The ground node 3704 now forwards this to the LEO2 3708 for processing. The LEO2 3708 provides a request to LEO1 3706 for a dump of compute information, for some time or other specification (e.g., for the last minute), and obtains such information from LEO 3706. The LEO2 3708 then sends back remaining results to the user 3702 in operation (4).

In further examples, the selection of LEO2 3708 can be based on existing routing and capacity planning rules. For instance, if LEO1 3706 has multiple options on what LEO2 3708 can select, it can use: (1) how much power capabilities are provided; (2) how much QoS features are provided; and (3) whether EPVC channels can be established back, according to a SLA. These factors may be included in the FIB of the LEO2 3708 to help determine upon which interfaces the requests will be sent.

In contrast to the handover approach depicted in FIG. 37, existing techniques do not provide a "reactive" service handover in a satellite framework. Further, session based services like TCP/IP are based on fixed end points and will not be able to support such functionality.

Other extensions to the handover technique depicted in FIG. 37 may be implemented. For example, this may involve coordination of end to end QoS, such as QoS approaches expanded to ICN (e.g., NDN or NFN) networks. Other considerations of key performance indicators (KPIs) and other complex, multi-constraint QoS considerations may also be involved. Other aspects may consider reliability as part of coordination and processing selection. For instance, reliability requirements or information may be used as part of the NDN/ICN request and taken into account with resource and route mapping.

Additionally, other network information (such as cellular network control plane information) may be used for a processing handover, considering that satellite technologies are planned as one of the radio access technologies in 5G and beyond. Here, the ground nodes (e.g., ground node 3704) are considered as part of the cellular network and connect the cellular base stations through either through wired (e.g. Xn interface) or wireless interfaces. If the satellite moves, the ground nodes can detect the movement and exchange the information with base stations which can smartly forward the consumers' request to the new satellite through the new ground node. Accordingly, coordination can also be used to handle data consumer or user movements.

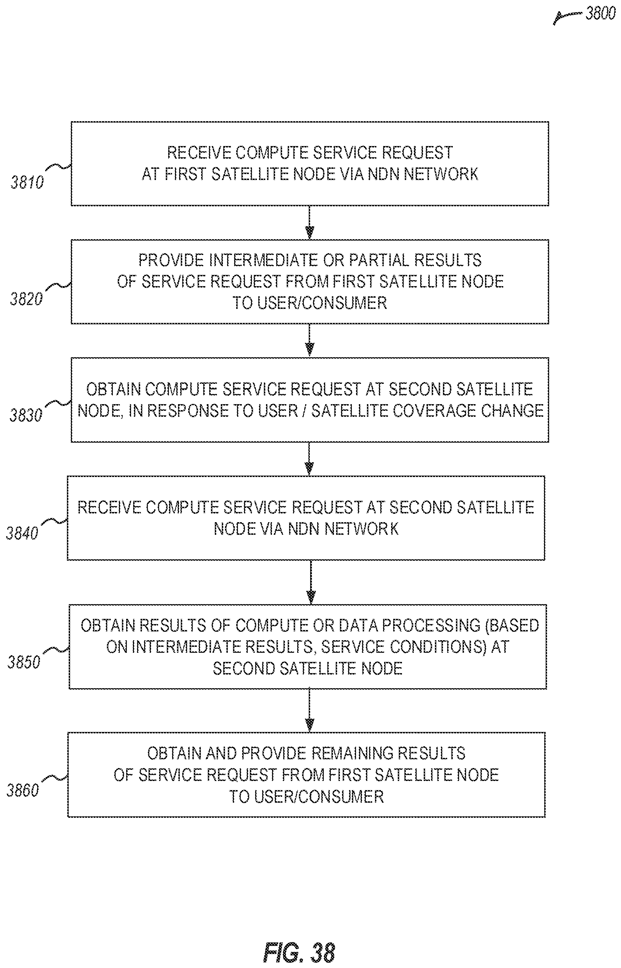

FIG. 38 illustrates a flowchart 3800 of an example method performed in a satellite connectivity system for handover of compute and data services to maintain service continuity, using an NDN/ICN architecture and service requests. Aspects of this method may be performed by: a user device (e.g., user equipment) that is directly or indirectly connected to a satellite communication network; a ground node (e.g., edge base station) connected or indirectly connected to the satellite communication network; the low earth satellites of the satellite communication network; or other orchestrators, gateways, or communication devices (including intermediate devices involved in NDN/ICN operation).

At operation 3810, a compute service request is received at (or, provided to) first satellite node via NDN/ICN architecture. This service request may involve a request for at least one of compute operations, function performance, or data retrieval operations, via the NDN/ICN architecture.

At operation 3820, intermediate or partial results of the service request are provided from first satellite node to a user/consumer (or, received from such node). For instance, the initial response to the service request may include partial results for the service request, as discussed above with reference to FIG. 37. These results may be delivered as a result of the first satellite note detecting or predicting its exit from a geo-space (square, circle, hexagon,...) area that is optimal for a terrestrial user. For instance, in an NDN/ICN setting, the first satellite node proactively identifies the second satellite node which is entering the geo-space and migrates its PIT and FIB entries (including those that are partially serviced).

At operation 3830, an updated (second) service request is obtained at (or, communicated to) a second satellite node, in response to user or satellite coverage changes. As noted above, this handover may occur automatically within the satellite network, such as from a first satellite to a second satellite of a constellation, based on geographic coverage information, or a state of the user connection.

At operation 3840, the updated service request is received at second satellite node via the NDN architecture, for the initial or the remaining processing results. Here, the second satellite node completes the partially serviced request using the migrated first satellite node context. In some examples, the terrestrial user is not aware of the handoff to the second satellite node, and thus the operations to perform the handoff remain transparent to the end user.

At operation 3850, the second satellite node operates to obtain results of compute or data processing for the service request (based on intermediate results, service conditions, or other information from the first satellite node).

At operation 3860, the remaining results of the service request (as applicable) are generated, accessed, or otherwise obtained, and then communicated from first satellite node to the end user/consumer.

In further examples, a ground node is involved to request, communicate, or provide data as part of the service request and the NDN operations. For instance, the ground node may be involved as a first hop of the NDN architecture, and forward the service request on to the satellite communication network if some data or function result cannot be provided from the ground node.

### Discovery and Routing Algorithms for Satellite and Terrestrial Links

As shown in the previous examples, an infrastructure node on the ground will be connected to (i) the LEO satellite(s), (ii) client devices over a wireless link, (iii) client devices over a wired link, and (iv) other infrastructure devices over wired and/or wireless links. Each of these links will have different delays and bandwidths. When it comes to a request for data, the decision on which link to use is more straightforward. The closest node with a shortest delay will make a good choice. However, if it is a compute request, the decision also has to be about the type of compute hardware that is available on the device, the QoS requirements, security requirements, and so on.

Leveraging name based addressing in ICN, the following presents enhancements that allow the system to perform discovery as well as select the best node/path for performing the service (routing and forwarding). In a satellite edge framework, different nodes will have different compute capabilities and resources (hardware, software, storage, etc.), the application will have different QoS requirements and priorities, and there may be additional policies enforced by the government or other entities.

To provide an example, it is possible that certain satellites have implemented security features while others have not. For instance, some of them may have secure enclave/trusted execution environment features while others do not. As a result, when an interest packet arrives at the base station, the base station has to make the decision on whether or not to forward it to the satellite link. There could easily be situations where even though the delay to the satellite is large, it has a much larger computing resource and will make a better choice for running a service compared to a ground node that is closer (and even has a high bandwidth).

The following proposes a multi-layer solution deciding where to forward the compute requests and how to use resources to compose services. This is applicable to the use of ICN or NDN, as there are routing as well as forwarding decisions that need to be made. The disclosed discovery mechanisms may help populate the routing tables or the Forwarding Information Base (FIB), and creates a map of links to available resources along with delays, bandwidth etc.

Because forwarding in an ICN is hop by hop, each time an interest packet arrives at a node, the node has to make a decision where to forward the packet. If the FIB indicates, for instance, three locations or links that are capable of performing the function, the forwarding strategy has to decide which of those three is the best option.

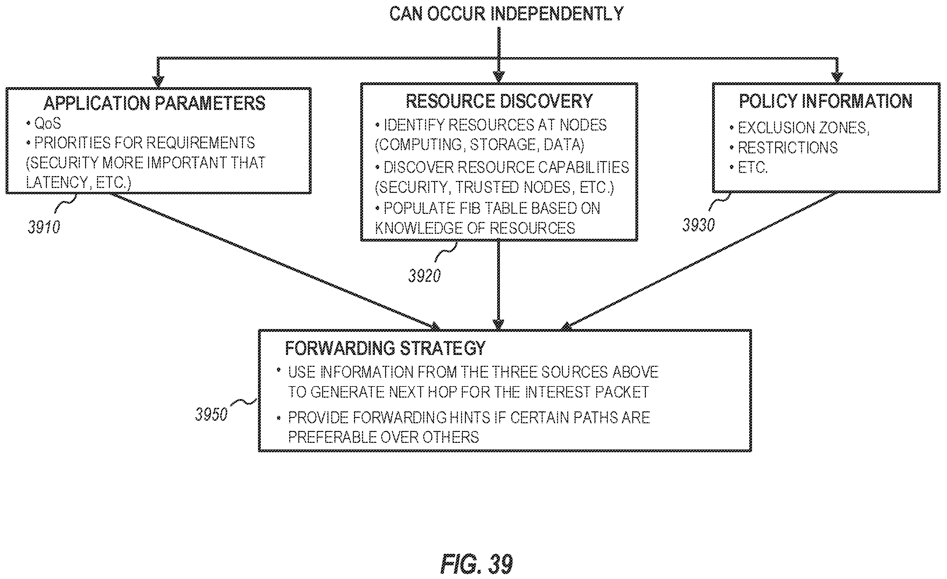

FIG. 39 depicts a discovery and routing strategy performed in a satellite connectivity system, providing a two-tier hierarchy of decision factors used for compute resource selection and use. Here, at the first tier, there is an application that provides its requirements and priorities, as application parameters 3910. The application may this information in an "application parameters" field of the interest packet. For instance, if security is the first priority, then the ground/base station will not forward the packet to the satellite even if it has the fastest compute, but does not have the security features. The interest packet can also indicate what parameters have some leeway and others that do not. For instance, if a client identifies that all the requirements need to be met, then the base station will not forward the packet (and may send a NACK depending upon implementation) if it believes there are no nodes that can meet all the constraints.

At the first tier, there is also resource discovery information 3920 obtained from identifying the relevant compute, storage, or data resources. Information on such resources, and resource capabilities, may be discovered and identified as part of a ICN/NDN network as discussed above.

In addition, at the first tier, there may be other local policies that need to be enforced that do not change dynamically. This is the policy information 3930 in the top layer.

The forwarding strategy layer 3950 uses inputs from all the three sources 3910, 3920, 3930, and then decides on the best path to forward an interest packet. At the strategy layer, policy overrides application requirements.

Once the forwarding strategy layer 3950 makes a decision on where to forward the interest packet, it has the option to provide "forwarding hints" to the other nodes as well. For instance, if a certain group of routes need to be avoided, it can indicate that in the forwarding hint. Thus, even though forwarding is hop by hop in ICN/NDN, the source node can provide guidance on routing for all the nodes to come.

In further examples, aspects of satellite area geo-fencing and QoS/service level considerations (discussed throughout this document) may be integrated as part of a forwarding strategy. Thus, a routing can include considerations not only on a SLA but as well on the interests or limitations for geographic locations.

Use of this approach provides a comprehensive solution for implementing QoS, Policies, security, and the like along with discovery and routing. This approach can support dynamically discovering resources which is important in the satellite edge. This approach enables the use of secure as well as non-secure satellite nodes and other compute resources. This approach also considers wireless delays and bandwidth in a comprehensive manner along with other parameters to make routing and forwarding decisions. In contrast, existing orchestration solutions rely mostly on static routing and resource frameworks.

LEO based routing may be adapted to construct a path that provides the end-to-end SLA including factors including Ground-Based Nodes, Active Satellite Based Nodes, hop-to-hop propagation delays, which hops are secure, which Inter-satellite links are on/off, and where the routing algo calculations will be performed. Ground-based algorithmic calculations of such routes can be more compute-intensive then in-orbit calculations; thus, an important factor may be hops are secure/or which hops use compression to get the best outcome depending on how fast the constellation needs to be updated.

Thus, even with ground-based routing calculations, a broad view of a space based network and characteristics of hops (secure/compression/etc.) can be evaluated to ensure SLA outcomes. Routes located on the ground also may be considered as part of the potential route to achieve the SLA outcome. (For instance, such as with the use of fiber optic networks and dedicated links on-ground, which provide high bandwidth and low latency). As an example, one route choice might be Sat1 → Sat2 → Sat3 → Sat 4, whereas another route choice could be Sat1 → Sat 2 → Earth route → Sat 4.

In further examples, overlays may be created for different tenants and exclusion zones. For example, to have different organizations or tenants that have different levels of trust to different type of routers or network providers. Further, with the use of credentials, levels of trust may be established for various routers (e.g., tied to different interest packets). Likewise, in further examples, concepts of trusted routing may be applied.

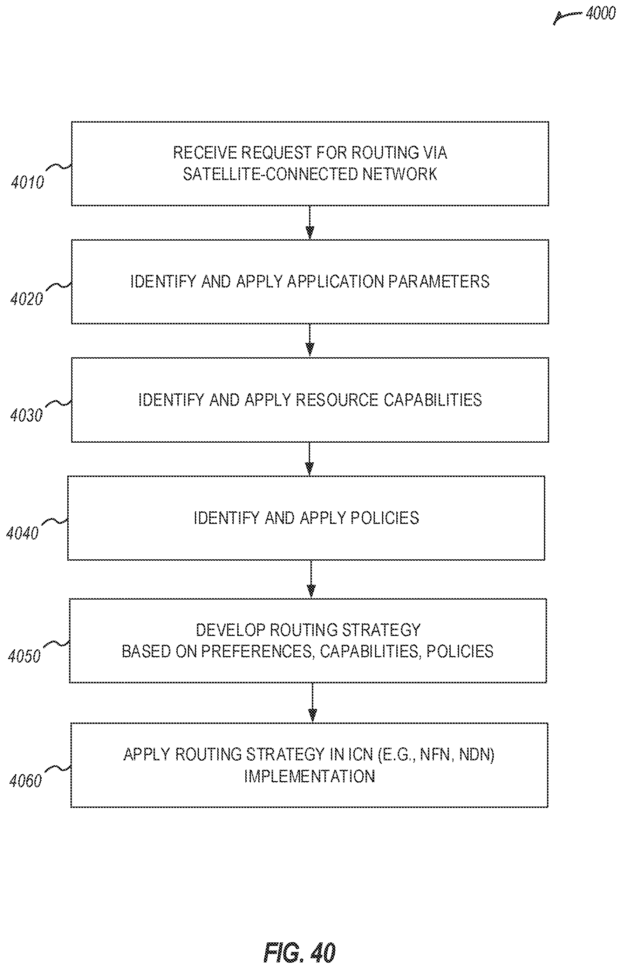

FIG. 40 depicts a flowchart 4000 of an example method for implementing discovery and routing approaches. This method may be implemented and applied in the ICN (e.g., NDN or NFN) architectures discussed above; however, this method may be implemented as part of other routing calculations for satellite communication networks.

At operation 4010 a request is received for data routing, involving a data connection via a satellite communication network. This request may be received at and the following steps performed by a ground-based infrastructure node connected to the satellite communication network, by user equipment directly or indirectly connected to the satellite communication network, or by a satellite communication node itself.

At operation 4020, one or more application parameters (including application preferences) are identified and applied, with such application parameter defining priorities among requirements for the data connection.

At operation 4030, one or more resource capabilities are identified and applied, with these resource capabilities relating to resources at nodes used for fulfilling the data connection.

At operation 4040, one or more policies are identified and applied, with such policies respectively defining one or more restrictions for use of the data connection

At operation 4050, a routing strategy (and routing path) is identified based on preferences, capabilities, policies. For instance, this may be based on the prioritization among: the priorities defined by the application parameters, the resource capabilities provided by the nodes, and satisfaction of the identified policies.

At operation 4060, the routing strategy is applied (such as in an ICN implementation), including with the use of the identified routing path(s) to generate a next hop of an interest packet, or to populate a FIB table. Other uses and variations may apply for use of this technique in a non-ICN network architecture.

### Satellite Network Packet Processing Improvements

The following disclosure addresses various aspects of connectivity and network data processing, relevant a variety of network communication settings. Specifically, some of the techniques discussed herein are relevant for packet processing performed by simplified hardware in a transient non-terrestrial network (e.g., low earth orbit (LEO) or very low earth orbit (VLEO) satellite constellation) network. Other of the techniques discussed herein are relevant to packet processing in terrestrial networks, such as with the use of network processing hardware at various network termination points.

In the context of many network deployments, service providers are embracing the use of Internet Protocol Security (IPSec) to secure the path of infrastructure traffic from Edge to Core. IPSec requires many packet modifications for each session flow requiring the use of packet processing engines adding latencies between the IPSec termination points, which impacts the ability for service providers to meet required <1ms 5G latencies.

In network applications such as IPSec, Datagram Transport Layer. Security (DTLS), etc., packets need to be modified (e.g., add or remove header, add or remove fields, encrypted or decrypted, authenticated) before packet transmission or after packet reception. For achieving the high throughput required by modern networking applications, a large number of dedicated network processing engines are required to operate in parallel. The following systems and methods significantly improve latency, power, and die area constraints by utilizing a command-template based mechanism that eliminates the need for multiple network processing engines to process and modify such packets.

The following provides an approach to reduce the latencies introduced with securing 5G edge-to-core traffic by using a single engine with predetermined packet templates instead of multiple packet engines. By reducing the number of packet engines, fewer arithmetic logic units (ALUs) are used, thus reducing network process design complexity, reducing circuitry area, reducing power, and ultimately allowing service providers to meet 5G latency requirements at the edge. In an implementation, ALU count is reduced by 64 fewer ALUs while allowing the performance of the same packet operations.

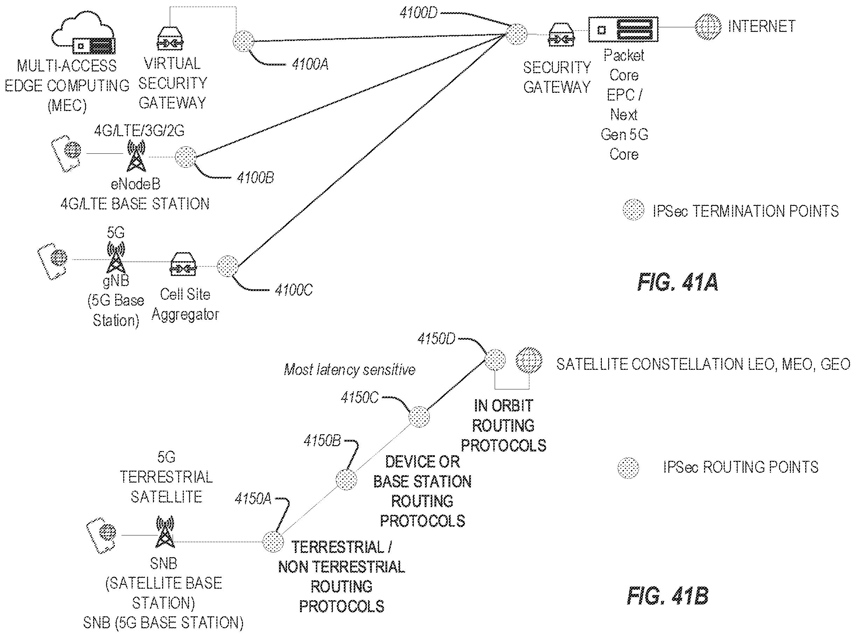

FIGS. 41A and 41B depict example terrestrial and satellite scenarios for packet processing. Specifically, FIG. 41A shows IPSec aggregation points 100A-D used in typical 4G/LTE and 5G networks, and FIG. 41B shows an example routing points 150A-D used in typical satellite communication networks. The following approaches reduce the overall complexity of handling necessary dynamic packet modifications while templating the standard modifications. This feature can be used in smartNICs, network processors, and in FPGA implementations, and provide significant benefits to use in satellite network processing.

In the context of FIG. 41A, without the use of a template packet modifier, higher latency will occur. This higher latency is due to multiple unique packet processing engines (e.g., up to 32 ALUs) and the time it takes for each packet processing engine to perform its respective operation. Thus, for IPSec used in 5G Edge-to-Core because of per packet modification, there may be approximately 64 modifications per approximately 30 flows. With use of the following Template PKT Modifier, latency is reduced by using a single packet engine with substitute templates, which only requires use of one common engine (e.g., 1 ALU).

Likewise, a latency sensitive environment is depicted in FIG. 41B. At the satellite constellation, an LEO:FSA algorithm (Finite State Automata) to determine maximum efficiencies of inter-satellite links may be used, with an Explicit Load Balancing (ELB) algorithm, allowing neighboring satellite entities to exchange information. Here, the LEO satellite network may also provide Priority Adaptive Routing (e.g., using a grid for a network shortest path).

Different templates may be used depending on location or type of routing to be performed. For instance, templates may include templates for extreme latency and minimal processing capabilities, such as with use of non-terrestrial in-orbit hardware processing having limited hardware capabilities, or at other limited hardware located at the network boundary, network access, or in-orbit. Without a template packet modifier, higher latency especially for in-orbit routing protocols can be experienced. In contrast, with the following template packet modifier, there is less latency and fewer hardware components via the use of a single packet engine. The use of a single packet engine with substitute template uses one common engine adaptable for routing based on location, whether in terrestrial or satellite networks.

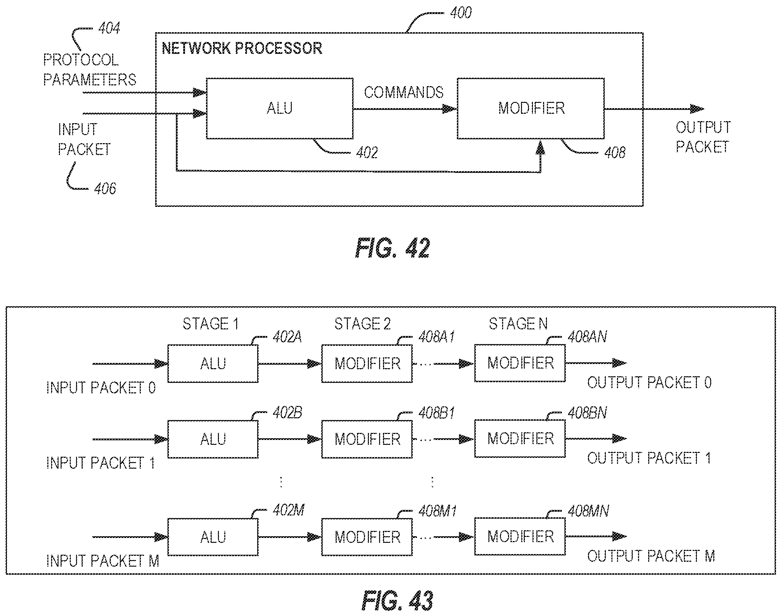

FIGS. 42 and 43 illustrate packet processing architectures used for edge computing, according to an example. FIG. 42 illustrates a conventional network processor 4200 used to perform operations on packets for network applications, such as IPSec or DTLS. The network processor 4200 includes an ALU 202 with a special-purpose instruction set. The ALU 4202 prepares commands at run time based on parameters obtained from the input packets 4206 and specific protocol setting 4204. The ALU 4202 provides the commands to the modifier circuit 4208 to perform the modification on the packets. A typical packet goes through multiple stages of such processing with each stage performing different functions on the packets before reaching the end of the processing pipeline.

To achieve high throughput, multiple packets are processed in parallel substantially simultaneously, with each pipeline requiring its own dedicated processing engine. The use of network processors arranged in parallel to perform such operations on the packets is shown in FIG. 43. Multiple ALUs 4202A-4202M operate on input packets. The packets are processed serially by modifier circuits 4208A1-AN, 4208B1-BN, ..., 4208B1-BN. Such a requirement of multiple network processing elements where each ALU 4202 generates commands at run time results in significant power consumption and silicon area in a typical system.

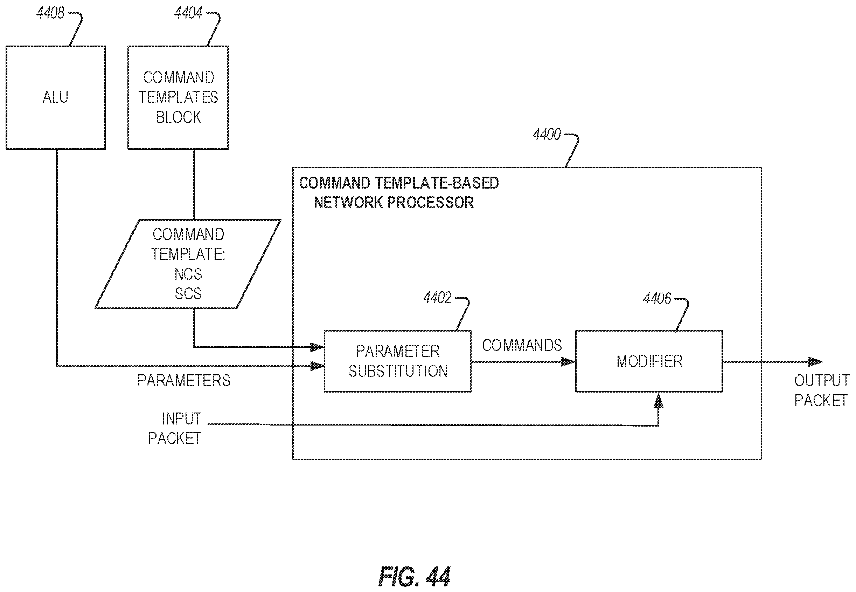

To overcome the drawback of each ALU generating commands at run time in the network processing system described above, a command-template based (CTB) network processor 4400 is provided in FIG. 44. The sophisticated ALU in FIG. 43, which generates commands for the modifier circuit 208 at run time, is replaced by a simple "parameter substitution" circuitry 4400 in FIG. 44 where commands for the parameter substitution circuitry 4402 are obtained from a command templates block 4404 with some parameter modification at run time.

The network processor 4400 of FIG. 44 implements a command-template based network processing method that substitutes pre-prepared commands with run-time parameters to efficiently process packets in networking applications. This results in the elimination of multiple packet processing engines (e.g., modifier circuitry 4208) and their replacement by a single engine (e.g., CTB network processor 4400). Such a solution is highly optimized from a latency performance, power, and area perspective.

The command templates block 4404, loaded during initialization, stores sets of command templates with pre-prepared commands. Each command template includes two sets of commands: the network command set (NCS) and the substitute command set (SCS). The network commands set includes commands to be used by the modifier 4406 in the CTB network processor 4400 to modify the packet. The substitute commands set includes commands used by the parameters substitution block 4402 to modify the network commands set before being sent to the modifier 4406 to modify packets.

The command-template based network processor 4400, based on the protocol, will select one template from the command templates block 4404, and the parameter substitution block 4402 will use the substitute commands set from the selected template to replace some fields in the network commands set using input parameters. The input parameters are received from an ALU 4408. The network command set is then sent to the modifier 4406 to make modification to the packets.

The parameters provided to the network processor 4400 are in fixed format as well as the templates. In this way, the parameter substitution block 4402 simply operates to copy parameters into the network commands set based on the substitute commands set. The command templates block 4404 is shared by all the network processors 4400. The parameters are prepared by the ALU 4408 at run time for each packet, and become part of the packet meta data passed from stage to stage.

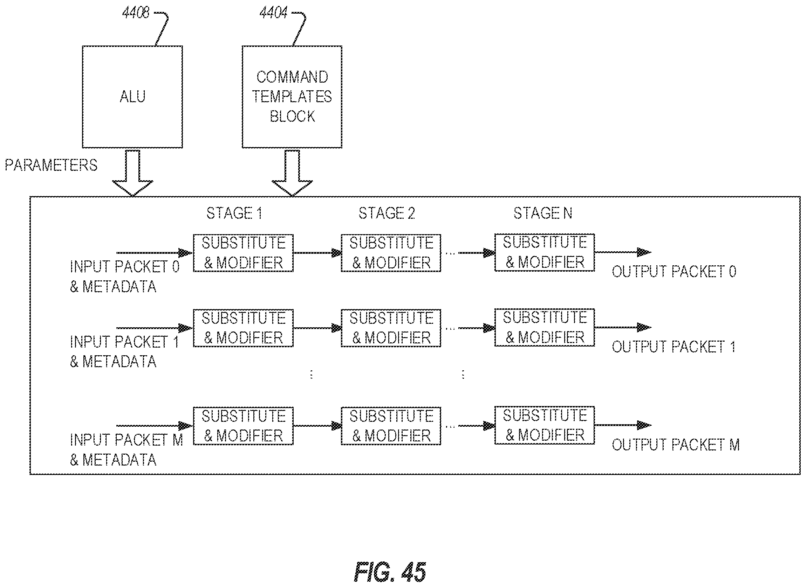

FIG. 45 depicts a typical system with multiple command template based processors, arranged to process input packets in parallel. At each stage, a template is used to provide the substitute command set, which is used to modify the network command set based on the ALU parameters. ALU parameters are fed into the pipeline and are available to each stage. A single template may be passed along and used at each stage. Alternatively, a template may be provided by the command templates block 4404 for each stage. The template may be one that designed for the particular stage.

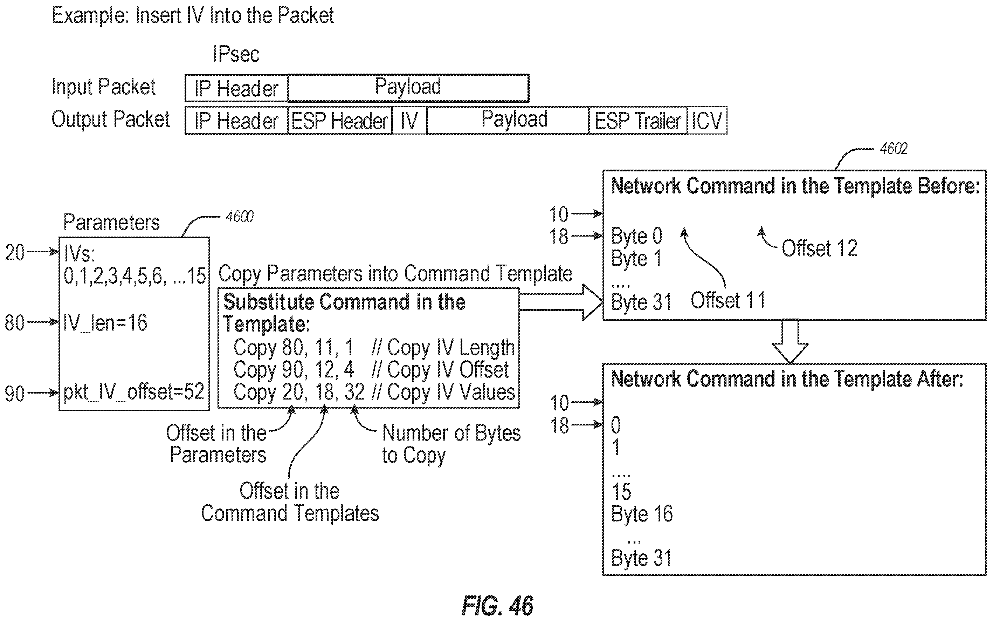

FIG. 46 provides a further network processing example, to illustrate the idea of a command template based network processing mechanism. In this example, a field called "IV" that has 16 bytes needs to be inserted into the packet at location offset 52. A set of parameters 4600 are provided by an ALU. The parameters 4600 include the 16-byte IV data, the IV length measured in bytes (i.e., 16), and the IV location in the packet of offset 52. These values for the IV field are in the parameters 4600 located at address 20, 80, and 90, respectively.

A template includes a network command 4602. The network command 4602 has an insert command to insert the IV located at offset 10 in the network command set 4602. The insert command has four fields, each 1 byte long except the pkt offset field which is 4 bytes long. The insert command is followed by 32 bytes, which are used to store up to 32 bytes of data. The cmd_len is the length of the current command, which is 40 bytes for this case. The valid_len is the actual IV length. The valid_len is updated by the substitution command with IV_len=16. In the insert command, the pkt_offset is the location in the packet where the IV values will be inserted, and in this case, it will be updated by the substitute command with a value of 52 (pkt_IV_offset value in the parameters 4600).

The substitution command format is simple: copy, source offset, destination offset, length. Thus, as illustrated in FIG. 46, the first COPY command is "COPY 80, 11, 1", which instructs the parameter substitution circuitry to copy the parameter at offset 80 from the parameters to the offset 11 in the network command portion of the template with a field size (or length) of 1 byte. Similarly, the COPY command "COPY 90, 12, 4" will copy the contents of the parameter at offset 90 to offset 12 in the network command, copying 4 bytes of data to that location in the network command.

The resulting network command will be used by the modifier, which, in this case, will insert 16 bytes of data at packet offset 52, and then advance to the next command which is 40 bytes away.

Accordingly, this command template-based network processing mechanism effectively substitutes pre-prepared commands with run-time parameters to efficiently process packets in high-performance networking applications. This eliminates the need for multiple network processing engines and requiring only one common engine. This may require far fewer ALUs and reduce the amount of time for processing.

Similar to the approaches discussed above for IPSec, this packet processing technique may apply to other various routing protocols including those used in satellite communication networks. LEO satellite network routing can be performed on the ground "off-line," and used for setting up the paths among satellite and ground nodes. However, constellation nodes are dynamic time variable due to orbital shifts, off-line nodes, and or exclusion zone servicing. Depending on how providers approach these issues, different protocols or satellite-to-satellite communication technologies (e.g., radio or laser) may be used, for example, to support use of inter satellite links (ISLs) or to service premium subscribers (like URLCC-ultra reliable low latency connections). Consequently, if processing is shifted into orbit, then latency, power, and simplistic processing becomes an important consideration that is addressed with the command template-based network processor discussed above.

Further, with use of minimal memory data changes (to avoid corruption due to space solar radiation) then the value of the command template processing becomes apparent. This is especially beneficial for those protocols like asynchronous transfer mode (ATM) where the virtual nodes are set and can be dynamically adjusted for shortest path. Thus, with use of the present packet processing techniques, dynamic network processing changes can be addressed in orbit-closer to the actual path re-routing.

Additionally, the reference architecture for the packet processing template discussed herein may also be extended as part of a "regenerative satellite enabled NR-RAN with distributed gNB" as part of an improved 5G network. Here, the gNB-DU (distributed unit) may be hosted at a satellite, and therefore some of the NR protocols are processed by the on-board at the satellite, using an in-orbit DU. In contrast, existing deployments for a vRAN-DU are located on the ground. Consider an example of having to re-route when there is a sudden change of traffic load that causes congestion and there is no time to wait for ground based (off-line) routing to happen, so the satellite needs to step in. In this situation, low latency, limited processing capability, and immediate response can be provided by the present packet template processing techniques at the satellite communications hardware.

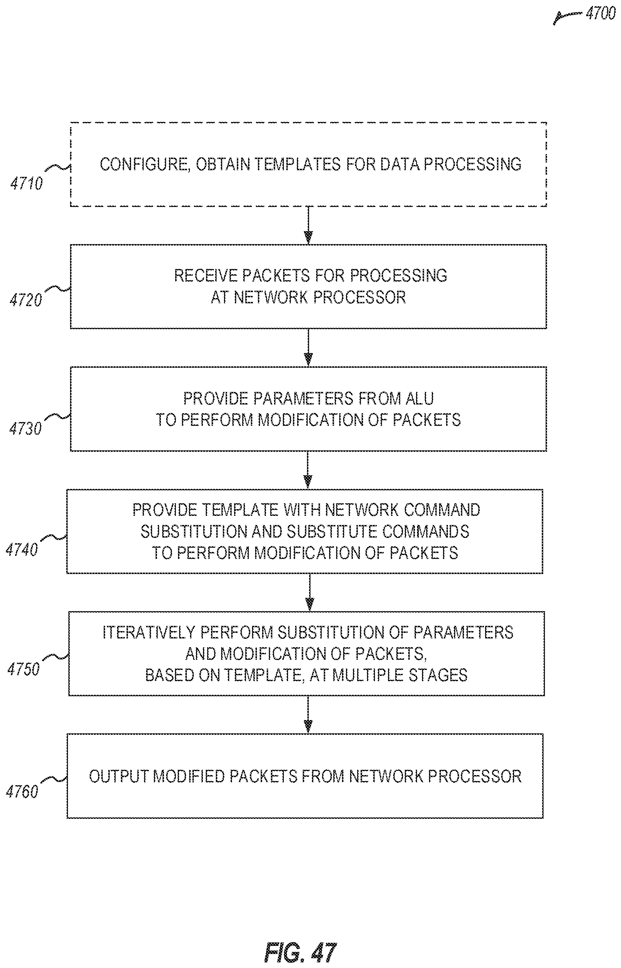

FIG. 47 provides a flowchart 4700 of a template-based, packet processing technique. This flowchart begins, at operation 4710, with an initial step (optional in subsequent steps) of configuring and obtaining the templates for data processing, as discussed above with reference to command templates block 4404. The flowchart continues, at operation 4720 with the receipt of one or more packets from a packet stream, which are processed with the CTB network processor 4400 as follows.

At operation 4730, the ALU 4408 operates to generate and provide parameters for modification of the one or more packets. The template obtained from the command templates block 4404 is then provided at operation 4740, and used for initial parameter substitution, such as by the parameter substitution block 4402. The initial parameter substitution at operation 4740 provides substitution commands that can be used to modify the particular type of packet being processed.

At operation 4750, the substitution commands are applied, to modify the one or more processed packets, based on the substituted parameters provided into the template. This operation may be performed by modifier 4406 as discussed above. Such substitution commands may be iteratively performed to modify packets at multiple stages, such as is shown in FIG. 45. Finally, at operation 4760, modified packets may be output from the network processor and communicated or further used in the network scenario.

### Implementation in Edge Computing Scenarios

It will be understood that the present terrestrial and non-terrestrial networking arrangements may be integrated with many aspects of edge computing strategies and deployments. Edge computing, at a general level, refers to the transition of compute and storage resources closer to endpoint devices (e.g., consumer computing devices, user equipment, etc.) in order to optimize total cost of ownership, reduce application latency, improve service capabilities, and improve compliance with security or data privacy requirements. Edge computing may, in some scenarios, provide a cloud-like distributed service that offers orchestration and management for applications among many types of storage and compute resources. As a result, some implementations of edge computing have been referred to as the "edge cloud" or the "fog", as powerful computing resources previously available only in large remote data centers are moved closer to endpoints and made available for use by consumers at the "edge" of the network.

In the context of satellite communication networks, edge computing operations may occur, as discussed above, by: moving workloads onto compute equipment at satellite vehicles; using satellite connections to offer backup or (redundant) links and connections to lower-latency services; coordinating workload processing operations at terrestrial access points or base stations; providing data and content via satellite networks; and the like. Thus, many of the same edge computing scenarios that are described below for mobile networks and mobile client devices are equally applicable when using a non-terrestrial network.

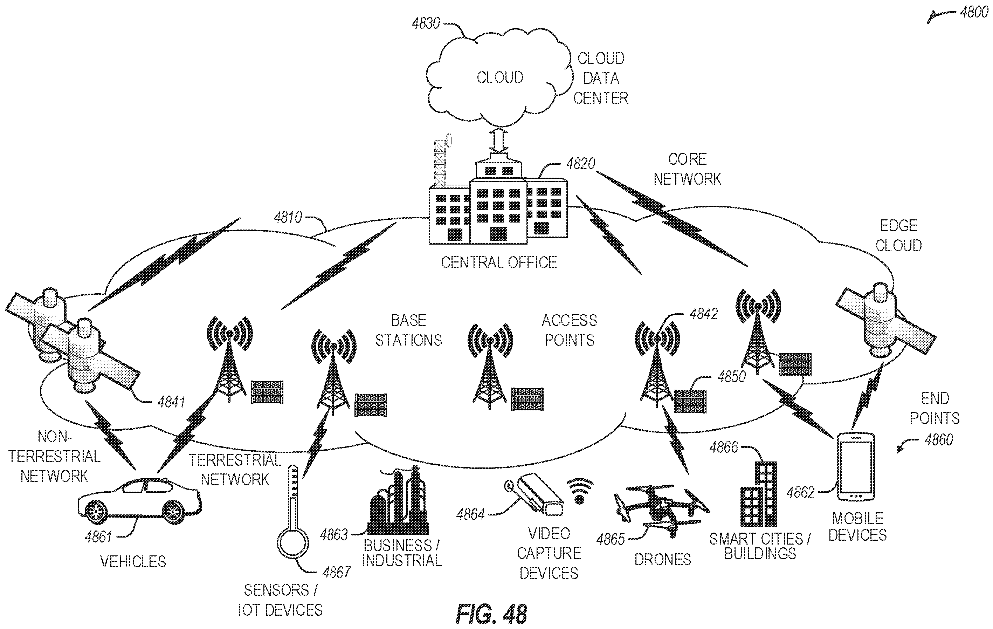

FIG. 48 is a block diagram 4800 showing an overview of a configuration for edge computing, which includes a layer of processing referenced in many of the current examples as an "edge cloud". This network topology, which may include a number of conventional networking layers (including those not shown herein), may be extended through use of the satellite and non-terrestrial network communication arrangements discussed herein.

As shown, the edge cloud 4810 is co-located at an edge location, such as a satellite vehicle 4841, a base station 4842, a local processing hub 4850, or a central office 4820, and thus may include multiple entities, devices, and equipment instances. The edge cloud 4810 is located much closer to the endpoint (consumer and producer) data sources 4860 (e.g., autonomous vehicles 4861, user equipment 4862, business and industrial equipment 4863, video capture devices 4864, drones 4865, smart cities and building devices 4866, sensors and IoT devices 4867, etc.) than the cloud data center 4830. Compute, memory, and storage resources which are offered at the edges in the edge cloud 4810 are critical to providing ultra-low or improved latency response times for services and functions used by the endpoint data sources 4860 as well as reduce network backhaul traffic from the edge cloud 4810 toward cloud data center 4830 thus improving energy consumption and overall network usages among other benefits.

Compute, memory, and storage are scarce resources, and generally decrease depending on the edge location (e.g., fewer processing resources being available at consumer end point devices than at a base station or at a central office). However, the closer that the edge location is to the endpoint (e.g., UEs), the more that space and power is constrained. Thus, edge computing, as a general design principle, attempts to minimize the amount of resources needed for network services, through the distribution of more resources which are located closer both geographically and in network access time. In the scenario of non-terrestrial network, distance and latency may be far to and from the satellite, but data processing may be better accomplished at edge computing hardware in the satellite vehicle rather requiring additional data connections and network backhaul to and from the cloud.

In an example, an edge cloud architecture extends beyond typical deployment limitations to address restrictions that some network operators or service providers may have in their own infrastructures. These include, variation of configurations based on the edge location (because edges at a base station level, for instance, may have more constrained performance); configurations based on the type of compute, memory, storage, fabric, acceleration, or like resources available to edge locations, tiers of locations, or groups of locations; the service, security, and management and orchestration capabilities; and related objectives to achieve usability and performance of end services.

Edge computing is a developing paradigm where computing is performed at or closer to the "edge" of a network, typically through the use of a compute platform implemented at base stations, gateways, network routers, or other devices which are much closer to end point devices producing and consuming the data. For example, edge gateway servers may be equipped with pools of memory and storage resources to perform computation in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with compute hardware that performs virtualized network functions and offers compute resources for the execution of services and consumer functions for connected devices. Likewise, within edge computing deployments, there may be scenarios in services which the compute resource will be "moved" to the data, as well as scenarios in which the data will be "moved" to the compute resource. Or as an example, base station (or satellite vehicle) compute, acceleration and network resources can provide services in order to scale to workload demands on an as needed basis by activating dormant capacity (subscription, capacity on demand) in order to manage corner cases, emergencies or to provide longevity for deployed resources over a significantly longer implemented lifecycle.

In contrast to the network architecture of FIG. 48, traditional endpoint (e.g., UE, vehicle-to-vehicle (V2V), vehicle-to-everything (V2X), etc.) applications are reliant on local device or remote cloud data storage and processing to exchange and coordinate information. A cloud data arrangement allows for long-term data collection and storage, but is not optimal for highly time varying data, such as a collision, traffic light change, etc. and may fail in attempting to meet latency challenges. The extension of satellite capabilities within an edge computing network provides even more possible permutations of managing compute, data, bandwidth, resources, service levels, and the like.

Depending on the real-time requirements in a communications context, a hierarchical structure of data processing and storage nodes may be defined in an edge computing deployment involving satellite connectivity. For example, such a deployment may include local ultra-low-latency processing, regional storage and processing as well as remote cloud data-center based storage and processing. Key performance indicators (KPIs) may be used to identify where sensor data is best transferred and where it is processed or stored. This typically depends on the ISO layer dependency of the data. For example, lower layer (PHY, MAC, routing, etc.) data typically changes quickly and is better handled locally in order to meet latency requirements. Higher layer data such as Application Layer data is typically less time critical and may be stored and processed in a remote cloud data-center.

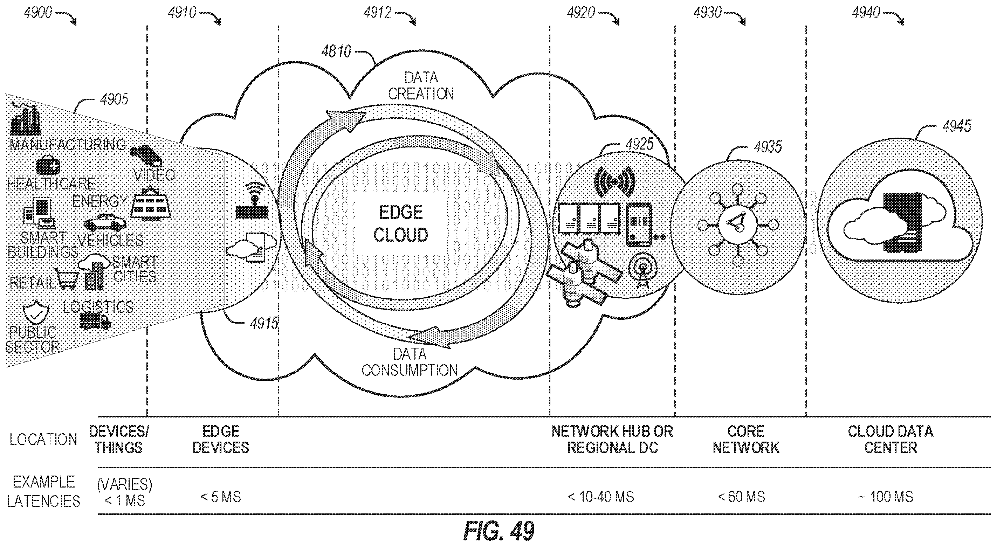

FIG. 49 illustrates operational layers among endpoints, an edge cloud, and cloud computing environments. Specifically, FIG. 49 depicts examples of computational use cases 4905, utilizing the edge cloud 4810 among multiple illustrative layers of network computing. The layers begin at an endpoint (devices and things) layer 4900, which accesses the edge cloud 4810 to conduct data creation, analysis, and data consumption activities. The edge cloud 4810 may span multiple network layers, such as an edge devices layer 4910 having gateways, on-premise servers, or network equipment (nodes 4915) located in physically proximate edge systems; a network access layer 4920, encompassing base stations, radio processing units, network hubs, regional data centers (DC), or local network equipment (equipment 4925); and any equipment, devices, or nodes located therebetween (in layer 4912, not illustrated in detail). The network communications within the edge cloud 4810 and among the various layers may occur via any number of wired or wireless mediums, including via connectivity architectures and technologies not depicted.

Examples of latency with terrestrial networks, resulting from network communication distance and processing time constraints, may range from less than a millisecond (ms) when among the endpoint layer 4900, under 5 ms at the edge devices layer 4910, to even between 10 to 40 ms when communicating with nodes at the network access layer 4920. (Variation to these latencies is expected with use of non-terrestrial networks). Beyond the edge cloud 4810 are core network 4930 and cloud data center 4940 layers, each with increasing latency (e.g., between 50-60 ms at the core network layer 4930, to 100 or more ms at the cloud data center layer). As a result, operations at a core network data center 4935 or a cloud data center 4945, with latencies of at least 50 to 100 ms or more, will not be able to accomplish many time-critical functions of the use cases 4905. Each of these latency values are provided for purposes of illustration and contrast; it will be understood that the use of other access network mediums and technologies may further reduce the latencies. In some examples, respective portions of the network may be categorized as "close edge", "local edge", "near edge", "middle edge", or "far edge" layers, relative to a network source and destination. For instance, from the perspective of the core network data center 4935 or a cloud data center 4945, a central office or content data network may be considered as being located within a "near edge" layer ("near" to the cloud, having high latency values when communicating with the devices and endpoints of the use cases 4905), whereas an access point, base station, on-premise server, or network gateway may be considered as located within a "far edge" layer ("far" from the cloud, having low latency values when communicating with the devices and endpoints of the use cases 4905). It will be understood that other categorizations of a particular network layer as constituting a "close", "local", "near", "middle", or "far" edge may be based on latency, distance, number of network hops, or other measurable characteristics, as measured from a source in any of the network layers 4900-4940.

The various use cases 4905 may access resources under usage pressure from incoming streams, due to multiple services utilizing the edge cloud. To achieve results with low latency, the services executed within the edge cloud 4810 balance varying requirements in terms of: (a) Priority (throughput or latency) and Quality of Service (QoS) (e.g., traffic for an autonomous car may have higher priority than a temperature sensor in terms of response time requirement; or, a performance sensitivity/bottleneck may exist at a compute/accelerator, memory, storage, or network resource, depending on the application); (b) Reliability and Resiliency (e.g., some input streams need to be acted upon and the traffic routed with mission-critical reliability, where as some other input streams may be tolerate an occasional failure, depending on the application); and (c) Physical constraints (e.g., power, cooling and form-factor).

The end-to-end service view for these use cases involves the concept of a service-flow and is associated with a transaction. The transaction details the overall service requirement for the entity consuming the service, as well as the associated services for the resources, workloads, workflows, and business functional and business level requirements. The services executed with the "terms" described may be managed at each layer in a way to assure real time, and runtime contractual compliance for the transaction during the lifecycle of the service. When a component in the transaction is missing its agreed to SLA, the system as a whole (components in the transaction) may provide the ability to (1) understand the impact of the SLA violation, and (2) augment other components in the system to resume overall transaction SLA, and (3) implement steps to remediate.

Thus, with these variations and service features in mind, edge computing within the edge cloud 4810 may provide the ability to serve and respond to multiple applications of the use cases 4905 (e.g., object tracking, video surveillance, connected cars, etc.) in real-time or near real-time, and meet ultra-low latency requirements for these multiple applications. These advantages enable a whole new class of applications (Virtual Network Functions (VNFs), Function as a Service (FaaS), Edge as a Service (EaaS), etc.), which cannot leverage conventional cloud computing due to latency or other limitations. This is especially relevant for applications which require connection via satellite, and the additional latency that trips via satellite would require to the cloud.

However, with the advantages of edge computing comes the following caveats. The devices located at the edge are often resource constrained and therefore there is pressure on usage of edge resources. Typically, this is addressed through the pooling of memory and storage resources for use by multiple users (tenants) and devices. The edge may be power and cooling constrained and therefore the power usage needs to be accounted for by the applications that are consuming the most power. There may be inherent power-performance tradeoffs in these pooled memory resources, as many of them are likely to use emerging memory technologies, where more power requires greater memory bandwidth. Likewise, improved security of hardware and root of trust trusted functions are also required, because edge locations may be unmanned and may even need permissioned access (e.g., when housed in a third-party location). Such issues are magnified in the edge cloud 4810 in a multi-tenant, multi-owner, or multi-access setting, where services and applications are requested by many users, especially as network usage dynamically fluctuates and the composition of the multiple stakeholders, use cases, and services changes.

At a more generic level, an edge computing system may be described to encompass any number of deployments at the previously discussed layers operating in the edge cloud 4810 (network layers 4900-4940), which provide coordination from client and distributed computing devices. One or more edge gateway nodes, one or more edge aggregation nodes, and one or more core data centers may be distributed across layers of the network to provide an implementation of the edge computing system by or on behalf of a telecommunication service provider ("telco", or "TSP"), internet-of-things service provider, cloud service provider (CSP), enterprise entity, or any other number of entities. Various implementations and configurations of the edge computing system may be provided dynamically, such as when orchestrated to meet service objectives.

Consistent with the examples provided herein, a client compute node may be embodied as any type of endpoint component, circuitry, device, appliance, or other thing capable of communicating as a producer or consumer of data. Further, the label "node" or "device" as used in the edge computing system does not necessarily mean that such node or device operates in a client or agent/minion/follower role; rather, any of the nodes or devices in the edge computing system refer to individual entities, nodes, or subsystems which include discrete or connected hardware or software configurations to facilitate or use the edge cloud 4810.

As such, the edge cloud 4810 is formed from network components and functional features operated by and within edge gateway nodes, edge aggregation nodes, or other edge compute nodes among network layers 4910-4930. The edge cloud 4810 thus may be embodied as any type of network that provides edge computing and/or storage resources which are proximately located to radio access network (RAN) capable endpoint devices (e.g., mobile computing devices, IoT devices, smart devices, etc.), which are discussed herein. In other words, the edge cloud 4810 may be envisioned as an "edge" which connects the endpoint devices and traditional network access points that serve as an ingress point into service provider core networks, including mobile carrier networks (e.g., Global System for Mobile Communications (GSM) networks, Long-Term Evolution (LTE) networks, 5G/6G networks, etc.), while also providing storage and/or compute capabilities. Other types and forms of network access (e.g., Wi-Fi, long-range wireless, wired networks including optical networks) may also be utilized in place of or in combination with such 3GPP carrier networks.

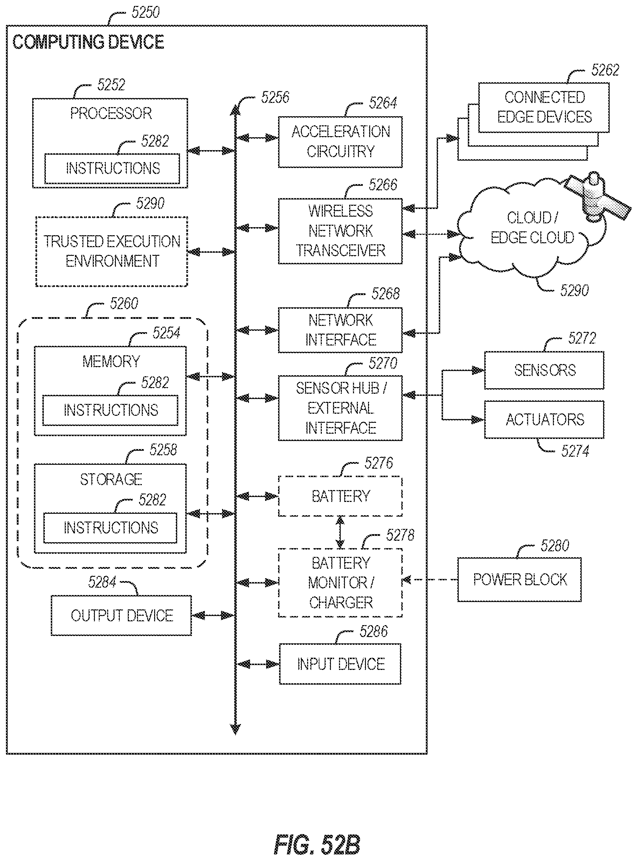

The network components of the edge cloud 4810 may be servers, multi-tenant servers, appliance computing devices, and/or any other type of computing devices. For example, a node of the edge cloud 4810 may include an appliance computing device that is a self-contained electronic device including a housing, a chassis, a case or a shell. In some circumstances, the housing may be dimensioned for portability such that it can be carried by a human and/or shipped. Example housings may include materials that form one or more exterior surfaces that partially or fully protect contents of the appliance, in which protection may include weather protection, hazardous environment protection (e.g., EMI, vibration, extreme temperatures), and/or enable submergibility. Example housings may include power circuitry to provide power for stationary and/or portable implementations, such as AC power inputs, DC power inputs, AC/DC or DC/AC converter(s), power regulators, transformers, charging circuitry, batteries, wired inputs and/or wireless power inputs. Example housings and/or surfaces thereof may include or connect to mounting hardware to enable attachment to structures such as buildings, telecommunication structures (e.g., poles, antenna structures, etc.) and/or racks (e.g., server racks, blade mounts, etc.). Example housings and/or surfaces thereof may support one or more sensors (e.g., temperature sensors, vibration sensors, light sensors, acoustic sensors, capacitive sensors, proximity sensors, etc.). One or more such sensors may be contained in, carried by, or otherwise embedded in the surface and/or mounted to the surface of the appliance. Example housings and/or surfaces thereof may support mechanical connectivity, such as propulsion hardware (e.g., wheels, propellers, etc.) and/or articulating hardware (e.g., robot arms, pivotable appendages, etc.). In some circumstances, the sensors may include any type of input devices such as user interface hardware (e.g., buttons, switches, dials, sliders, etc.). In some circumstances, example housings include output devices contained in, carried by, embedded therein and/or attached thereto. Output devices may include displays, touchscreens, lights, LEDs, speakers, I/O ports (e.g., USB), etc. In some circumstances, edge devices are devices presented in the network for a specific purpose (e.g., a traffic light), but may have processing and/or other capacities that may be utilized for other purposes. Such edge devices may be independent from other networked devices and may be provided with a housing having a form factor suitable for its primary purpose; yet be available for other compute tasks that do not interfere with its primary task. Edge devices include Internet of Things devices. The appliance computing device may include hardware and software components to manage local issues such as device temperature, vibration, resource utilization, updates, power issues, physical and network security, etc. Example hardware for implementing an appliance computing device is described in conjunction with FIG. 52B. The edge cloud 4810 may also include one or more servers and/or one or more multi-tenant servers. Such a server may include an operating system and implement a virtual computing environment. A virtual computing environment may include a hypervisor managing (e.g., spawning, deploying, destroying, etc.) one or more virtual machines, one or more containers, etc. Such virtual computing environments provide an execution environment in which one or more applications and/or other software, code or scripts may execute while being isolated from one or more other applications, software, code or scripts.

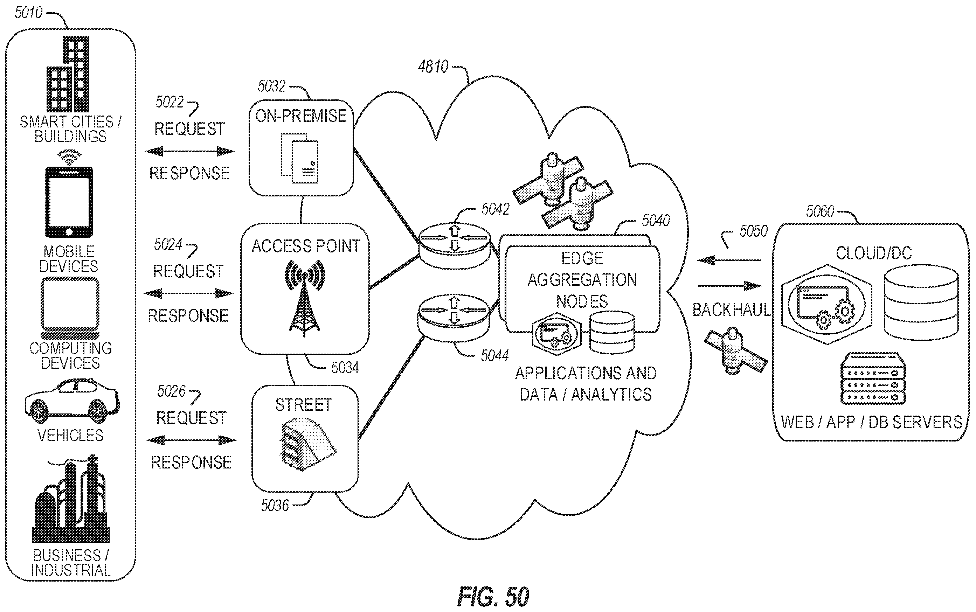

In FIG. 50, various client endpoints 5010 (in the form of mobile devices, computers, autonomous vehicles, business computing equipment, industrial processing equipment) exchange requests and responses that are specific to the type of endpoint network aggregation. For instance, client endpoints 5010 may obtain network access via a wired broadband network, by exchanging requests and responses 5022 through an on-premise network system 5032. Some client endpoints 5010, such as mobile computing devices, may obtain network access via a wireless broadband network, by exchanging requests and responses 5024 through an access point (e.g., cellular network tower) 5034. Some client endpoints 5010, such as autonomous vehicles may obtain network access for requests and responses 5026 via a wireless vehicular network through a street-located network system 5036. However, regardless of the type of network access, the TSP may deploy aggregation points 5042, 5044 within the edge cloud 4810 to aggregate traffic and requests. Thus, within the edge cloud 4810, the TSP may deploy various compute and storage resources, such as at edge aggregation nodes 5040 (including those located at satellite vehicles), to provide requested content. The edge aggregation nodes 5040 and other systems of the edge cloud 4810 are connected to a cloud or data center 5060, which uses a backhaul network 5050 (such as a satellite backhaul) to fulfill higher-latency requests from a cloud/data center for websites, applications, database servers, etc. Additional or consolidated instances of the edge aggregation nodes 5040 and the aggregation points 5042, 5044, including those deployed on a single server framework, may also be present within the edge cloud 4810 or other areas of the TSP infrastructure.

At a more generic level, an edge computing system may be described to encompass any number of deployments operating in the edge cloud 4810, which provide coordination from client and distributed computing devices. FIG. 49 provides a further abstracted overview of layers of distributed compute deployed among an edge computing environment for purposes of illustration.

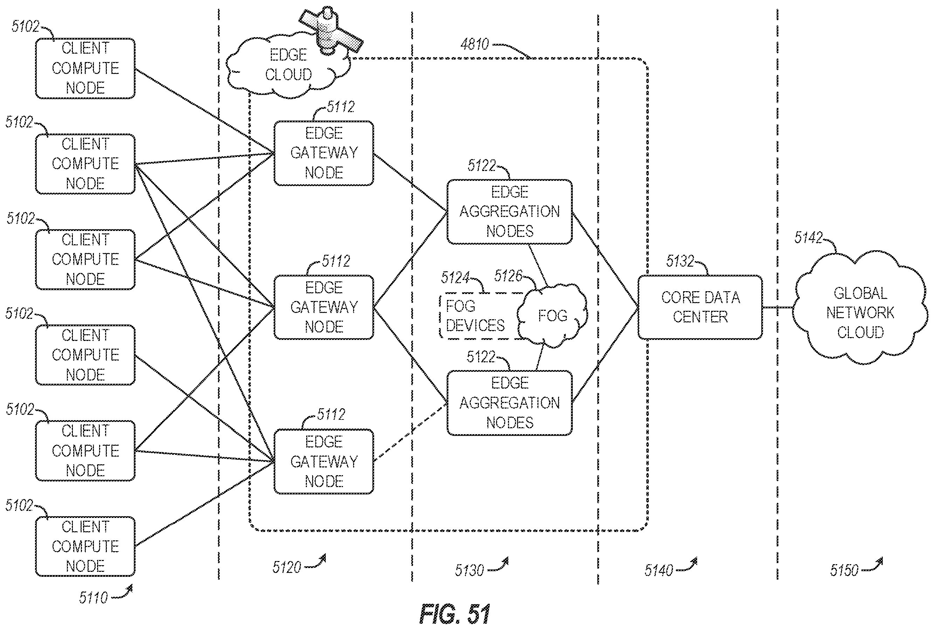

FIG. 51 generically depicts an edge computing system for providing edge services and applications to multi-stakeholder entities, as distributed among one or more client compute nodes 5102, one or more edge gateway nodes 5112, one or more edge aggregation nodes 5122, one or more core data centers 5132, and a global network cloud 5142, as distributed across layers of the network. The implementation of the edge computing system may be provided at or on behalf of a telecommunication service provider ("telco", or "TSP"), internet-of-things service provider, cloud service provider (CSP), enterprise entity, or any other number of entities.

Each node or device of the edge computing system is located at a particular layer corresponding to layers 4900, 4910, 4920, 4930, 4940. For example, the client compute nodes 5102 are each located at an endpoint layer 4900, while each of the edge gateway nodes 5112 are located at an edge devices layer 4910 (local level) of the edge computing system. Additionally, each of the edge aggregation nodes 5122 (and/or fog devices 5124, if arranged or operated with or among a fog networking configuration 5126) are located at a network access layer 4920 (an intermediate level). Fog computing (or "fogging") generally refers to extensions of cloud computing to the edge of an enterprise's network, typically in a coordinated distributed or multi-node network. Some forms of fog computing provide the deployment of compute, storage, and networking services between end devices and cloud computing data centers, on behalf of the cloud computing locations. Such forms of fog computing provide operations that are consistent with edge computing as discussed herein; many of the edge computing aspects discussed herein are applicable to fog networks, fogging, and fog configurations. Further, aspects of the edge computing systems discussed herein may be configured as a fog, or aspects of a fog may be integrated into an edge computing architecture.

The core data center 5132 is located at a core network layer 4930 (e.g., a regional or geographically-central level), while the global network cloud 5142 is located at a cloud data center layer 4940 (e.g., a national or global layer). The use of "core" is provided as a term for a centralized network location-deeper in the network-which is accessible by multiple edge nodes or components; however, a "core" does not necessarily designate the "center" or the deepest location of the network. Accordingly, the core data center 5132 may be located within, at, or near the edge cloud 4810.

Although an illustrative number of client compute nodes 5102, edge gateway nodes 5112, edge aggregation nodes 5122, core data centers 5132, global network clouds 5142 are shown in FIG. 51, it should be appreciated that the edge computing system may include more or fewer devices or systems at each layer. Additionally, as shown in FIG. 51, the number of components of each layer 4900, 4910, 4920, 4930, 4940 generally increases at each lower level (i.e., when moving closer to endpoints). As such, one edge gateway node 5112 may service multiple client compute nodes 5102, and one edge aggregation node 5122 may service multiple edge gateway nodes 5112.

Consistent with the examples provided herein, each client compute node 5102 may be embodied as any type of end point component, device, appliance, or "thing" capable of communicating as a producer or consumer of data. Further, the label "node" or "device" as used in the edge computing system does not necessarily mean that such node or device operates in a client or agent/minion/follower role; rather, any of the nodes or devices in the edge computing system refer to individual entities, nodes, or subsystems which include discrete or connected hardware or software configurations to facilitate or use the edge cloud 4810.

As such, the edge cloud 4810 is formed from network components and functional features operated by and within the edge gateway nodes 5112 and the edge aggregation nodes 5122 of layers 4920, 4930, respectively. The edge cloud 4810 may be embodied as any type of network that provides edge computing and/or storage resources which are proximately located to radio access network (RAN) capable endpoint devices (e.g., mobile computing devices, IoT devices, smart devices, etc.), which are shown in FIG. 49 as the client compute nodes 5102. In other words, the edge cloud 4810 may be envisioned as an "edge" which connects the endpoint devices and traditional mobile network access points that serves as an ingress point into service provider core networks, including carrier networks (e.g., Global System for Mobile Communications (GSM) networks, Long-Term Evolution (LTE) networks, 5G networks, etc.), while also providing storage and/or compute capabilities. Other types and forms of network access (e.g., Wi-Fi, long-range wireless networks) may also be utilized in place of or in combination with such 3GPP carrier networks.

In some examples, the edge cloud 4810 may form a portion of or otherwise provide an ingress point into or across a fog networking configuration 5126 (e.g., a network of fog devices 5124, not shown in detail), which may be embodied as a system-level horizontal and distributed architecture that distributes resources and services to perform a specific function. For instance, a coordinated and distributed network of fog devices 5124 may perform computing, storage, control, or networking aspects in the context of an IoT system arrangement. Other networked, aggregated, and distributed functions may exist in the edge cloud 4810 between the cloud data center layer 4940 and the client endpoints (e.g., client compute nodes 5102). Some of these are discussed in the following sections in the context of network functions or service virtualization, including the use of virtual edges and virtual services which are orchestrated for multiple stakeholders.

The edge gateway nodes 5112 and the edge aggregation nodes 5122 cooperate to provide various edge services and security to the client compute nodes 5102. Furthermore, because each client compute node 5102 may be stationary or mobile, each edge gateway node 5112 may cooperate with other edge gateway devices to propagate presently provided edge services and security as the corresponding client compute node 5102 moves about a region. To do so, each of the edge gateway nodes 5112 and/or edge aggregation nodes 5122 may support multiple tenancy and multiple stakeholder configurations, in which services from (or hosted for) multiple service providers and multiple consumers may be supported and coordinated across a single or multiple compute devices.

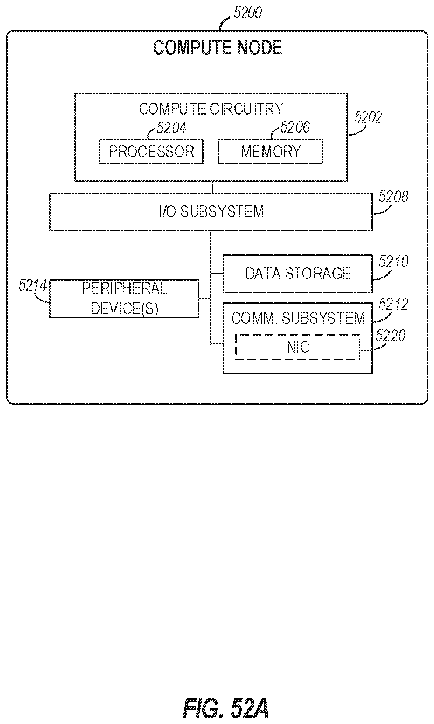

In further examples, any of the compute nodes or devices discussed with reference to the present computing systems and environment may be fulfilled based on the components depicted in FIGS. 52A and 52B. Each compute node may be embodied as a type of device, appliance, computer, or other "thing" capable of communicating with other edge, networking, or endpoint components.

In the simplified example depicted in FIG. 52A, an edge compute node 5200 includes a compute engine (also referred to herein as "compute circuitry") 5202, an input/output (I/O) subsystem 5208, data storage 5210, a communication circuitry subsystem 5212, and, optionally, one or more peripheral devices 5214. In other examples, each compute device may include other or additional components, such as those used in personal or server computing systems (e.g., a display, peripheral devices, etc.). Additionally, in some examples, one or more of the illustrative components may be incorporated in, or otherwise form a portion of, another component.

The compute node 5200 may be embodied as any type of engine, device, or collection of devices capable of performing various compute functions. In some examples, the compute node 5200 may be embodied as a single device such as an integrated circuit, an embedded system, a field-programmable gate array (FPGA), a system-on-a-chip (SOC), or other integrated system or device. In the illustrative example, the compute node 5200 includes or is embodied as a processor 5204 and a memory 5206. The processor 5204 may be embodied as any type of processor capable of performing the functions described herein (e.g., executing an application). For example, the processor 5204 may be embodied as a multi-core processor(s), a microcontroller, or other processor or processing/controlling circuit. In some examples, the processor 5204 may be embodied as, include, or be coupled to an FPGA, an application specific integrated circuit (ASIC), reconfigurable hardware or hardware circuitry, or other specialized hardware to facilitate performance of the functions described herein.

The main memory 5206 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. Non-limiting examples of volatile memory may include various types of random access memory (RAM), such as DRAM or static random access memory (SRAM). One particular type of DRAM that may be used in a memory module is synchronous dynamic random access memory (SDRAM).

In one example, the memory device is a block addressable memory device, such as those based on NAND or NOR technologies. A memory device may also include a three-dimensional crosspoint memory device (e.g., Intel 3D XPoint^{™} memory, other storage class memory), or other byte addressable write-in-place nonvolatile memory devices. The memory device may refer to the die itself and/or to a packaged memory product. In some examples, 3D crosspoint memory (e.g., Intel 3D XPoint^{™} memory) may comprise a transistor-less stackable cross point architecture in which memory cells sit at the intersection of word lines and bit lines and are individually addressable and in which bit storage is based on a change in bulk resistance. In some examples, all or a portion of the main memory 5206 may be integrated into the processor 5204. The main memory 5206 may store various software and data used during operation such as one or more applications, data operated on by the application(s), libraries, and drivers.

The compute circuitry 5202 is communicatively coupled to other components of the compute node 5200 via the I/O subsystem 5208, which may be embodied as circuitry and/or components to facilitate input/output operations with the compute circuitry 5202 (e.g., with the processor 5204 and/or the main memory 5206) and other components of the compute circuitry 5202. For example, the I/O subsystem 5208 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some examples, the I/O subsystem 5208 may form a portion of a system-on-a-chip (SoC) and be incorporated, along with one or more of the processor 5204, the main memory 5206, and other components of the compute circuitry 5202, into the compute circuitry 5202.

The one or more illustrative data storage devices 5210 may be embodied as any type of devices configured for short-term or long-term storage of data such as, for example, memory devices and circuits, memory cards, hard disk drives, solid-state drives, or other data storage devices. Each data storage device 5210 may include a system partition that stores data and firmware code for the data storage device 5210. Each data storage device 5210 may also include one or more operating system partitions that store data files and executables for operating systems depending on, for example, the type of compute node 5200.

The communication circuitry 5212 may be embodied as any communication circuit, device, or collection thereof, capable of enabling communications over a network between the compute circuitry 5202 and another compute device (e.g., an edge gateway node 5112 of an edge computing system). The communication circuitry 5212 may be configured to use any one or more communication technology (e.g., wired or wireless communications) and associated protocols (e.g., a cellular networking protocol such a 3GPP 4G or 5G standard, a wireless local area network protocol such as IEEE 802.11/Wi-Fi^{®}, a wireless wide area network protocol, Ethernet, Bluetooth^{®}, etc.) to effect such communication.

The illustrative communication circuitry 5212 includes a network interface controller (NIC) 5220, which may also be referred to as a host fabric interface (HFI). The NIC 5220 may be embodied as one or more add-in-boards, daughter cards, network interface cards, controller chips, chipsets, or other devices that may be used by the compute node 5200 to connect with another compute device (e.g., an edge gateway node 5112). In some examples, the NIC 5220 may be embodied as part of a system-on-a-chip (SoC) that includes one or more processors, or included on a multichip package that also contains one or more processors. In some examples, the NIC 5220 may include a local processor (not shown) and/or a local memory (not shown) that are both local to the NIC 5220. In such examples, the local processor of the NIC 5220 may be capable of performing one or more of the functions of the compute circuitry 5202 described herein. Additionally or alternatively, in such examples, the local memory of the NIC 5220 may be integrated into one or more components of the client compute node at the board level, socket level, chip level, and/or other levels.

Additionally, in some examples, each compute node 5200 may include one or more peripheral devices 5214. Such peripheral devices 5214 may include any type of peripheral device found in a compute device or server such as audio input devices, a display, other input/output devices, interface devices, and/or other peripheral devices, depending on the particular type of the compute node 5200. In further examples, the compute node 5200 may be embodied by a respective edge compute node in an edge computing system (e.g., client compute node 5102, edge gateway node 5112, edge aggregation node 5122) or like forms of appliances, computers, subsystems, circuitry, or other components.

In a more detailed example, FIG. 52B illustrates a block diagram of an example of components that may be present in an edge computing node 5250 for implementing the techniques (e.g., operations, processes, methods, and methodologies) described herein. The edge computing node 5250 may include any combinations of the components referenced above, and it may include any device usable with an edge communication network or a combination of such networks. The components may be implemented as ICs, portions thereof, discrete electronic devices, or other modules, logic, hardware, software, firmware, or a combination thereof adapted in the edge computing node 5250, or as components otherwise incorporated within a chassis of a larger system. Further, to support the security examples provided herein, a hardware RoT (e.g., provided according to a DICE architecture) may be implemented in each IP block of the edge computing node 5250 such that any IP Block could boot into a mode where a RoT identity could be generated that may attest its identity and its current booted firmware to another IP Block or to an external entity.

The edge computing node 5250 may include processing circuitry in the form of a processor 5252, which may be a microprocessor, a multi-core processor, a multithreaded processor, an ultra-low voltage processor, an embedded processor, or other known processing elements. The processor 5252 may be a part of a system on a chip (SoC) in which the processor 5252 and other components are formed into a single integrated circuit, or a single package, such as the Edison^{™} or Galileo^{™} SoC boards from Intel Corporation, Santa Clara, California. As an example, the processor 5252 may include an Intel^{®} Architecture Core^{™} based processor, such as a Quark^{™}, an Atom^{™}, a Xeon^{™}, an i3, an i5, an i7, an i9, or an MCU-class processor, or another such processor available from Intel^{®}. However, any number other processors may be used, such as available from Advanced Micro Devices, Inc. (AMD) of Sunnyvale, California, a MIPS-based design from MIPS Technologies, Inc. of Sunnyvale, California, an ARM-based design licensed from ARM Holdings, Ltd. or a customer thereof, or their licensees or adopters. The processors may include units such as an A5-A13 processor from Apple^{®} Inc., a Snapdragon^{™} processor from Qualcomm^{®} Technologies, Inc., or an OMAP^{™} processor from Texas Instruments, Inc.

The processor 5252 may communicate with a system memory 5254 over an interconnect 5256 (e.g., a bus). Any number of memory devices may be used to provide for a given amount of system memory. As examples, the memory may be random access memory (RAM) in accordance with a Joint Electron Devices Engineering Council (JEDEC) design such as the DDR or mobile DDR standards (e.g., LPDDR, LPDDR2, LPDDR3, or LPDDR4). In particular examples, a memory component may comply with a DRAM standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces. In various implementations, the individual memory devices may be of any number of different package types such as single die package (SDP), dual die package (DDP) or quad die package (Q17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMSs or MiniDIMMs.

To provide for persistent storage of information such as data, applications, operating systems and so forth, a storage 5258 may also couple to the processor 5252 via the interconnect 5256. In an example, the storage 5258 may be implemented via a solid-state disk drive (SSDD). Other devices that may be used for the storage 5258 include flash memory cards, such as SD cards, microSD cards, XD picture cards, and the like, and USB flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magneto-resistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

In low power implementations, the storage 5258 may be on-die memory or registers associated with the processor 5252. However, in some examples, the storage 5258 may be implemented using a micro hard disk drive (HDD). Further, any number of new technologies may be used for the storage 5258 in addition to, or instead of, the technologies described, such resistance change memories, phase change memories, holographic memories, or chemical memories, among others.

The components may communicate over the interconnect 5256. The interconnect 5256 may include any number of technologies, including industry standard architecture (ISA), extended ISA (EISA), peripheral component interconnect (PCI), peripheral component interconnect extended (PCIx), PCI express (PCIe), NVLink, or any number of other technologies. The interconnect 5256 may be a proprietary bus, for example, used in an SoC based system. Other bus systems may be included, such as an I2C interface, an SPI interface, point to point interfaces, and a power bus, among others.

The interconnect 5256 may couple the processor 5252 to a transceiver 5266, for communications with the connected edge devices 5262. The transceiver 5266 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the connected edge devices 5262. For example, a wireless local area network (WLAN) unit may be used to implement Wi-Fi^{®} communications in accordance with the Institute of Electrical and Electronics Engineers (IEEE) 802.11 standard. In addition, wireless wide area communications, e.g., according to a cellular or other wireless wide area protocol, may occur via a wireless wide area network (WWAN) unit.

The wireless network transceiver 5266 (or multiple transceivers) may communicate using multiple standards or radios for communications at a different range. For example, the edge computing node 5250 may communicate with close devices, e.g., within about 10 meters, using a local transceiver based on BLE, or another low power radio, to save power. More distant connected edge devices 5262, e.g., within about 50 meters, may be reached over ZigBee or other intermediate power radios. Both communications techniques may take place over a single radio at different power levels or may take place over separate transceivers, for example, a local transceiver using BLE and a separate mesh transceiver using ZigBee.

A wireless network transceiver 5266 (e.g., a radio transceiver) may be included to communicate with devices or services in the edge cloud 5290 via local or wide area network protocols. The wireless network transceiver 5266 may be an LPWA transceiver that follows the IEEE 802.15.4, or IEEE 802.15.4g standards, among others. The edge computing node 5250 may communicate over a wide area using LoRaWAN^{™} (Long Range Wide Area Network) developed by Semtech and the LoRa Alliance. The techniques described herein are not limited to these technologies but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the wireless network transceiver 5266, as described herein. For example, the transceiver 5266 may include a cellular transceiver that uses spread spectrum (SPA/SAS) communications for implementing high-speed communications. Further, any number of other protocols may be used, such as Wi-Fi^{®} networks for medium speed communications and provision of network communications. The transceiver 5266 may include radios that are compatible with any number of 3GPP (Third Generation Partnership Project) specifications, such as Long Term Evolution (LTE) and 5th Generation (5G) communication systems, discussed in further detail at the end of the present disclosure. A network interface controller (NIC) 5268 may be included to provide a wired communication to nodes of the edge cloud 5290 or to other devices, such as the connected edge devices 5262 (e.g., operating in a mesh). The wired communication may provide an Ethernet connection or may be based on other types of networks, such as Controller Area Network (CAN), Local Interconnect Network (LIN), DeviceNet, ControlNet, Data Highway+, PROFIBUS, or PROFINET, among many others. An additional NIC 5268 may be included to enable connecting to a second network, for example, a first NIC 5268 providing communications to the cloud over Ethernet, and a second NIC 5268 providing communications to other devices over another type of network.

Given the variety of types of applicable communications from the device to another component or network, applicable communications circuitry used by the device may include or be embodied by any one or more of components 5264, 5266, 5268, or 5270. Accordingly, in various examples, applicable means for communicating (e.g., receiving, transmitting, etc.) may be embodied by such communications circuitry.

The edge computing node 5250 may include or be coupled to acceleration circuitry 5264, which may be embodied by one or more AI accelerators, a neural compute stick, neuromorphic hardware, an FPGA, an arrangement of GPUs, one or more SoCs, one or more CPUs, one or more digital signal processors, dedicated ASICs, or other forms of specialized processors or circuitry designed to accomplish one or more specialized tasks. These tasks may include AI processing (including machine learning, training, inferencing, and classification operations), visual data processing, network data processing, object detection, rule analysis, or the like. Accordingly, in various examples, applicable means for acceleration may be embodied by such acceleration circuitry.

The interconnect 5256 may couple the processor 5252 to a sensor hub or external interface 5270 that is used to connect additional devices or subsystems. The devices may include sensors 5272, such as accelerometers, level sensors, flow sensors, optical light sensors, camera sensors, temperature sensors, a global positioning system (GPS) sensors, pressure sensors, barometric pressure sensors, and the like. The hub or interface 5270 further may be used to connect the edge computing node 5250 to actuators 5274, such as power switches, valve actuators, an audible sound generator, a visual warning device, and the like.

In some optional examples, various input/output (I/O) devices may be present within or connected to, the edge computing node 5250. For example, a display or other output device 5284 may be included to show information, such as sensor readings or actuator position. An input device 5286, such as a touch screen or keypad may be included to accept input. An output device 5284 may include any number of forms of audio or visual display, including simple visual outputs such as binary status indicators (e.g., LEDs) and multi-character visual outputs, or more complex outputs such as display screens (e.g., LCD screens), with the output of characters, graphics, multimedia objects, and the like being generated or produced from the operation of the edge computing node 5250.

A battery 5276 may power the edge computing node 5250, although, in examples in which the edge computing node 5250 is mounted in a fixed location, it may have a power supply coupled to an electrical grid. The battery 5276 may be a lithium ion battery, or a metal-air battery, such as a zinc-air battery, an aluminum-air battery, a lithium-air battery, and the like.

A battery monitor/charger 5278 may be included in the edge computing node 5250 to track the state of charge (SoCh) of the battery 5276. The battery monitor/charger 5278 may be used to monitor other parameters of the battery 5276 to provide failure predictions, such as the state of health (SoH) and the state of function (SoF) of the battery 5276. The battery monitor/charger 5278 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor/charger 5278 may communicate the information on the battery 5276 to the processor 5252 over the interconnect 5256. The battery monitor/charger 5278 may also include an analog-to-digital (ADC) converter that enables the processor 5252 to directly monitor the voltage of the battery 5276 or the current flow from the battery 5276. The battery parameters may be used to determine actions that the edge computing node 5250 may perform, such as transmission frequency, mesh network operation, sensing frequency, and the like.

A power block 5280, or other power supply coupled to a grid, may be coupled with the battery monitor/charger 5278 to charge the battery 5276. In some examples, the power block 5280 may be replaced with a wireless power receiver to obtain the power wirelessly, for example, through a loop antenna in the edge computing node 5250. A wireless battery charging circuit, such as an LTC4020 chip from Linear Technologies of Milpitas, California, among others, may be included in the battery monitor/charger 5278. The specific charging circuits may be selected based on the size of the battery 5276, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 5258 may include instructions 5282 in the form of software, firmware, or hardware commands to implement the techniques described herein. Although such instructions 5282 are shown as code blocks included in the memory 5254 and the storage 5258, it may be understood that any of the code blocks may be replaced with hardwired circuits, for example, built into an application specific integrated circuit (ASIC).

In an example, the instructions 5282 provided via the memory 5254, the storage 5258, or the processor 5252 may be embodied as a non-transitory, machine-readable medium 5260 including code to direct the processor 5252 to perform electronic operations in the edge computing node 5250. The processor 5252 may access the non-transitory, machine-readable medium 5260 over the interconnect 5256. For instance, the non-transitory, machine-readable medium 5260 may be embodied by devices described for the storage 5258 or may include specific storage units such as optical disks, flash drives, or any number of other hardware devices. The non-transitory, machine-readable medium 5260 may include instructions to direct the processor 5252 to perform a specific sequence or flow of actions, for example, as described with respect to the flowchart(s) and block diagram(s) of operations and functionality depicted above. As used in, the terms "machine-readable medium" and "computer-readable medium" are interchangeable.

In further examples, a machine-readable medium also includes any tangible medium that is capable of storing, encoding or carrying instructions for execution by a machine and that cause the machine to perform any one or more of the methodologies of the present disclosure or that is capable of storing, encoding or carrying data structures utilized by or associated with such instructions. A "machine-readable medium" thus may include but is not limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks. The instructions embodied by a machine-readable medium may further be transmitted or received over a communications network using a transmission medium via a network interface device utilizing any one of a number of transfer protocols (e.g., HTTP).

A machine-readable medium may be provided by a storage device or other apparatus which is capable of hosting data in a non-transitory format. In an example, information stored or otherwise provided on a machine-readable medium may be representative of instructions, such as instructions themselves or a format from which the instructions may be derived. This format from which the instructions may be derived may include source code, encoded instructions (e.g., in compressed or encrypted form), packaged instructions (e.g., split into multiple packages), or the like. The information representative of the instructions in the machine-readable medium may be processed by processing circuitry into the instructions to implement any of the operations discussed herein. For example, deriving the instructions from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions.

In an example, the derivation of the instructions may include assembly, compilation, or interpretation of the information (e.g., by the processing circuitry) to create the instructions from some intermediate or preprocessed format provided by the machine-readable medium. The information, when provided in multiple parts, may be combined, unpacked, and modified to create the instructions. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable, etc.) at a local machine, and executed by the local machine.

Each of the block diagrams of FIGS. 52A and 52B are intended to depict a high-level view of components of a device, subsystem, or arrangement of an edge computing node. However, it will be understood that some of the components shown may be omitted, additional components may be present, and a different arrangement of the components shown may occur in other implementations.

FIG. 5310 illustrates an example software distribution platform 5305 to distribute software, such as the example computer readable instructions 5282 of FIG. 52B, to one or more devices, such as example processor platform(s) 5310 and/or other example connected edge devices or systems discussed herein. The example software distribution platform 5305 may be implemented by any computer server, data facility, cloud service, etc., capable of storing and transmitting software to other computing devices. Example connected edge devices may be customers, clients, managing devices (e.g., servers), third parties (e.g., customers of an entity owning and/or operating the software distribution platform 5305). Example connected edge devices may operate in commercial and/or home automation environments. In some examples, a third party is a developer, a seller, and/or a licensor of software such as the example computer readable instructions 5282 of FIG. 52B. The third parties may be consumers, users, retailers, OEMs, etc. that purchase and/or license the software for use and/or re-sale and/or sub-licensing. In some examples, distributed software causes display of one or more user interfaces (UIs) and/or graphical user interfaces (GUIs) to identify the one or more devices (e.g., connected edge devices) geographically and/or logically separated from each other (e.g., physically separated IoT devices chartered with the responsibility of water distribution control (e.g., pumps), electricity distribution control (e.g., relays), etc.).

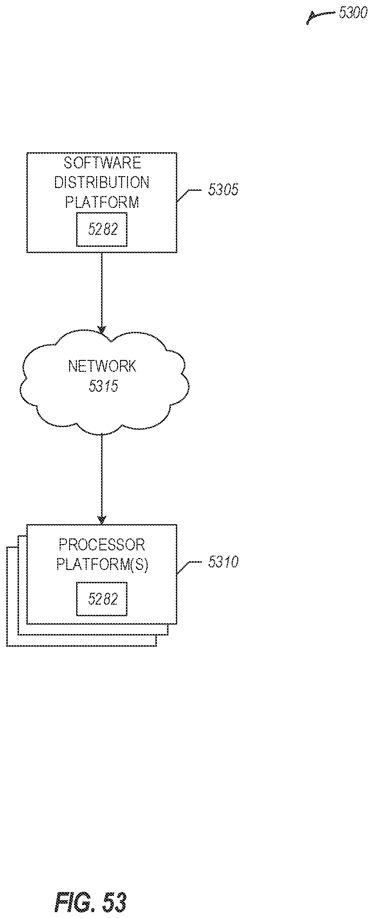

In the illustrated example of FIG. 53, the software distribution platform 5305 includes one or more servers and one or more storage devices that store the computer readable instructions 5282. The one or more servers of the example software distribution platform 5305 are in communication with a network 5315, which may correspond to any one or more of the Internet and/or any of the example networks described above. In some examples, the one or more servers are responsive to requests to transmit the software to a requesting party as part of a commercial transaction. Payment for the delivery, sale and/or license of the software may be handled by the one or more servers of the software distribution platform and/or via a third-party payment entity. The servers enable purchasers and/or licensors to download the computer readable instructions 5282 from the software distribution platform 5305. For example, the software, which may correspond to example computer readable instructions, may be downloaded to the example processor platform(s), which is/are to execute the computer readable instructions 5282. In some examples, one or more servers of the software distribution platform 5305 are communicatively connected to one or more security domains and/or security devices through which requests and transmissions of the example computer readable instructions 5282 must pass. In some examples, one or more servers of the software distribution platform 5305 periodically offer, transmit, and/or force updates to the software (e.g., the example computer readable instructions 5282 of FIG. 52B) to ensure improvements, patches, updates, etc. are distributed and applied to the software at the end user devices.

In the illustrated example of FIG. 53, the computer readable instructions 5282 are stored on storage devices of the software distribution platform 5305 in a particular format. A format of computer readable instructions includes, but is not limited to a particular code language (e.g., Java, JavaScript, Python, C, C#, SQL, HTML, etc.), and/or a particular code state (e.g., uncompiled code (e.g., ASCII), interpreted code, linked code, executable code (e.g., a binary), etc.). In some examples, the computer readable instructions 5282 stored in the software distribution platform 5305 are in a first format when transmitted to the example processor platform(s) 5310. In some examples, the first format is an executable binary in which particular types of the processor platform(s) 5310 can execute. However, in some examples, the first format is uncompiled code that requires one or more preparation tasks to transform the first format to a second format to enable execution on the example processor platform(s) 5310. For instance, the receiving processor platform(s) 5300 may need to compile the computer readable instructions 5282 in the first format to generate executable code in a second format that is capable of being executed on the processor platform(s) 5310. In still other examples, the first format is interpreted code that, upon reaching the processor platform(s) 5310, is interpreted by an interpreter to facilitate execution of instructions.

In the examples above, many references were provided to low-earth orbit (LEO) satellites and constellations. However, it will be understood that the examples above are also relevant to many forms of middle-earth orbit satellites and constellations, geosynchronous orbit satellites and constellations, and other high altitude communication platforms such as balloons. Thus, it will be understood that the techniques discussed for LEO network settings are also applicable to many other network settings.

Although these implementations have been described with reference to specific exemplary aspects, it will be evident that various modifications and changes may be made to these aspects without departing from the scope of the invention, which is defined by the appended claims. Many of the arrangements and processes described herein can be used in combination or in parallel implementations that involve terrestrial network connectivity (where available) to increase network bandwidth/throughput and to support additional edge services. Accordingly, the specification and drawings are to be regarded in an illustrative rather than a restrictive sense. The accompanying drawings that form a part hereof show, by way of illustration, and not of limitation, specific aspects in which the subject matter may be practiced. The aspects illustrated are described in sufficient detail to enable those skilled in the art to practice the teachings disclosed herein. This Detailed Description, therefore, is not to be taken in a limiting sense, and the scope of the invention is defined only by the appended claims.

## Claims

1. A method for establishing managed data stream connections using a satellite communications network, performed at a computing system, comprising:
identifying (1510) multiple data streams to be conducted between the computing system and multiple end points via the satellite communications network;
grouping (1520) sets of the multiple data streams into satellite end point virtual channels, the grouping based on a respective end point of the multiple end points;
mapping (1530) each of the data streams of each satellite end point virtual channel into a particular stream virtual channel within that satellite end point virtual channel, based on a type of service involved with each of the data streams;
identifying changes to respective data streams of the satellite end point virtual channels, based on service requirements and telemetry associated with the respective data streams of the satellite end point virtual channels, wherein the changes to the respective data streams are provided from changes to at least one of: latency, bandwidth, service capabilities, power conditions, resource availability, load balancing, or security features; and
implementing the changes to the respective data streams, based on the type of service involved with the respective data streams.

2. The method of claim 1, wherein the service requirements include:
Quality of Service requirements; or
compliance with at least one service level agreement.

3. The method of any of claims 1 to 2, wherein the multiple end points comprise respective cloud data processing systems (1340A, 1340B) accessible via the satellite communications network.

4. The method of any of claims 1 to 3, wherein the telemetry includes latency information identifiable based on the satellite end point virtual channels and the stream virtual channels.

5. The method of any of claims 1 to 4, the method further comprising:
collecting the service requirements associated with the respective data streams; and
collecting the telemetry associated with the respective data streams.

6. The method of any of claims 1 to 5, wherein the changes to the respective data streams includes moving at least one of the stream virtual channels from a first satellite end point virtual channel to a second satellite end point virtual channel, to change use of at least one service from a first end point to a second end point.

7. The method of any of claims 1 to 6, wherein implementing the changes to the respective data streams comprises one or more of:
applying quality of service and resource balancing across the respective data streams; or
applying load balancing to manage bandwidth across the respective data streams.

8. The method of any of claims 1 to 7, wherein the mapping of each of the data streams of each satellite end point virtual channels into the particular stream virtual channel within that satellite end point virtual channel is further based on identification of a tenant associated with each data stream, and wherein the method further comprises:
increasing or reducing resources associated with at least one stream virtual channel, based on the identification.

9. The method of any of claims 1 to 8, wherein the respective data streams are established between client devices and the multiple end points, to retrieve content from among the multiple end points.

10. The method of any of claims 1 to 8, wherein the respective data streams are established between client devices and the multiple end points, to perform computing operations at the multiple end points,
and optionally wherein, the computing system further provides a radio access network to the client devices with virtual network functions, and wherein the radio access network is provided according to standards from a 3GPP 5G or an O-RAN alliance standards family.

11. The method of any of claims 1 to 10, wherein the satellite communications network is a low earth orbit satellite communications network comprising a plurality of satellites in at least one constellation,
optionally wherein the satellite communications network is used as a backhaul network between the computing system and the multiple end points,
and optionally wherein the computing system comprises a base station, access point, gateway, or aggregation point which provides a network platform as an intermediary between a client device and the satellite communications network to access the multiple end points.

12. A device, comprising:
processing circuitry; and
a memory device including instructions embodied thereon, wherein the instructions, which when executed by the processing circuitry, configure the processing circuitry to perform any of the methods of claims 1 to 11.

13. A machine-readable storage medium including instructions, wherein the instructions, when executed by a processing circuitry of a machine, cause the processing circuitry to perform any of the methods of claims 1 to 11.

## Patentansprüche

1. Verfahren zum Aufbauen von verwalteten Datenstromverbindungen unter Verwendung eines Satellitenkommunikationsnetzwerks, das in einem Rechensystem durchgeführt wird und Folgendes umfasst:
Identifizieren (1510) mehrerer Datenströme, die zwischen dem Rechensystem und mehreren Endpunkten über das Satellitenkommunikationsnetzwerk durchzuführen sind;
Gruppieren (1520) von Sätzen der mehreren Datenströme in virtuelle Satellitenendpunktkanäle, wobei die Gruppierung auf einem jeweiligen Endpunkt der mehreren Endpunkte basiert;
Abbilden (1530) jedes der Datenströme jedes virtuellen Satellitenendpunktkanals in einen bestimmten virtuellen Stream-Kanal innerhalb dieses virtuellen Satellitenendpunktkanals basierend auf einem Diensttyp, der an den jeweiligen Datenströmen beteiligt ist;
Identifizieren von Änderungen an jeweiligen Datenströmen der virtuellen Satellitenendpunktkanäle basierend auf Dienstanforderungen und Telemetrie, die mit den jeweiligen Datenströmen der virtuellen Satellitenendpunktkanäle assoziiert sind, wobei die Änderungen an den jeweiligen Datenströmen aus Änderungen an mindestens einem von Folgenden bereitgestellt werden:
Latenz, Bandbreite, Dienstfähigkeiten, Leistungsbedingungen, Ressourcenverfügbarkeit, Lastausgleich oder Sicherheitsfunktionen; und
Implementieren der Änderungen an den jeweiligen Datenströmen basierend auf einem Diensttyp, der an den jeweiligen Datenströmen beteiligt ist.

2. Verfahren nach Anspruch 1, wobei die Dienstanforderungen ferner Folgendes aufweisen:
Dienstqualitätsanforderungen; oder
Einhaltung mindestens einer Dienstgütevereinbarung.

3. Verfahren nach einem der Ansprüche 1 bis 2, wobei die mehreren Endpunkte jeweilige Cloud-Datenverarbeitungssysteme (1340A, 1340B) umfassen, auf die über das Satellitenkommunikationsnetzwerk zugegriffen werden kann.

4. Verfahren nach einem der Ansprüche 1 bis 3, wobei die Telemetrie Latenzinformationen aufweist, die basierend auf den virtuellen Satellitenendpunktkanälen und den virtuellen Stream-Kanälen identifizierbar sind.

5. Verfahren nach einem der Ansprüche 1 bis 4, wobei das Verfahren ferner Folgendes umfasst:
Sammeln der Dienstanforderungen, die mit den jeweiligen Datenströmen assoziiert sind; und
Sammeln der Telemetrie, die mit jeweiligen Datenströmen assoziiert ist.

6. Verfahren nach einem der Ansprüche 1 bis 5, wobei die Änderungen an den jeweiligen Datenströmen Verschieben mindestens eines der virtuellen Stream-Kanäle von einem ersten virtuellen Satellitenendpunktkanal zu einem zweiten virtuellen Satellitenendpunktkanal aufweisen, um die Verwendung mindestens eines Dienstes von einem ersten Endpunkt zu einem zweiten Endpunkt zu ändern.

7. Verfahren nach einem der Ansprüche 1 bis 6, wobei das Implementieren der Änderungen an den jeweiligen Datenströmen eines oder mehreres von Folgendem umfasst:
Anwenden von Dienstqualität und Ressourcenausgleich über die jeweiligen Datenströme; oder
Anwenden eines Lastausgleichs, um Bandbreite über die jeweiligen Datenströme hinweg zu verwalten.

8. Verfahren nach einem der Ansprüche 1 bis 7, wobei das Abbilden jedes der Datenströme jedes virtuellen Satellitenendpunktkanals in den bestimmten virtuellen Stream-Kanal innerhalb dieses virtuellen Satellitenendpunktkanals ferner auf der Identifikation eines Mandanten basiert, der mit jedem Datenstrom assoziiert ist, und wobei das Verfahren ferner Folgendes umfasst:
Erhöhen oder Reduzieren von Ressourcen, die mit mindestens einem virtuellen Stream-Kanal assoziiert sind, basierend auf der Identifikation.

9. Verfahren nach einem der Ansprüche 1 bis 8, wobei die jeweiligen Datenströme zwischen Client-Vorrichtungen und den mehreren Endpunkten aufgebaut werden, um Inhalt aus den mehreren Endpunkten abzurufen.

10. Verfahren nach einem der Ansprüche 1 bis 8, wobei die jeweiligen Datenströme zwischen Client-Vorrichtungen und den mehreren Endpunkten aufgebaut werden, um Rechenoperationen an den mehreren Endpunkten durchzuführen,
und wobei optional das Rechensystem ferner ein Funkzugangsnetzwerk für die Client-Vorrichtungen mit virtuellen Netzwerkfunktionen bereitstellt und wobei das Funkzugangsnetzwerk gemäß Standards aus einer 3GPP-5G- oder einer O-RAN-Alliance-Standardfamilie bereitgestellt wird.

11. Verfahren nach einem der Ansprüche 1 bis 10, wobei das Satellitenkommunikationsnetzwerk ein Satellitenkommunikationsnetzwerk in erdnaher Umlaufbahn ist, das eine Mehrzahl von Satelliten in mindestens einer Konstellation umfasst,
wobei optional das Satellitenkommunikationsnetzwerk als ein Backhaul-Netzwerk zwischen dem Rechensystem und den mehreren Endpunkten verwendet wird,
und wobei optional das Rechensystem eine Basisstation, einen Zugangspunkt, ein Gateway oder einen Aggregationspunkt umfasst, die eine Netzwerkplattform als Vermittler zwischen einer Client-Vorrichtung und dem Satellitenkommunikationsnetzwerk bereitstellen, um auf die mehreren Endpunkte zuzugreifen.

12. Vorrichtung, umfassend:
eine Verarbeitungsschaltungsanordnung; und
eine Speichervorrichtung, die darauf enthaltene Anweisungen aufweist, wobei die Anweisungen bei Ausführung durch die Verarbeitungsschaltungsanordnung die Verarbeitungsschaltungsanordnung zum Durchführen eines der Verfahren nach einem der Ansprüche 1 bis 11 veranlassen.

13. Maschinenlesbares Speichermedium, das Anweisungen aufweist, wobei die Anweisungen bei Ausführung durch eine Verarbeitungsschaltungsanordnung einer Maschine die Verarbeitungsschaltungsanordnung zum Durchführen eines der Verfahren nach einem der Ansprüche 1 bis 11 veranlassen.

## Revendications

1. Procédé d'établissement de connexions gérées de flux de données à l'aide d'un réseau de communications par satellite, réalisé au niveau d'un système informatique, comportant les étapes consistant à :
identifier (1510) de multiples flux de données à acheminer entre le système informatique et de multiples points d'extrémités via le réseau de communications par satellite ;
grouper (1520) des ensembles des multiples flux de données en canaux virtuels de points d'extrémité satellitaires, le regroupement étant basé sur un point d'extrémité respectif parmi les multiples points d'extrémités ;
mapper (1530) chacun des flux de données de chaque canal virtuel de point d'extrémité satellitaire vers un canal virtuel de flux particulier à l'intérieur du canal virtuel de point d'extrémité satellitaire considéré, sur la base d'un type de service intervenant avec chacun des flux de données ;
identifier des changements de flux de données respectifs des canaux virtuels de points d'extrémité satellitaires, d'après des exigences de service et une télémesure associés aux flux de données respectifs des canaux virtuels de points d'extrémité satellitaires, les changements des flux de données respectifs provenant de changements d'au moins un élément parmi: une latence, une bande passante, des capacités de service, des conditions d'alimentation, la disponibilité de ressources, un équilibrage de charge, ou des fonctionnalités de sécurité ; et
mettre en œuvre les changements des flux de données respectifs, sur la base du type de service intervenant avec les flux de données respectifs.

2. Procédé selon la revendication 1, les exigences de service incluant :
des exigences de qualité de service ; ou
la conformité à au moins un accord sur le niveau de service.

3. Procédé selon l'une quelconque des revendications 1 à 2, les multiples points d'extrémités comportant des systèmes respectifs (1340A, 1340B) de traitement de données en nuage accessibles via le réseau de communications par satellite.

4. Procédé selon l'une quelconque des revendications 1 à 3, la télémesure comprenant des informations de latence identifiables d'après les canaux virtuels de points d'extrémité satellitaires et les canaux virtuels de flux.

5. Procédé selon l'une quelconque des revendications 1 à 4, le procédé comportant en outre :
la collecte des exigences de service associées aux flux de données respectifs ; et
la collecte de la télémesure associée aux flux de données respectifs.

6. Procédé selon l'une quelconque des revendications 1 à 5, les changements des flux de données respectifs comprenant le passage d'au moins un des canaux virtuels de flux d'un premier canal virtuel de point d'extrémité satellitaire à un second canal virtuel de point d'extrémité satellitaire, pour faire passer l'utilisation d'au moins un service d'un premier point d'extrémité à un second point d'extrémité.

7. Procédé selon l'une quelconque des revendications 1 à 6, la mise en œuvre des changements des flux de données respectifs comportant une ou plusieurs actions parmi :
l'application d'une qualité de service et d'un équilibrage de ressources à travers les flux de données respectifs ; ou
l'application d'un équilibrage de charge pour gérer la bande passante à travers les flux de données respectifs.

8. Procédé selon l'une quelconque des revendications 1 à 7, le mappage de chacun des flux de données de chaque canal virtuel de points d'extrémité satellitaires vers le canal virtuel de flux particulier à l'intérieur du canal virtuel de point d'extrémité satellitaire considéré étant en outre basé sur l'identification d'un locataire associé à chaque flux de données, et le procédé comportant en outre :
l'augmentation ou la réduction de ressources associées à au moins un canal virtuel de flux, sur la base de l'identification.

9. Procédé selon l'une quelconque des revendications 1 à 8, les flux de données respectifs étant établis entre des dispositifs clients et les multiples points d'extrémités, pour récupérer un contenu parmi les multiples points d'extrémités.

10. Procédé selon l'une quelconque des revendications 1 à 8, les flux de données respectifs étant établis entre des dispositifs clients et les multiples points d'extrémités, pour effectuer des opérations de calcul au niveau des multiples points d'extrémités,
et optionnellement, le système informatique fournissant en outre un réseau d'accès radio aux dispositifs clients avec des fonctions de réseau virtuel, et le réseau d'accès radio étant fourni selon des normes issues d'une famille de normes 5G du 3GPP ou de l'alliance O-RAN.

11. Procédé selon l'une quelconque des revendications 1 à 10, le réseau de communications par satellite étant un réseau de communications par satellite en orbite basse comportant une pluralité de satellites dans au moins une constellation,
le réseau de communications par satellite étant optionnellement utilisé comme réseau de raccordement entre le système informatique et les multiples points d'extrémités,
et le système informatique comportant optionnellement une station de base, un point d'accès, une passerelle ou un point d'agrégation qui fournit une plate-forme de réseau en tant qu'intermédiaire entre un dispositif client et le réseau de communications par satellite pour accéder aux multiples points d'extrémités.

12. Dispositif comportant :
une circuiterie de traitement ; et
un dispositif de mémoire comprenant des instructions incorporées sur celui-ci, les instructions, lorsqu'elles sont exécutées par la circuiterie de traitement, configurant la circuiterie de traitement pour réaliser l'un quelconque des procédés selon les revendications 1 à 11.

13. Support de stockage lisible par machine comprenant des instructions, les instructions, lorsqu'elles sont exécutées par une circuiterie de traitement d'un machine, amenant la circuiterie de traitement à réaliser l'un quelconque des procédés selon les revendications 1 à 11.
